# EUROPÄISCHE PATENTSCHRIFT

(11) **EP 3 659 433 B1**
(45) Veröffentlichungstag und Bekanntmachung des Hinweises auf die Patenterteilung: **20.01.2021**
(21) Anmeldenummer: 18209624.8
(22) Anmeldetag: 30.11.2018
(51) Int. Cl.: A01K 1/01, A01K 29/00, A01K 31/04

(54) **SYSTEM ZUR ANALYSE VON TIERAUSSCHEIDUNGSBILDERN**
SYSTEM FOR ANALYSIS OF ANIMAL EXCREMENT IMAGES
SYSTÈME DE L'ANALYSE DES IMAGES D'EXCRÉMENT DE LA FAUNE

(43) Veröffentlichungstag der Anmeldung: 03.06.2020
(73) Patentinhaber: Phytobiotics Futterzusatzstoffe GmbH, 65343 Eltville (DE)
(72) Erfinder: ROTH, Hermann, 65346 Eltville (DE)
(74) Vertreter: Richardt Patentanwälte PartG mbB

(56) Entgegenhaltungen:
- EP-A1- 1 312 311
- WO-A1-2015/088345
- WO-A1-2015/115889
- WO-A2-2009/091886
- CN-U- 208 080 199
- US-A1- 2015 240 433

## Beschreibung

### Technisches Gebiet

Die Erfindung bezieht sich auf ein computergestütztes Verfahren zur Haltung von Tieren, insbesondere auf Verfahren, die der Aufrechterhaltung und Verbesserung der Gesundheit der Tiere dienen. Das Verfahren kann insbesondere zur automatischen Erkennung von Managementfehler und frühzeitiger Erkennung von aufkommenden Erkrankungen und Produktionsstörungen eingesetzt werden.

### Stand der Technik

Bei der gemeinsamen Haltung von Tieren, insbesondere bei der Massentierhaltung, kann es immer wieder zum Ausbruch von Krankheiten kommen, die zu hohen Verlusten im Tierbestand führen können. Durch die räumliche Nähe und das Teilen gemeinsamer Tränk- und Futterplätze können sich Krankheiten schnell ausbreiten und zu hohen wirtschaftlichen Verlusten durch Tod oder verlangsamtes Wachstum der Tiere führen. Zur Minimierung der Risiken und Verluste verabreichen viele Landwirte auch schon aus rein prophylaktischen Gründen Medikamente, einschließlich Antibiotika. Dies ist zum einen teuer und hat den erheblichen Nachteil, dass hierdurch die Entstehung multiresistenter Erreger, die auch dem Menschen gefährlich werden können, gefördert wird. Außerdem sind diese vorbeugenden Maßnahmen vom Verbraucher unerwünscht und vermindern die Qualität und den Handelswert des Fleisches, der Eier oder der Milch dieser vobeugend behandelten Tiere. Tierkrankheiten werden in der Regel durch persönliche Inspektion durch den Landwirt oder den Tierarzt festgestellt, sobald eine hinreichend große Anzahl von Tieren betroffen ist. Da die Gesundheitsprüfungen jedoch nur stichprobenhaft vorgenommen werden und kranke Tiere in der Regel erst in einem fortgeschrittenen Stadium der Krankheit auffallen, wird der Ausbruch einer Krankheit regelmäßig zu spät erkannt, sodass es für medizinische Gegenmaßnahmen oft schon zu spät ist oder als Konsequenz einen massiven Einsatz teurer und/oder aus anderen Gründen unerwünschter Maßnahmen erfordert, beispielsweise den Einsatz hoher Dosen von Antibiotika Die nächstliegender Stand der Technik ist offenbart in CN 208 080 199 U, ein Verfahren zur Haltung von Tieren.

Im Stand der Technik sind mittlerweile auch computergestützte Systeme und Verfahren für die Überwachung des Gesundheitszustands von Tiergruppen bekannt. Beispielsweise beschreibt die US Patentanmeldung US 2010/0198023 A1 die Verwendung einer Datenbank sowie einer Vielzahl von Datenerfassungseinheiten, insbesondere Sensoren unterschiedlichen Typs, um die Gesundheit von Tieren eines Tierstalls zu überwachen. Die Sensoren können z.B. akustische Sensoren, Vitalitätsmessgeräten, Ammoniaksensoren, visuelle Sensoren und Geruchsensoren, umfassen.

Viele der heute verwendeten computergestützten Früherkennungssysteme haben jedoch noch verschiedene technische Nachteile.

Zum einen sind manche Sensortypen, die zur automatischen Überwachung der Gesundheit von Tieren in Tierställen verwendet werden, sehr teuer in der Anschaffung und im Betrieb. Beispielsweise müssen manche Sensoren, z.B. Sensoren für bestimmte Gase oder andere Vitalitätsindikatoren, von geschultem Personal an geeigneter Stelle installiert und regelmäßig überwacht werden. Für bäuerliche Kleinbetriebe, aber auch für mittelgroße bis große Betriebe in Entwicklungs- und Schwellenländern, ist der Einsatz komplizierter und teurer Sensoren keine Option, da es an Geld wie auch geschultem Personal zur Installation und Wartung der Sensoren wie auch zur Interpretation der Messwerte mangelt. Außerdem sind komplexe Sensoren auch störanfällig. Wenn Sensoren in Tierställen installiert werden, können die Sensoren leicht verschmutzen, wenn sie z.B. mit Kot, Speichel, Einstreu, Futter oder Federn der Tiere in Kontakt kommen und können dann - im schlimmsten Fall über lange Zeiträume hinweg unbemerkt - falsche Messergebnisse liefern.

Viele der vorhandenen computergestützten Frühwarnsysteme sind zudem gar nicht oder nur an einer kleinen Anzahl von Tieren und/oder Ställen getestet worden. Es hat sich gezeigt, dass bereits kleine Veränderungen in den Umgebungsparametern die Mess- oder Vorhersageergebnisse mancher allein auf Messwerten von Temperatur- oder Feuchtigkeitssensoren basierter Systeme verfälschen können. Auch andere Sensortypen sind oft störanfällig oder aus anderen Gründen nicht sehr prädiktiv im Hinblick auf die Tiergesundheit. So hängt die Raumakustik in einem Tierstall von der Größe des Tierstalls ab und von der Frage, aus welchem Material die Wände oder sonstigen Einrichtungsgegenstände des Stalls beschaffen sind, also von Faktoren, die mit der Tiergesundheit nichts zu tun haben. Feuchtigkeits- und Temperatur- Sensoren können teils stark unterschiedliche Ergebnisse liefern je nachdem, wie hoch über dem Boden und in welchem Abstand zu einer Tür oder einem Fenster diese angebracht sind.

Insgesamt ist somit festzustellen, dass viele computergestützte Verfahren zur Überwachung der Tiergesundheit in Ställen und ähnlichen Anlagen in der Praxis nicht eingesetzt werden können, da sie nicht ausreichend robust gegenüber Schwankungen der Umgebungsparameter sind und da deren In-Betriebname und Wartung zu teuer und technisch anspruchsvoll sind.

### Technisches Problem und grundlegende Lösungen

Der Erfindung liegt demgemäß die Aufgabe zugrunde, ein alternatives bzw. verbesserte Verfahren zur Tierhaltung bereitzustellen, sowie entsprechende ComputerSysteme und Speichermedien. Das besagte Verfahren bzw. die Computersysteme oder Speichermedien können insbesondere zur automatischen Erkennung von mangelhaften Haltungsbedingungen, zur frühzeitigen Erkennung von aufkommenden Erkrankungen und Produktionsstörungen, zur Überwachung geeigneter Messwerte und Messverfahren und/oder zur manuellen oder automatischen Durchführung von Aktionen zur Verbesserung der Tiergesundheit verwendet werden.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen und Beispiele sind frei miteinander kombinierbar, sofern sie sich nicht gegenseitig ausschließen.

In einem Aspekt betrifft die Erfindung ein Verfahren zur Haltung von Tieren nach Anspruch 1. Weitere Aspekte sind ein System zur Haltung von Tieren gemäß Anspruch 20, ein mobiler Roboter gemäß Anspruch 22 und eine Kombination aus einem Futtermittelzusatzstoff und das System nach Anspruch 20, gemäß Anspruch 23. Bei den Tieren kann es sich insbesondere um Nutztiere handeln, z.B. Scheine, Rinder, Schafe, Ziegen, Kaninchen, und Geflügel aller Art, insbesondere aber andere Tierarten nicht ausschließend Hühner, Legehennen und Truthähne.

Das Verfahren umfasst eine Eingabe von mindestens einem Bild in eine Analysesoftware. Das mindestens eine Bild ist ein digitales Bild, welches Ausscheidungen von einem oder mehreren der Tiere abbildet. Beispielsweise kann die Eingabe des Bildes in die Analysesoftware beinhalten, dass die Analysesoftware das Bild direkt von einer Bilderfassungseinheit, z.B. einer Kamera, empfängt, oder die Analysesoftware das Bild über ein Netzwerk von einem entfernten Computersystem oder von einer an dieses entfernte Computersystem gekoppelte Bilderfassungseinheit empfängt. Die Eingabe des Bildes kann aber auch ein Lesen des zumindest einen Bildes von einem Speichermedium beinhalten. Beispielsweise kann die Analysesoftware auf einem bestimmten Computersystem installiert sein und das zumindest eine Bild von einem Speichermedium ebendieses Computersystems lesen.

Die Analysesoftware führt eine Analyse des mindestens einen Bildes durch. Es können hier verschiedene Analyseverfahren zum Einsatz kommen. Typischerweise erfolgt zunächst eine Bildanalyse, um einzelne Merkmale des Bildes zu extrahieren ("Merkmalsanalyse/Merkmalsextraktion"). Zu diesen Merkmalen können beispielsweise Helligkeits- und Kontrastwerte, Farbwerte (zum Beispiel R, G, B Werte bei RGB Farbbildern), im Bild erkannte Objekte wie zum Beispiel Kreise, Linien, Polygone oder Strukturen (Körnigkeit, Homogenität) und andere Merkmale gehören. Die extrahierten Merkmale werden sodann ausgewertet, um ein oder mehrere Ergebnisse der Analyse zu erhalten. Beispielsweise kann ein Trainingsdatensatz Bilder von Ausscheidugnen von Würmern einer bestimmten Art und/oder eines bestimmten Entwicklugsstadiums beinhalten und durch das Trainieren einer Machine-Learning Software kann die resultierende Analysesoftware dazu gebracht werden, Objekte bestimmter Kontur, Farbe, Texturierung und/oder Größe als Würmer einer spezifischen Art automatisch im Zuge der Bildanalyse zu erkennen.

In einem weiteren Schritt gibt die Analysesoftware eine empfohlene Aktion, welche geeignet ist, den aktuellen physiologischen Zustand der Tiere zu bewahren oder zu verbessern, aus. Die empfohlene Aktion hängt von einem Ergebnis der Analyse des mindestens einen Bildes ab.

Zusätzlich oder alternativ dazu gibt die Analysesoftware eine vorhergesagte Ausprägung eines Leistungsindikators eines oder mehrerer der Tiere aus. Der Leistungsindikator ist ein physiologischer Parameter, ein Krankheitssymptom oder eine Krankheit. Die vorhergesagte Ausprägung hängt von einem Ergebnis der Analyse des mindestens einen Bildes ab.

Dies kann vorteilhaft sein, da Bilder von Kot leicht verfügbar sind. Auch Metadaten wie z.B. aktuell verabreichte Substanzen (Medizin, Tierfutter, Zusatzstoffe) lassen sich leicht über eine GUI der Analysesoftware eingeben. Es sind gemäß Ausführungsformen der Erfindung also keinerlei Spezialkenntnisse oder zusätzliche Gerätschaften oder Sensoren erforderlich, um auf einfache, rasche und akkurate Weise den Gesundheitszustand von Tieren eines Tierbestands zu überprüfen und rasch geeignete Maßnahmen zu ergreifen, um die Gesundheit der Tiere zu schützen oder zu verbessern. Eine Kamera zur Aufnahme der Bilder ist dank der ubiquitären Verbreitung von Smartphones praktisch überall verfügbar. Die Bilder der Ausscheidungen sind nicht abhängig von irrelevanten Parametern wie zum Beispiel Größe des Stalls oder der Frage, ob ein Fenster oder eine Tür geöffnet ist, wovon z.B. Temperatur und Feuchtigkeit des Stalls abhängen können. Die bildgestützte Analyse erfordert auch keine Durchführung schwieriger und kaum reproduzierbarer Messverfahren (Messung der inneren Körpertemperatur), etc.

Bei den Ausscheidungen handelt es sich insbesondere um Kot, vorzugsweise um "frischen" Kot, dessen Ausscheidung z.B. weniger als 12 Stunden, insbesondere weniger als sechs Stunden, vorzugsweise weniger als eine Stunde vor dem Zeitpunkt der Bildaufnahme zurückliegt.

Nach Ausführungsformen der Erfindung füllen die Ausscheidungen mindestens 40 %, vorzugsweise mindestens 60 % der Fläche des zumindest einen Bildes aus. Beispielsweise kann die Analysesoftware eine Filterfunktion beinhalten, welche dazu ausgebildet ist, zunächst Regionen auf dem Bild zu erkennen, welche eine Ausscheidung darstellen. Bilder mit einem Flächenanteil abgebildeten Kots unterhalb eines vorgegebenen Mindestwertes werden verworfen und bei der Analyse nicht berücksichtigt. Alternativ dazu kann die Analysesoftware, sofern die Auflösung dies zulässt, auch automatisch nur ein Teilbild des empfangenen Bildes für die Analyse berücksichtigen, sofern dieses Teilbild den geforderten Mindestanteil an Abbildung von Kot beinhaltet. Nach manchen Ausführungsformen beinhaltet die Analysesoftware eine Filterfunktion, welche Bilder verwirft, wenn diese nicht eine gewisse Mindestauflösung und/oder einen gewissen Mindestkontrast haben. Vorzugsweise kann die Analysesoftware eine Warnnachricht ausgeben, welche den Nutzer der Analysesoftware darauf aufmerksam macht, dass das zumindest eine eingegebene Bild nicht die erforderlichen Qualitätskriterien erfüllt, um dem Nutzer die Möglichkeit zu geben, ein oder mehrere neue Bilder aufzunehmen.

Nach Ausführungsformen der Erfindung beinhaltet die Aufnahme des zumindest einen Bildes der Ausscheidungen eine Bestrahlung der Ausscheidungen mit dem Licht einer Lichtquelle während der Aufnahme des zumindest einen Bildes. Die Bestrahlung kann sehr kurz sein (Blitzlicht, Belichtungsdauer typischerweise kürzer als eine Sekunde) oder auch mehrere Sekunden andauern.

Nach Ausführungsformen der Erfindung umfasst das Verfahren ein Senden eines Kontrollkommandos an eine Beleuchtungseinheit. Beispielsweise kann das Kontrollkommando von der Analysesoftare oder einer der Bilderfassungseinheit zugeordneten Software (Kamerasoftware) z.B. eines Smartphones gesendet werden. Das Kontrollkommando veranlasst die Beleuchtungseinheit dazu, die Ausscheidungen während der Aufnahme des zumindest einen Bildes der Ausscheidungen mit Licht eines oder mehrerer definierter Wellenlängenbereiche zu beleuchten. Es werden sodann während der Beleuchtung der Ausscheidungen mit Licht der ein oder mehreren Wellenlängenbereiche jeweils ein oder mehrere Bilder der Ausscheidungen aufgenommen. Die Beleuchtungseinheit kann insbesondere die Ausscheidungen sequenziell mit dem Licht mehrerer definierter Wellenlängenbereiche beleuchten, beispielsweise für einige Sekunden. Während der Beleuchtung mit jedem der definierten Wellenlängenbereiche erfasst die Bilderfassungseinheit ein oder mehrere wellenlängenbereich-spezifische digitale Bilder der Ausscheidungen. Optional kann auch ein Farbreferenzobjekt mit ein oder mehreren Farbpunkten beleuchtet und erfasst werden. Die Analysesoftware ist dazu ausgebildet, die Analyse in einer wellenlängenbereich-spezifischen Weise selektiv für die ein oder mehreren Bilder, die mit Licht des jeweiligen Wellenlängenbereichs aufgenommen wurden, durchzuführen.

Gemäß bevorzugten Ausführungsformen beinhaltet die Analysesoftware (oder der als Client-Applikation ausgebildete Teil der Analysesoftware) eine Beleuchtungsfunktion, die z.B. als Beleuchtungsmodul der Analysesoftware ausgebildet sein kann. Die Beleuchtungsfunktion ist operativ an die Lichtquelle gekoppelt und kann diese steuern. Beispielsweise kann die Beleuchtungsfunktion die Beleuchtungsdauer und/oder Intensität und/oder den Wellenlängenbereich des von der Lichtquelle ausgesendeten Lichts steuern. Die Beleuchtungsfunktion beinhaltet vorzugsweise ein Programm zum Beleuchten der Ausscheidungen mit mindestens zwei oder mehr Lichtpulsen vordefinierter, unterschiedlicher Wellenlängen oder Wellenlängenbereichen. Die Beleuchtungsfunktion ist vorzugsweise auch operativ an eine Bilderfassungseinheit gekoppelt und in der Lage, die Aufnahme des zumindest einen Bildes mit der Beleuchtungsfunktion zu synchronisieren. Insbesondere kann die Synchronisation so ausgebildet sein, dass pro Zeitintervall, an welchem die Ausscheidungen mit einer der vordefinierten unterschiedlichen Wellenlängen bzw. Wellenlängenbereichen der Lichtquelle beleuchtet werden, mindestens ein Bild aufgenommen und in die Analysesoftware eingegen und/oder zur späteren Verwendung in einer Datenbank gespeichert werden. Dies kann vorteilhaft sein, da die Ausscheidungen nun mit dem Licht unterschiedlicher Wellenlängenbereiche beleuchtet werden und sich dadurch wichtige optische und insbesondere farbliche Eigenschaften der Ausscheidungen besser charakterisieren lassen. Beispielsweise absorbiert Kot mit einem hohen Anteil nicht-oxidierten Blutes (Kot mit hellroter Farbe) besonders gut blaues und grünes Licht während rotes Licht stärker reflektiert wird. Durch sequenzielle Bestrahlung der Ausscheidungen mit Licht unterschiedlicher Wellenlängenbereiche, z.B. blau: 450-482 nm, grün: 497-530 nm, rot: 620-780 nm, und Erfassung von einem oder mehreren Bildern pro verwendetem Wellenlängenbereich derselben Ausscheidungen können auch unter schlechten und schwer exakt reproduzierbaren Messbedingungen (die für die Verwendung von Smartphone-Kameras an verschiedenen Stellen des Stalls, ggf. auch durch verschiedene Arbeiter, typisch sind) sehr aussagekräftige Informationen über die spektralen Eigenschaften der Ausscheidungen gewonnen werden.

Bei der Lichtquelle handelt es sich vorzugsweise um eine Lichtquelle, die in die Bilderfassungseinheit oder in das diese beinhaltende Gerät, z.B. ein Smartphone, einegbaut ist. Beispielsweise kann es sich bei der Lichtquelle um ein Blitzlicht einer Kamera handeln. In einer Ausführungsform handelt es sich bei der Lichtquelle um das Display eines Smartphones. Diese Ausführungsform kann vorteilhaft sein, da keinerlei spezielle aparative Ausrüstung (abgesehen vom Smartphone) erforderlich ist, um die Ausscheidungen mit Licht zweier oder mehrerer unterschiedlicher Wellenlängenbereicht zu beleuchten und entsprechende Bilder aufzunehmen. Zwar sind die meisten Smartphone-Displays nicht in der Lage, selektiv nur Licht in einen sehr schmalen und höchst präzisen Wellenlängenbereich zu emittieren wie dies beispielsweise Lasergeräte können. Es ist jedoch z.B. durch eine bildschirmfüllende Anzeige z.B. zunächst des rgb Farbwertes 255,0,0 for "rot", dann des rgb Farbwerts 0,255,0 für "grün" und sodann des rgb Farbwertes 0,0,255 für "blau" auf einem LED display eine Sequenz definierter Beleuchtungsvorgänge unterschiedlicher Wellenlängen zu erzielen. Je nach Ausführungsform können auch andere Wellenlängenbereiche bzw. Farbwerte im Farbraum des Displays verwendet werden. Vorzugsweise handelt es sich bei der Analysesoftware um eine Machine-Learning-Software, die auf einem Datensatz an Trainingsbildern von Ausscheidungen der Tiere trainiert wurde, wobei zumindest einige der Trainingsbilder selektiv mit nur Licht einer Wellenlänge oder mit Licht eines Wellenlängenbereiches beleuchtet wurde, welches von der Lichtquelle generiert werden kann. Vorzugsweise deckt der Trainingsdatensatz dabei alle von der Beleuchtungsquelle bzw. von der Beleuchtungsfunktion sequentiell verwendete Wellenlängenbereiche ab, d.h., der Trainingsdatensatz beinhaltet mehrere Bilder von Ausscheidungen, die bei Licht jeder dieser definierten Wellenlängen oder Wellenlängenbereiche beleuchtet wurde. Somit bilden die Beleuchtungsfunktion und die Analysefunktion der Analysesoftware eine funktionale Einheit. Dies kann vorteilhaft sein, da mit einfachsten Mitteln (Smartphone mit Kamera und einem Programm, das die Beleuchtungsfunktion implementiert), eine große Menge an spektraler Information der Ausscheidungen der Tiere erfasst werden kann, die von dem trainierten Machine-Learning-Algorithmus auch verwendet werden können, um eine präzise Analyse und Vorhersage bzw. Ausgabe der Analyseergebnisse zu ermöglichen.

Gemäß alternativer Ausführungsformen kann es sich bei der Beleuchtungseinheit aber auch um spezielle Beleuchtungsgeräte handeln, die nicht Bestandteil der derzeit handelsüblichen Smartphones sind. Beispielsweise kann es sich bei der Beleuchtungseinheit um eine Laserlichtquelle handeln und/oder um eine Lichtquelle in einem (für den Menschen) nicht sichtbaren Wellenlängenbereich, z.B. im Infrarotbereich (z.B. 850-950 nm) oder UV-Lichtbereich (280-380 nm) handeln.

Bei dem physiologischen Parameter kann es sich z.B. um eine Körpertemperatur, eine gemessene Metabolitkonzentration, das Körpergewicht, den Futterverbrauch, den Wasserverbrauch pro Tier und Zeiteinheit oder pro Tiergruppe bzw. Stall pro Zeiteinheit, etc. handeln. Der Wasserverbrauch und/oder Futterverbrauch kann z.B. in manchen Ausführungsformen manuell über eine GUI der Analysesoftware eingegeben werden und/oder kann von der Analysesoftware von entsprechenden Sensoren oder Zählwerken einer Tränkanlage bzw. Fütterungsanlage der Tiere automatisch erhalten werden.

Insofern stellt das Verfahren zur Haltung von Tieren in einem weiteren Aspekt auch ein Verfahren zur computergestützten Überwachung der Gesundheit der gehaltenen Tiere und/oder ein Verfahren zur Früherkennung eines vorhergesagten Leistungseinbruchs, etwa bedingt durch eine Krankheit, dar. In einem weiteren Aspekt stellt das Verfahren ein Verfahren zur computergestützten Erkennung schlechter oder verbesserungsfähiger Haltungsbedingungen, insbesondere von Mangel- oder Fehlernährungen, dar, die bei der Tierhaltung auftreten können.

Nach Ausführungsformen umfasst das Verfahren ein Erfassen des mindestens einen Bildes durch eine Bilderfassungseinheit, insbesondere eine Kamera. Die Kamera kann beispielsweise eine portable Kamera, insbesondere eine Smartphone-Kamera oder ein Fotoapparat, sein. Insbesondere kann es sich bei der Kamera um die Kamera eines Smartphones einer in dem Stall arbeitenden Person handeln. Dies kann vorteilhaft sein, da auch in Entwicklungs- und Schwellenländern die allermeisten Menschen Smartphones mit integrierter Kamera besitzen und mit deren Bedienung vertraut sind. Es ist also nicht erforderlich, spezielle Sensoren in den Ställen oder Gehegen zu installieren, diese regelmäßig zu warten und das Personal zu schulen.

Alternativ dazu kann es sich bei der Bilderfassungseinheit jedoch auch um eine Kamera handeln, die in dem Stall, Gehege oder sonstigen Räumlichkeit, in welcher die Tiere gehalten werden, fest installiert ist. Gemäß einer weiteren alternativen Ausführungsform ist die Bilderfassung Einheit eine Kamera, die auf einem mobilen Roboter oder einem Förderband fest installiert ist. Der Roboter oder das Förderband sind dazu ausgebildet und entsprechend positioniert, sich in einem Gelände zu bewegen, auf welchem die Tiere gehalten werden. Beispielsweise kann die Kamera auf einer geeigneten Höhe und in einem geeigneten Winkel angebracht sein, der sicherstellt, dass Bilder vom Boden des Geländes erfasst werden, auf welchem sich regelmäßig Kot befindet. Auch Kombinationen von Bilderfassung Einheiten unterschiedlichen Typs können verwendet werden. Die Verwendung von Robotern und/oder Förderbändern mit einer Kamera kann vorteilhaft sein, da hierdurch eine manuelle Aufnahme der Fotos unterbleiben kann und die Aufnahmebedingungen besonders konstant gehalten werden. Diese Ausführungsformen sind insbesondere bei hohem Automatisierungsgrad des Mastbetriebs sinnvoll, und haben den Vorteil, dass zum Beispiel der Aufnahmewinkel konstant bleibt. Dadurch, dass die Kamera auf einer mobilen Einheit angebracht ist, wird sichergestellt, dass Aufnahmen aus verschiedenen Bereichen eines Stalles bzw. zur Tierhaltung verwendeten Geländes analysiert werden können, sodass die Datenbasis vergrößert und die Qualität der Analysenergebnisse erhöht werden kann.

Nach Ausführungsformen der Erfindung beinhaltet die Erfassung des mindestens einen Bildes ein Positionieren eines Farbreferenzobjekts in räumlicher Nähe zu den Ausscheidungen, deren Bild erfasst wird. Das Farbreferenzobjekt weist eine oder mehrere unterschiedliche Farben in definierten Bereichen des Farbreferenzobjekts auf. Die Analysesoftware ist dazu ausgebildet, die Farben des Farbreferenzobjekts bei der Analyse des mindestens einen Bildes zur Normalisierung der Farben der in dem mindestens einen Bild abgebildeten Ausscheidungen zu nutzen. Das mindestens eine Bild bildet neben den Ausscheidungen auch das Farbreferenzobjekt ab.

Beispielsweise kann es sich bei dem Farbreferenzobjekt um einen Papier- oder Plastikstreifen handeln, auf dem ein oder vorzugsweise mehrere Farbpunkte an definierten und der Analysesoftware bekannten Stellen aufgebracht sind, wobei die Farbpunkte einen definierten Farb- und/oder Helligkeitswert haben. Ein Arbeiter, welcher mit seiner Smartphonekamera beim täglichen Kontrollgang durch den Stall Aufnahmen der Ausscheidungen der Tiere macht, hält während der Aufnahme das Farbreferenzobjekt über bzw. neben den Kot, sodass das aufgenommene Bild sowohl den Kot als auch das Farbreferenzobjekt abbildet. Vorzugsweise wird das Farbreferenzobjekt und die Analysesoftware vom gleichen Anbieter bereitgestellt und die Analysesoftware ist dazu ausgebildet, anhand der Farben und/oder Kontrastwerte des Farbreferenzobjekt des die Farben, Helligkeits- und/oder Kontrastwerte des zumindest einen empfangenen Bildes zu normalisieren.

Dies kann vorteilhaft sein, da die Normalisierung der Farbwerte und/oder Helligkeitswerte der empfangenen Bilder durch die Analysesoftware anhand des Farbreferenzobjekts sicherstellt, dass die Analysesoftware die gleichen Ergebnisse liefern wird, auch wenn die Lichtverhältnisse in verschiedenen Ställen bzw. verschiedenen Bereichen des gleichen Stalles bzw. zu unterschiedlichen Tageszeiten unterschiedlich sein können. Es ist auch möglich, dass verschiedene Handytypen bzw. Smartphone-Kameras von verschiedenen Arbeitern verwendet werden und dass dadurch gewisse Variationen in Helligkeit und/oder Farbraum der mit diesen Kameras aufgenommenen Bilder verursacht werden. Eine Normalisierung der Farben und Helligkeiten der Bilder anhand des Farbreferenzobjekts kann also vorteilhaft sein, da dadurch eine Robustheit der Analyseergebnisse im Hinblick auf unterschiedliche Kameratypen und/oder unterschiedliche Lichtverhältnisse bei der Aufnahme erzielt werden kann. Die Verwendung eines Farbreferenzobjekts kann vorteilhaft sein, da mit dieser sehr einfachen Maßnahme eine hohe Reproduzierbarkeit der aufgenommenen Bilder und eine hohe Qualität der Analysenergebnisse sichergestellt werden kann.

Nach Ausführungsformen der Erfindung ist die von der Analysesoftware ausgegebene Aktion eine Aktion, die an einem bestimmten Aktionszeitpunkt durchzuführen ist. Der Aktionszeitpunkt kann ein aktueller Zeitpunkt oder ein zukünftiger Zeitpunkt ausgehend vom Zeitpunkt der Analyse sein. Beispielsweise kann die Analysesoftware ausgeben, dass das Futter sofort gewechselt werden muss, um eine Unterversorgung der Tiere mit bestimmten Mineralstoffen zu verhindern. Es ist auch möglich, dass die Ausgabe der Analysesoftware beinhaltet, dass eine bestimmte Maßnahme wie zum Beispiel Wechsel der Futtermittelzusammensetzung oder Verabreichung eines bestimmten Medikaments sofort umgehend zu erfolgen hat oder erst an einem bestimmten Zeitpunkt in der Zukunft erforderlich ist, beispielsweise erst nach zwei Tagen ausgehend vom Zeitpunkt der Analyse. Ob der Aktionszeitpunkt in der Gegenwart oder Zukunft liegt, hängt davon ab, um welche Aktion es sich handelt, und wie eindeutig angesichts der in dem empfangenen Bild abgebildeten Ausscheidungen die Analysesoftware eine bestimmte Aktion für erforderlich hält. Dies kann wiederum von den Regeln oder dem Trainingsdatensatz abhängen, welche verwendet wurden, um die Analysesoftware zu erzeugen. Beispielsweise kann es vorteilhaft sein, bei unklarer Symptomatik eine besonderes teure oder mit Nachteilen/Nebenwirkungen verbundene Handlung (zum Beispiel Verabreichung eines Antibiotikums) nicht sofort durchzuführen, aber auszugeben, dass eine Verabreichung in 2-3 Tagen empfohlen wird. Dies gibt dem Tierhalter die Möglichkeit, das entsprechende Medikament rechtzeitig zu bestellen bzw. lässt auch die Möglichkeit offen, auf eine Medikamentengabe zu verzichten, falls die Analysesoftware basierend auf Bildern von Ausscheidungen am darauffolgenden Tag zu dem Ergebnis kommt, dass eine Antibiotikabehandlung unterbleiben kann, weil die Erkrankung nur einige wenige Tiere betroffen hatte und schon von selbst im Rückgang begriffen ist.

Zusätzlich oder alternativ dazu kann es sich bei der vorhergesagten Ausprägung des Leistungsindikators um eine Ausprägung handeln, deren Auftreten für einen Ausprägungszeitpunkt vorhergesagt wird. Der Ausprägungszeitpunkt ist ein zukünftiger Zeitpunkt ausgehend vom Zeitpunkt der Analyse.

Die Analysesoftware ist vorzugsweise dazu ausgebildet, die Vorhersage der Ausprägung des Leistungsindikators am Ausprägungszeitpunkt und die empfohlene Aktion am Aktionszeitpunkt so zu berechnen, dass der Aktionszeitpunkt eine hinreichende Zeitspanne vor dem Ausprägungszeitpunkt liegt, die es erlaubt, durch Ausführung der empfohlenen Aktion zum Aktionszeitpunkt die Ausprägung des Leistungsindikators zum Ausprägungszeitpunkt auf eine bestimmte, gewünschte Weise (positiv oder negativ) zu beeinflussen. Beispielsweise kann die Analysesoftware dazu ausgebildet sein, den Ausbruch bestimmter Krankheiten wie zum Beispiel populationsweite Kokzidiose oder Clostridienbefall schon 2-3 Tage vor dem eigentlichen populationsweiten Ausbruch zu erkennen und vorherzusagen anhand chrakterisitischer speziell diesen Krankheiten zuordenbaren Charaktera wie zb. Farbeigenschaften des Blutes, die in den Bildern der Ausscheidungen einiger Tiere, die schon leichte krankheitsbezogene Veränderungen aufweisen, sichtbar sind. Dieser Zeitraum ist in der Regel ausreichend, um es dem Betreiber der Tierställe zu ermöglichen, rechtzeitig Gegenmaßnahmen einzuleiten. Zu den Gegenmaßnahmen können zum Beispiel die Verabreichung von Medikamenten gegen Kokzidiose und/oder Clostridien gehören, die Identifikation und Separierung bereits befallener Tiere, die Verabreichung eines besonders hochwertigen oder bekömmlichen Futters, die Erhöhung der Temperatur oder Luftfeuchtigkeit und ähnliches.

Nach Ausführungsformen der Erfindung beinhaltet die empfohlene Aktion eine oder mehrere Aktionen. Bei diesen Aktionen kann es sich beispielsweise um folgende Aktionen handeln: eine Bereitstellung eines bestimmten Tierfutters oder Tränkwassers; eine Verabreichung einer oder mehrerer medizinischer oder nicht-medizinischer Substanzen in physiologisch wirksamer Form an die Tiere, insbesondere Mineralstoffe, Vitamine, Medikamente (z.B. über Futter, Tränkwasser, Luft, etc..); eine Beendigung einer laufenden Verabreichung einer oder mehrerer medizinischer oder nicht-medizinischer Substanzen in physiologisch wirksamer Form an die Tiere; eine Veränderung der physikalischer Parameter eines Tierstalls oder Geländes, in welchem die Tiere gehalten werden, insbesondere Luftfeuchtigkeit, und Temperatur.

Nach Ausführungsformen der Erfindung erfolgt eine Ausgabe der vorhergesagten Ausprägung des Leistungsindikators und/oder die Ausgabe der empfohlenen Aktion an einen Nutzer über eine Nutzer-Schnittstelle der Analysesoftware. Insbesondere kann es sich bei dieser Nutzer-Schnittstelle um eine graphische Benutzeroberfläche, eine sogenannte GUI, handeln.

Zusätzlich oder alternativ dazu erfolgt die Ausgabe der empfohlenen Aktion an ein elektronisches oder mechanisches System, welches operativ an einen Tierstall oder ein Gelände, in welchem die Tiere gehalten werden, gekoppelt ist. Das elektronische oder mechanische System ist dazu ausgebildet, in Antwort auf den Erhalt der ausgegebenen Aktion die Aktion durchzuführen.

Beispielsweise kann es sich bei diesem elektronischen oder mechanischen System um die Heizung oder Belüftungsanlage des Tierstalls oder einen Futterautomat oder Tränkautomat handeln. Vorzugsweise können somit automatisch die geeigneten Maßnahmen ergriffen werden, physikalische Parameter des Stalls so anzupassen, dass die Leistungsfähigkeit und Gesundheit der Tiere gewahrt und/oder gesteigert wird. Beispielsweise kann die Tränkwasserzufuhr oder die Futterzugabe erhöht werden, um einen gesteigerten Bedarf zu decken, oder die Futterzugabe reduziert werden, falls die Tiere an akuter Apetittlosigkeit leiden. Es können dem Futter auch automatisch mehr Mineralstoffe oder Vitamine zugesetzt werden, z.B. als prophylaktische oder kurative Maßnahme.

Nach Ausführungsformen der Erfindung handelt es sich bei der Krankheit um Kokzidiose, eine Clostridieninfektion, eine Salmonellose, eine Kryptosporidiose, eine Erkrankung durch Magen-Darm-Parasiten wie insbesondere Magenwürmer oder Darmwürmer oder einzellige Erreger, eine Colisepsis, Lawsoniose, oder Schweinedysenterie handelt. Es kann sich bei der Krankheit jedoch auch um jegliche andere Erkrankung handeln, die sich in einem charakteristisch veänderten Bild der Ausscheidungen des Tieres äußert. Ggf. muss für jede dieser anderen Krankeiten ein Trainingsdatensatz in Form von Trainings-Bildern der Ausscheidungen gesunder wie an dieser Krankheit erkrankter Tiere erstellt werden um einen Machine-Learning Algorithmus auf diesem Trainingsdatensatz zu trainineren um die Analysesoftware zu erzeugen, oder es müssen manuell entsprechende Regeln für die jeweilige Krankheit definiert werden, anhand welcher die Analysesoftware die Analyse vornimmt.

Nach Ausführungsformen der Erfindung handelt es sich bei den Tieren um Geflügel, Rinder, Schafe, oder Schweine.

Nach Ausführungsformen der Erfindung handelt es sich bei der Analysesoftware um eine auf vordefinierten Regeln basierende Software. Dies kann vorteilhaft sein, da Regeln von Menschen erstellt und interpretiert werden können. Es ist somit möglich, menschliches Expertenwissen in die Software einfließen zu lassen. Allerdings haben regelbasierte Systeme auch den Nachteil, dass die Regeln explizit formuliert werden müssen. Prädiktive Parameter, die dem Programmierer nicht bekannt sind, können somit nicht in die Software integriert werden.

Nach Ausführungsformen handelt es sich bei der Analysesoftware um eine trainierte Machine-Learning-Software. Dies kann vorteilhaft sein, da es möglich ist, durch Trainieren der Software auf einem hinreichend großen Datensatz eine Analysesoftware zu erhalten, welche auch prädiktive Merkmale, die dem Menschen nicht bekannt sind, also z.B. Kombinationen bestimmter Merkmale der Bilder der Ausscheidungen, wie z.B. Körnigkeit, Feuchtigkeit, Farbe der abgebildeten Ausscheidungen, aber auch Kombinationen von Merkmalen dieser Bilder mit Messwerten und/oder Metadaten bezüglich verabreichter Substanzen, zu erkennen und bei künftigen Analysen zu berücksichtigen. Zwar sind die von der Machine-Learning-Software während des Trainingsprozesses erlernten Merkmale und Merkmalskombinationen in der Regel nicht explizit in einer von einem Menschen interpretierbaren Weise gespeichert. Dafür können verwenden Machine-Learning-Systeme eine große Anzahl an Merkmalen und Merkmalskombinationen im Hinblick auf deren prädiktive Kraft auswerten und Kombinationen mit hoher prädiktiver Kraft, die dem Menschen oftmals nicht bekannt sind, für künftige Analysen und Vorhersagen verwenden.

Nach Ausführungsformen der Erfindung umfasst das Verfahren ferner eine Bereitstellung eines Trainingsdatensatzes, der eine Vielzahl von Trainings-Bildern von Ausscheidungen von Tieren der gleichen Tierart enthält wie der Tiere, die gehalten werden. Die Trainings-Bilder sind mit Metadaten annotiert (verknüpft gespeichert). Die Metadaten beinhalten zumindest einen Leistungsindikator des oder der Tiere, deren Ausscheidungen in den Trainingsbildern abgebildet sind. Die Metadaten beinhalten außerdem die Zusammensetzung des Futters oder Tränkwassers, welches diesen Tieren zum Zeitpunkt der Aufnahme der Trainingsbilder verabreicht wurde. Das Verfahren beinhaltet eine Erzeugung der Analysesoftware durch Training einer Machine-Learning-Software auf Basis der Trainingsbilder.

Beispielsweise kann die vorhergesagte Ausprägung des Leistungsindikators eine vorhergesagte Stärke und/oder Dauer der Ausprägung des Leistungsindikators, insbesondere der Stärke und/oder Dauer eines Krankheitssymptoms oder einer Krankheit, beinhalten. Die empfohlene Aktion kann z.B. eine Empfehlung zur Art und Menge von Medikamenten, Futtermitteln, Futterzusatzstoffen und/oder Tränkwasserzusatzstoffen, die an die Tiere verabreicht werden sollen, um die Gesundheit der Tiere zu bewahren oder zu fördern, beinhalten. Die vorhergesagte Ausprägung des Leistungsindikators kann auch einen Hinweis auf mögliche Ursachen eines vorhergesagten Leistungsabfalls beinhalten.

Nach Ausführungsformen umfasst das mindestens eine Bild eine Vielzahl von Bildern. Dies kann vorteilhaft sein, da die Datenbasis vergrößert und somit die Qualität der Analyse erhöht wird. Durch die Aufnahme mehrerer Bilder an einem gewissen Zeitpunkt, zum Beispiel beim routinemäßigen täglichen Kontrollgang eines Mitarbeiters durch den Stall, ist es möglich, Aufnahmen von Ausscheidungen einer Vielzahl von Tieren und vorzugsweise auch aus verschiedenen Bereichen des Stalles bzw. des Geländes, auf welchen die Tiere gehalten werden, auszuwerten. Dadurch kann der Einfluss sogenannter "Ausreißer" reduziert werden. Außerdem kann die Situation eintreten, dass zunächst erst einige wenige Tiere eines Tierbestands von einer ansteckenden Krankheit befallen sind und somit nur die Ausscheidungen dieser wenigen Tiere Veränderungen aufweisen. Dadurch, dass zu einem bestimmten Zeitpunkt gleich mehrere Bilder von Ausscheidungen mehrere verschiedene Tiere erfasst werden wird auch die Wahrscheinlichkeit erhöht, dass die analysierten Bilder auch Ausscheidungen von diesen wenigen betroffenen Tieren umfassen, sodass rasch Gegenmaßnahmen ergriffen werden können. Außerdem kann es sein, dass unterschiedliche Tiere in unterschiedlicher Weise oder unterschiedlich stark auf einen bestimmten Krankheitserreger oder anderen Umweltparameter reagieren. Dadurch, dass mehrere Bilder erfasst werden, kann die Analysesoftware einen besseren Überblick über die vorherrschende Varianz verschiedener Merkmale der Ausscheidungen gewinnen und die Qualität der Analyse dadurch verbessern.

Nach Ausführungsformen erfolgt die Eingabe des mindestens einen Bildes und die Analyse des eingegebenen mindestens einen Bildes regelmäßig mit einer Frequenz von mindestens einmal pro Tag. Die jeweils eingegebenen Bilder sind digitale Bilder, die jeweils aktuell aufgenommen wurden und aktuelle Ausscheidungen von einem oder mehreren der Tiere darstellen. Die Analyse erfolgt jeweils selektiv auf denjenigen der empfangenen Bildern, die innerhalb eines vordefinierten Zeitraums vor dem Zeitpunkt der Analyse aufgenommen wurden. Beispielsweise kann die Analyse sich nicht nur auf die aktuell aufgenommenen Bilder beziehen, sondern auf sämtliche Bilder, welche innerhalb eines vordefinierten Zeitraums, zum Beispiel 5 Tage oder 7 Tage oder zehn Tage gerechnet vom aktuellen Tag, an welchem die weiteren Bilder aufgenommen und durch die Analysesoftware analysiert werden. Die Auswertung sämtlicher Bilder, die innerhalb eines sich verschieben und relativ kurzen Zeitfensters von wenigen Tagen bis Wochen aufgenommen wurden kann vorteilhaft sein, da hierdurch die Datenbasis vergrößert und die Qualität der Analysenergebnisse verbessert werden kann. Die Analyse von Bildern, die über mehrere Tage hinweg aufgenommen wurden, erleichtert es, Trends zu erkennen, also zum Beispiel eine verbesserte oder verschlechterte Futterauswertung, ein krankhaft veränderter Kot, das Vorherrschen oder Zunehmen von Durchfallerkrankungen etc. Es wurde beobachtet, dass auch der Ausschluss von Bildern, deren Aufnahme länger als ein gewisser Zeitraum von z.B. 5 Tagen, 7 Tagen oder 10 Tagen zurückliegt, die Analysenergebnisse verbessern kann, da Bilder diesen oder noch höheren Alters in der Regel keine Vorhersagekraft im Hinblick auf aktuelle oder künftige Leistungsindikatoren mehr besitzen.

Optional kann die Analysesoftware (oder ein als Client-Applikation ausgebildeter Teil dieser Software) dazu ausgebildet sein, ein oder mehrere Referenzbilder von Ausscheidungen von Tieren eines bestimmten Stalls verknüpft mit ein oder mehreren Metadaten zu speichern. Die Analysesoftware bzw. die Client-Applikation ist ferner dazu ausgebildet, dass ein Nutzer der Analyse-Applikation die Analyessoftware dazu veranlassen kann, diese Referenzbilder unter Nutzung eines Auswahlfilters auf ein oder mehrere dieser Metadaten selektiv auszugeben, z.B. über ein Display eines Smartphones. Bei den Metadaten kann es sich z.B. um das Datum der Aufnahme des Bildes, ein Identifikator des Stalls oder Geländes, in dem ein Bild aufgenommen wurde, Geodaten von dem Ort, an dem das Bild aufgenommen wurde, Jahreszeit, Tierart, Rasse der Tiere, Art, Herkunft und/oder Menge von ein oder mehreren aktuell verabreichten Substanzen oder Substanzmischungen (Futter, Futterzusatzstoffe, Medikamente) handeln. Die Speicherung von Referenzbildern und die Möglichkeit zur metadatengesteuerten Ausgabe der Referenzbilder kann vorteilhaft sein, da sie dem Nutzer eine zusätzliche Möglichkeit an die Hand gibt, die Ausgaben der Analysesoftware auf Plausibilität zu prüfen. Falls beispielsweise die Analysesoftware keine Krankheit erkennt, obwohl die aktuell photographierten Ausscheidungen deutlich anders aussehen als die Ausscheidungen, die vor wenigen Tagen am gleichen Ort aufgenommen wurden, und obwohl an den Fütterungsparametern nichts verändert wurde, ist dies ein Hinweis darauf, dass trotz des Ausbleibens einer entsprechenen Warnmeldung eine verstärkte Überwachung der Tiere sinnvoll sein kann, da beispielsweise eine Krankheit ausgebrochen sein könnte, die von der Analysesoftware nicht abgedeckt ist, z.B., weil die Analysesoftware nur auf Salmonellen, Kokzidiose und Chlostridien trainiert wurde, aktuell aber eine Wurmerkrankung für eine Veränderung der Farbe der Ausscheidungen sorgt.

Wie bereits oben dargestellt kann beispielsweise ein Arbeiter oder mehrere Arbeiter, welche ein bis mehrmals täglich einen Kontrollgang durch einen Tierstall bzw. Tiergehege durchführen, bei dieser Gelegenheit auch mehrere Bilder der Ausscheidungen mehrere Tiere an verschiedenen Stellen des Stalles bzw. Geheges mithilfe einer gewöhnlichen Smartphonekamera aufnehmen. Der übliche Arbeitsablauf, zum Beispiel die Verabreichung von Futter, das Wechseln von Einstreu, die Kontrolle der Tränkanlage etc. wird durch das Aufnehmen der Bilder nicht wesentlich verzögert.

Nach Ausführungsformen der Erfindung umfasst das Verfahren eine Bereitstellung eines Futtermittels oder Tränkwasser an die Tiere des Stalles, wobei das Futtermittel oder Tränkwasser mit einer Indikatorsubstanz versetzt ist, welches in den Ausscheidungen der Tiere eine Färbung bewirkt, die von physiologischen Bedingungen im Metabolismus der Tiere abhängt.

Beispielsweise kann es sich bei der Indikatorsubstanz um einen pH-Indikator handeln. Dies kann vorteilhaft sein, da der pH-Wert des Kots als integrierter Indikator einer Vielzahl von Stoffwechselvorgängen im Darmtrakt der Tiere verwendet werden kann. Er erlaubt Rückschlüsse auf die Stoffwechselleistung verschiedener Gruppen von Mikroorganismen im Darm, da der Stuhl-pH-Wert von der Zusammensetzung der Darmflora und damit indirekt auch von dem verabreichten Futter abhängt, das von den Mikroorganismen verstoffwechselt wird. Kohlenhydratverbindungen, insbesondere Ballaststoffe, werden von manchen Bakterien zu kurzkettigen Fettsäuren umgesetzt und bewirken damit eine Ansäuerung des Darmmilieus und des Kots. Proteinreiches Futter stimuliert dagegen die proteolytisch aktiven Darmbakterien, die aus diesem Ammoniak und andere Stoffwechselprodukte mit alkalisierendem Effekt bilden. Die Summe dieser Vorgänge resultiert bei darmgesunden erwachsenen Schweinen beispielsweise in pH-Werten zwischen 6,0 und 7,0. Einseitige Ernährungsweisen, Krankheiten oder andere Umweltfaktoren können zu einer Veränderung in der Zusammensetzung oder Arbeitsweise der Darmflora und damit zu einer Verschiebung des pH-Wertes der Ausscheidungen führen. Störungen der Protein- und/oder Fettverdauung (Exokrine Pankreasinsuffizienz, Gallensäuresekretionsstörung etc.) aber auch Entzündungen mit Verlust von Plasmaeiweißen können einen vermehrten Übertritt dieser Substanzen in den Dickdarm und eine Alkalisierung des Kots bewirken. Eine ballaststoffreiche Kost, aber auch eine Kohlenhydratintoleranz macht sich dagegen mit einer Ansäuerung des Stuhles bemerkbar. Bei dem pH Indikator kann es sich beispielsweise um Betain oder ein anderes Betacyan mit pH indikativer Wirkung, oder um ein Anthocyan handeln. Der Farbstoff Betain findet sich vor allem in der Roten Rübe (Beta vulgaris), aber auch in den Blüten und Früchten anderer Pflanzen. Betain zählt zur Gruppe der Betalaine und deren Untergruppe der Betacyane. Das Glycosid Betanin ist ein gut wasserlöslicher Farbstoff, dessen Farbe in wässriger Lösung vom pH-Wert abhängt: Im stark sauren pH bis 2 ist die Lösung violett; bei pH 4 erfolgt ein Farbumschlag nach rot. Im stark basischen Bereich schlägt die Farbe unter Hydrolyse der glycosidischen Bindung in gelblich-braun um. Dabei entstehen das Aglycon Betanidin und Glucose. Auch andere pH Indikatoren können als Futterzusatzstoff oder Tränkwasserzusatzstoff zum Einsatz kommen. Anthocyane, z.B. das Cyanidin-3-triglucosid, geben dem Rotkohl eine pH-Wert abhängige, rote bis blaue Farbe. Aus dem Stand der Technik sind eine Vielzahl von pH Indikatoren bekannt, wie z.B. Lackmus, Bromthymolblau, Phenolphthalein oder Kombinationen dieser Substanzen. Vorzugsweise werden pH Indikatoren verwendet, welche günstig und chemisch stabil sind, welche auch bei Passage des Magen-Darmtrakts nicht vollständig verstoffwechselt werden, und welche physiologisch verträglich sind.

Die Verabreichung von Futter oder Wasser mit der Indikatorsubstanz hat den Vorteil, dass die Aufnahmen der Ausscheidungen ggf. zusätzliche Informationen über relevante physiologische Parameter, wie z.B. den pH Wert der Ausscheidungen, beinhalten, die eine exaktere Vorhersage der Ausprägung eines bestimmten Leistungsindikators ermöglichen. Der pH-Wert der Ausscheidungen ist an sich nicht anhand der digitalen Bilder erkennbar. Durch Verabreichung der Indikatorsubstanz und die Verwendung einer Analysesoftware, die an die Verabreichung der Indikatorsubstanz angepasst wurde (z.B. mittels Training auf einem Trainingsdatensatz mit Bildern von Ausscheidungen auch von Tieren, welchen die Indikatorsubstanz verabreicht wurde) können also zusätzliche wichtige Informationen über den Gesundheitszustand der Tiere gewonnen werden, ohne dass der Prozess der Datenerhebung für den einfachen Mitarbeiter dadurch komplizierter gemacht würde.

Gemäß einer alternativen Ausführungsform wird die Indikatorsubstanz nicht dem Futter oder Tränkwasser zugegeben, sondern auf die Ausscheidungen aufgebracht kurz bevor das zumindest eine Bild der Ausscheidungen aufgenommen wird. Dies kann den Vorteil haben, dass eine geringere Menge der Indikatorsubstanz verbraucht wird und auch physiologisch schädliche Substanzen verwendet werden können, die nicht als Nahrungsergänzungsmittel geeignet sind. Allerdings wird der Schritt der Aufnahme des Bildes dadurch zeitlich etwas aufwändiger.

In analoger Wiese kann auch der Anteil von unverdauten Fetten, Fettsäuren, bestimmten Kohlehydraten wie z.B. Stärke und/oder der Anteil bestimmter Aminosäuren, Peptide und Proteine in den Ausscheidungen Aufschluss über den Gesundheitszustand der Tiere und insbesondere über das Vorliegen spezifischer Verdauungsprobleme geben. Durch Zugabe entsprechender, auf die vorgenannten Substanzen gerichteter Indikatorsubstanzen, die eine Farbänderung der Ausscheidungen in Abhängigkeit vom Gehalt an Fetten, Fettsäuren, bestimmten Kohlenhydraten, Aminosäuren, Peptiden oder Proteinen bewirken, als Alternative oder in Ergänzung zu der Verabreichung des pH Indikators, können also eine Vielzahl von Zusatzinformationen gewonnen werden. Vorzugsweise beinhaltet die Analysesoftware in diesem Fall eine GUI, welcher es dem Nutzer erlaubt, die ein oder mehreren verabreichten Indikatorsubstanzen als Metadaten in die Analysesoftware einzugeben, sodass diese Information bei der Durchführung der Analyse berücksichtigt wird und in das Analyseergebnis eingeht.

Gemäß einer weiteren Ausführungsform handelt es sich bei der Indikatorsubstanz um einen Fluoreszenzfarbstoff oder eine Substanz, die an einen Fluoreszenzfarbstoff gekoppelt ist. Vorzugsweise hängt die chemische Beständigkeit und/oder die Ausscheidungsrate der Indikatorsubstanz von physiologischen Parametern des Darmtrakts der Tiere ab, also z.B. dem Vorliegen von Entzündungen oder Parasiten im Magen-Darmtrakt, dem pH Wert, der Darmflora und anderen Faktoren. Vorzugsweise ist die Bilderfassungseinheit, die zum Erfassen des zumindest einen Bildes verwendet wird, an eine Lichtquelle gekoppelt, die Licht in einer Wellenlänge aussendet, welche den Fluoreszenzfarbstoff zum Fluoreszieren und zum Aussenden fluoreszierenden Lichts anregen kann. Optional kann das zumindest eine Bild unter Verwendung eines Farbreferenzobjekts, welches einen Farbpunkt mit einer definierten Menge dieses Fluoreszenzfarbstoffs beinhaltet, aufgenommen werden.

Beispielsweise wird Gluconsäure im Gegensatz zu vielen anderen organischen Säuren nur zu 30% im Dünndarm der meisten Säugetiere resorbiert. Der größte Teil dieses Stoffes wird von verschiedenen Darmbakterien zu Essig- und Milchsäure verstoffwechselt, welche wiederum weiter zu gesundheitsfördernden kurzkettigen Fettsäuren wie Buttersäure und Propionsäure metabolisiert werden. Auch die Konzentration mehrerer anderer organischer Säuren und deren Verstoffwechslung hängen von den physiologischen Gegebenheiten im Magen-Darmtrackt ab, sodass die Konzentration dieser Stoffwechselprodukte in den Ausscheidungen Aufschluss über mögliche Krankheiten geben kann. Allerdings ist der Nachweis und die Quantifizierung einzelner chemischer Stoffe in vielen Fällen zu aufwändig. Gemäß Ausführungsformen wird den Tieren eine Indikatorsubstanz verabreicht, die an einen Fluoreszenzfarbstoff gekoppelt ist oder die selbst fluoreszierende Eigenschaften hat und deren Konzentration in den Ausscheidungen der Tiere von den physiologischen Bedingungen im Magen-Darmtrakt abhängt. Beispielsweise offenbart die das deutsche Patent DE69726135T2 fluoreszierende Komplexe von tri- und tetracyclopolyazamacrocyclischen Verbindungen, die für biologische Anwendungen geeignet sind, da sie stabil in wässrigen Medien und nicht toxisch sind. Insbesondere chelatierende Mittel auf Basis von tetraazamacrocyclischen Grundgerüsten sind geeignet, wässrige stabile Lanthanidchelate zu generieren. Aminocarboxylat- und aminophosphonat-chelatierende Mittel, die von 1,4,7,10-Tetraazacyclododecan abgeleitet sind, bilden hochstabile Lanthanidchelate, die sich als besonders geeignet als Futtermittel oder Tränkmittelzusatz erwiesen haben, da deren Konzentration in den Ausscheidungen zumindest eine grobe Quantifizierung und somit Rückschlüsse auf die Tiergesundheit im Zuge der Analyse der Aufnahmen der mit einer geeigneten Lichtquelle zur Fluoreszenz angeregten Ausscheidungen erlaubt. Im Gegensatz zu herkömmlichen Fluoreszenz-Immunoassayverfahren ist das Verfahren sehr einfach anwendbar. Zwar wird auch hier eine grobe Quantifizierung anhand des Fluoreszenzsignals vorgenommen, die Analyse basiert jedoch nicht auf komplizierten immunologischen Assays sondern auf der Verabreichung einer fluoreszierenden Indikatorsubstanz mit dem Futter oder Tränkwasser und einer automatisierten Auswertung entsprechender Fluoreszenzbilder der Ausscheidungen.

Zu den geeigneten Lanthaniden gehören z. B. Terbium (Tb) und Europium (Eu) die an ein kleines Molekül gekoppelt verwenden, ohne dass es sich hierbei notwendigerweise um einen Antikörper handelt. Bei diesem Molekül handelt es sich z.B. um bifunktionale Chelatierungsmittel, wie sie in dem Patent DE69726135T2 beschrieben sind, und die kovalent an biologisch aktive Substanzen gebunden sein, insbesondere an Stoffe, die im Magendarmtrakt typischerweise verstoffwechseltes werden wie z. B. an Dextran, und pharmazeutisch annehmbare Salze von diesen. "Pharmazeutisch-annehmbare Salze" wie es hierin verwendet wird, meint irgendein Salz oder Mischungen von Salzen, welche/welches ausreichend untoxisch ist/sind, um für die Diagnose in Tieren, bevorzugt Säugetieren, anwendbar zu sein. Bei den biologisch aktiven Substanzen kann es sich insbesondere um organische Substanzen handeln wie z.B. Essigsäure, Bernsteinsäure, Zitronensäure, Milchsäure, Maleinsäure, Fumarsäure, Palmitinsäure, Cholsäure, Palmonsäure, Schleimsäure, Glutaminsäure, Gluconsäure, d-Kamphersäure, Glutarsäure, Glycolsäure, Phthalsäure, Weinsäure, Ameisensäure, Laurinsäure, Sterische Säure, Salicylsäure, Methansulfonsäure, Benzensulfonsäure, Sorbinsäure, Picrinsäure, Benzoesäure, Zimtsäuren und andere geeignete Säuren ein.

Um Kosten zu reduzieren, können die fluoreszierenden Indikatorsubstanzen auch nur einigen wenigen ausgewählten Tieren für kurze Zeit verabreicht werden, um beispielwesise ein noch genaueres Bild eines möglicherweise vorliegenden Gesundheitsproblems zu bekommen. Beispielsweise kann die Indikatorsubstanz in einem Bereich von 0,01 - 1 mmol/kg Körpergewicht des Tieres verabreicht werden, die empfholene Dosis hängt jedoch von dem jeweiligen Stoff und der Tierart ab. Im allgemeinen sollte so viel von der Indikatorsubstanz verabreicht werden, dass in den Ausscheidungen eines gesunden Tieres noch eine deutlich messmare Menge der Indikatorsubstanz vorliegt, sodass Konzentrationsabweichungen nach oben oder unten, die Hinweis auf ein Gesundheitsproblem darstellen können, durch die Bilderfassungseinheit klar gemessen und erfasst werden können.

Dies kann vorteilhaft sein, da die Intensität des Fluoreszenzsignals der Ausscheidungen Auskunft darüber geben kann, wie stark die Indikatorsubstanz chemisch während der Darmpassage abgebaut oder absorbiert wurde. Vorzugsweise entspricht die Menge an Fluoreszenzfarbstoff pro Fläche in dem Farbpunkt des Farbreferenzobjekts derjenigen Menge an Fluoreszenzfarbstoff, welche in einer identisch großen Fläche der Tierausscheidungen bei gesunden Tieren zu erwarten ist. Abweichungen der Intensität des Fluoreszenssignals geben Auskunft über verschiedene physiologische Zustände des Magen-Darmtrakts der Tiere.

Je nach Anwendungsfall kann die Indikatorsubstanz in Reaktion auf eine vorhergesagte Ausprägung eines Leistungindikators zugegeben werden, etwa dann, wenn die Analysesoftware bereits das Auftreten von Krankheiten des Magen-Darm-Trakts für die nächsten 2-3 Tage vorhersieht und die Zugabe der Indikatorsubstanz dafür sorgen soll, dass zusätzliche Informationen bezüglich des Verdauungstrakts gewonnen werden. Es ist aber auch möglich, die Indikatorsubstanz prophylaktisch zu verabreichen. Beispielsweise kann die Analysesoftware dazu ausgebildet sein, das Vorliegen der Krankheit basierend auf Aufnahmen von Ausscheidungen von Tieren, welche die Indikatorsubstanz mit der Nahrung oder dem Tränkwasser aufgenommen haben, vorherzusagen.

Nach Ausführungsformen wurde die Analysesoftware trainiert auf einem Trainingsdatensatz, der Bilder umfasst, die von Ausscheidungen von Tieren (mit unterschiedlichen Leistungsparametern, gesunden und kranken Tieren) stammen, die die Indikatorsubstanz mit der Nahrung oder dem Tränkwasser aufgenommen haben, oder welchen die Indikatorsubstanz direkt zugegeben wurde, nachdem die Ausscheidungen den Körper der Tiere verlassen haben. Letzteres kann z.B. durch Vernebelung oder Aufträufeln der Indikatorsubstanz auf die Ausscheidungen erfolgen. Die Analysesoftware ist dazu ausgebildet, anhand optischer Merkmale der Ausscheidungen, insbesondere deren Farbe, das aktuelle oder künftige Vorliegen einer Krankheit und/oder anderer Leistungsindikatoren bei den Tieren automatisch zu erkennen, wobei die optischen Merkmale der Ausscheidungen sowohl von dem Vorliegen der Krankheit und/oder dem Leistungszustand des Tieres als auch von der Verabreichung und Konzentration der Indikatorsubstanz abhängen. Bei den gehaltenen Tieren handelt es sich insbesondere um Tiere, die zusammen gehalten werden, z.B. im gleichen Tierstall oder gleichen Gelände.

Nach Ausführungsformen der Erfindung wird den Tieren vor der Aufnahme des zumindest einen Bildes ein Futtermittel oder Tränkwasser bereitgestellt oder verabreicht, welches mit einer Indikatorsubstanz versetzt ist, wobei die Indikatorsubstanz eine Substanz ist, die in den Ausscheidungen der Tiere eine Färbung bewirkt, die vom physiologischen Zustand der Tiere, insbesondere dem Befall der Tiere mit Krankheitserregern, abhängt. Insbesondere kann es sich bei der Indikatorsubstanz um einen pH Indikator handeln.

Nach Ausführungsformen ist die Analysesoftware dazu ausgebildet, zusätzlich zu den digitalen Bidlern von Ausscheidungen auch in regelmäßigen zeitlichen Abständen digitale Bilder von allen oder mehreren der Tiere zu empfangen. Die Bilder sind mit einem Zeitstempel versehen und werden vorzugsweise in einer Frequenz von mindestens einmal pro 10 Sekunden, vorzugsweise mindestens einmal pro 5 Sekunden, weiterhin vorzugsweise mindestens einmal pro Sekunde erhalten. Vorzugsweise werden diese Bilder von ein oder mehreren stationären Kameras des Tierstalls oder des Geländes, auf dem die Tiere gehalten werden, empfangen. Die Analysesoftware fürt eine Bildanalyse der Bilder mit den Zeitstempeln durch, um einzelne Tiere als Objekte zu erkennen und für die Tiere ein Bewegungsprofil über die Zeit zu errechnen. Die Mobilität der Herde ist ein Indiz für den Gesundheitszustand der Tiere. Eine Herde die ruhig ist aber mobil, ist gesund. Eine höhere Bewegungsfrequenz kann auf bestimmten Krankheiten oder zu tiefe Temepraturen hinweisen, eine verminderte Bewegungsfrequenz kann ebenfalls auf Krankheiten, z.B. Virusinfekte, oder zu hohe Stalltemperatur hinweisen. Die Bewegungsprofile können ergänzend zur Verfeinerung der im Wesentlichen auf der Analyse der Ausscheidungsbilder beruhenden Analyse verwendet werden.

Nach Ausführungsformen hat die Analysesoftware Zugriff auf eine Datenbank mit Daten über Vorräte eines Halters der Tiere von verschiedenen Substanzen oder Substanzmischungen, insbesondere Futtermittelzusammensetzungen, Futtermittelzusatzstoffe, Tränkwasserzusatzstoffe, Vitamine, Mineralstoffe und veterinärmedizinische Präparate. Die Datenbank kann weitere Daten enthalten, z.B. tatsächlich gemessene Leistungsindikatoren von Tieren des Tierstalls bzw. Tiergeheges, denen auch Bilder von deren Ausscheidungen, die in zeitlicher Nähe zur Messung dieses Leistungsindikators aufgenommen wurden, zugeordnet sind. Die gemessenen Leistungsindikatoren können z.B. Bilder des Magendarmtrakts von geschlachteten Tieren sein, von welchen wenige Stunden oder Tage vor deren Schlachtung Bilder von den Ausscheidungen eben dieser Tiere gemacht wurden, welche vorzugsweise ebenso in der Datenbank gespeichert sind und zum Erzeugen oder Verbessern der Analysesoftware durch Trainieren oder Neutrainieren eines Machine-Learning Algorithmus verwendet werden können.

Die Analysesoftware prüft automatisch, ob die Vorräte nach der Entnahme der gemäß der empfohlenen Aktion den Vorräten entnommenen Menge und Art der Substanz oder Substanzmischung bezüglich dieser Substanz oder Substanzmischung erschöpft sind. Die Analysesoftware sendet sodann eine Bestellnachricht an ein elektronisches Bestellsystem eines Anbieters der entnommenen Substanz oder Substanzmischung über ein Netzwerk.

Beispielsweise kann es sich bei der Datenbank um die Datenbank einer Warenmanagement-Software handeln, welchen eine automatische Bestellsoftware angeschlossen ist. Wenn der Betreiber des Tierstalls eine bestimmte Substanz, also zum Beispiel einen Sack Futtermittel, eine Packung eines Futtermittelzusatzstoffes oder eines veterinärmedizinischen Präparates dem Lagerbestand entnimmt, wird automatisch oder manuell die Entnahme in der Warenmanagement-Software eingetragen, sodass sichergestellt ist, dass der in Vorrat gehaltene Warenbestand immer aktuell verbucht ist. In manchen Ausführungsformen ist die Warenmanagement-Software operativ an Verbrauchssensoren von Maschinen und Einrichtungen gekoppelt, die den Verbrauch einer Substanz direkt oder indirekt angeben. Beispielsweise kann es sich bei den Verbrauchssensoren um Verbrauchssensoren von Fütterungsmaschinen oder Wasseruhren von Tränkanlagen handeln.

Die automatische Nachbestellung kann somit die Tierhaltung vereinfachen und damit verbundene Prozesse beschleunigen, da die Analysesoftware in Verbindung mit der Warenmanagement-Software automatisch dafür sorgt, dass der Bestand an benötigten Substanzen automatisch erhalten bzw. ergänzt wird.

Nach Ausführungsformen umfasst das Verfahren eine manuelle oder automatisierte Eingabe zumindest eines Messwertes in die Analysesoftware. Der zumindest eine Messwert kann zum Beispiel einer der folgenden Messwerte bzw. Kombination von zwei oder mehrerer dieser Messwerte umfassen: Temperatur der von den Tieren abgegebenen Milch; elektrische Leitfähigkeit der von den Tieren abgegebenen Milch; Temperatur des Stalls; Ammoniakgehalt in der; Feuchtegehalt der Luft; vorzugsweise ist dabei der Abstand der Sensoren vom Boden kleiner als 20 cm, vorzugsweise kleiner als 10cm; Menge des pro Tier oder pro Tierstall pro Zeiteinheit in der letzten gemessenen Zeiteinheit abgegebenen Futters; Menge des pro Tier oder pro Tierstall pro Zeiteinheit in der letzten gemessenen Zeiteinheit abgegebenen Tränkwassers. Die Analysesoftware führt sodann neben der Analyse des zumindest einen Bildes auch eine Analyse des zumindest einen Messwerts durch. Die empfohlene Aktion und/oder die vorhergesagte Ausprägung des Leistungsindikators hängt von dem Ergebnis der Analyse des zumindest einen Bildes und von einem Ergebnis der Analyse des zumindest einen Messwerts ab. Die besagten Messwertparameter haben den Vorteil, dass sie täglich in vielen Tierställen von Sensoren für die Stallmanagementsoftware ohnehin erhoben und gesammelt werden, um die Lüftung und andere technische Einrichtungen des Stalls zu steuern und somit bereits vorhanden, vergleichsweise einfach zu erfassen und robust gegen Umwelteinflüsse sind.

Vorzugsweise werden all diese Parameter in zeitlicher Nähe zum Aufnahmezeitpunkt des zumindest einen digitalen Bildes gemessen, also beispielsweise innerhalb derselben Stunde oder innerhalb eines Zeitraums von 6 Stunden oder innerhalb desselben Tages. Die besagten Messwerte können, sofern die Anlage des Tierstalles bzw. Geländes, auf welchem die Tiere gehalten werden bereits über entsprechende Sensoren verfügt, ergänzend bei der Vorhersage des Leistungsindikators und/oder bei der Berechnung der empfohlenen Aktion durch die Analysesoftware berücksichtigt werden. In der Regel sind die Bilder der Ausscheidungen alleine jedoch ausreichend, um ein akkurates Analyseergebnis zu erhalten, sodass das Verfahren insbesondere zur Haltung von Tieren unter technisch einfachen Bedingungen, also ohne den Einsatz zusätzlicher Sensoren bzw. ohne Berücksichtigung der entsprechenden zusätzlichen Messwerte, geeignet ist. Vorzugsweise ist die Analysesoftware eine Machine-Learning Software, bei deren Training nur einige der Trainingsbilder, aber keineswegs alle, mit ergänzenden Messwerten wie zum Beispiel Milchtemperatur, Bodentemperatur etc. annotiert waren. Ein hinreichend großer Teil des Trainingsdatensatzes umfasst digitale Bilder von Ausscheidungen von Tieren, von welchen ein aktueller oder künftiger Leistungsindikator bzw. eine aktuell oder in der Zukunft empfohlene Aktion bekannt und mit den jeweiligen Bildern verknüpft gespeichert war, mit welchen aber keine Messwerte verknüpft gespeichert wurden. Dadurch kann sichergestellt werden, dass auch bei Abwesenheit der besagten Messwerte als ergänzende Metadaten eine akkurate Analyse und Ausgabe der Analyseergebnisse durch die Analysesoftware erfolgen kann.

Optional können weitere Daten empfangen werden, beispielsweise Daten, die der Nutzer über eine GUI der Analysesoftware eingegeben hat, z.B. Art und Stamm der Tiere, Alter der Tiere, Geschlecht der Tiere, Zusammensetzung des Futters (ggf. kodiert in Form einer Futtertyp-ID), etc. Diese weiteren Daten gehen ebenfalls in die Vorhersage ein. Die Vorhersage erfolgt dann also in Abhängigkeit von den empfangenen Bildern, von den weiteren Daten ("Metadaten") wie insbesondere Futter, Futterzusatzstoffe, Medikamente etc. und den Messwerten, sofern diese empfangen wurden.

Nach Ausführungsformen ist die Analysesoftware implementiert als eine Softwareapplikation, die auf einem mobilen Computersystem, insbesondere einem Smartphone, instanziiert ist. Die Analysesoftware ist dazu ausgebildet, das zumindest eine Bild der Ausscheidungen von einer Kamera des mobilen Computersystems zu empfangen, und, optional, Metadaten (wie z.B. aktuell verabreichte Substanzen wie Futter, Futtermittelzusatzstoffe und Medikamente) und/oder Messdaten zu empfangen. Die Analysesoftware ist dazu ausgebildet, die Analyse des zumindest einen Bildes und die Ausgabe der empfohlenen Aktion und/oder der vorhergesagten Ausprägung des Leistungsindikators durchzuführen. Die Analysesoftware kann z.B. über eine GUI verfügen, welche dem Nutzer des mobilen Computersystems über ein Display dieses Computersystems angezeigt wird und die es dem Nutzer erlaubt, die Metadaten und/oder die Messwerte über die GUI in die Analysesoftware einzugeben. Alternativ dazu kann die Analysesoftware auch über eine lokale Schnittstelle zu einem Sensor oder zu mehreren Sensoren, z.B. Thermometern verfügen, z.B. eine Bluetooth Schnittstelle oder mittels eines Netzwerks wie z.B. dem Internet mit den Sensoren verbunden sein, sodass die Analysesoftware nach manchen Ausführungsformen Messwerte von diesen Sensoren empfangen kann. Diese Ausführungsvariante kann vorteilhaft sein, da sowohl die Aufnahme als auch die Analyse der Bilder mit lokalen Mitteln, die alle auf dem Smartphone des Nutzers verfügbar sind, vorgenommen werden können. Beispielweise kann die Analysesoftware in Form einer App auf dem Smartphone installiert sein. Der Nutzer ist damit unabhängig von anderen entfernten Computersystemen, was besonders in Gegenden oder Gebäuden mit fehlender oder instabiler Mobilfunkverbindung und mit fehlendem WLAN Anschluss von Vorteil sein kann.

Gemäß einer alternativen Ausführungsform ist die Analysesoftware als eine verteilte Client-Server-Softwareapplikation ausgebildet. Die Client-Software ist auf einem mobilen Computersystem, insbesondere einem Smartphone, instanziiert und ist dazu ausgebildet, das zumindest eine Bild der Ausscheidungen von einer Kamera des mobilen Computersystems zu empfangen und an eine Server-Applikation, die auf einem Server-Computersystem instanziiert ist, zu senden. Die Server-Applikation ist dazu ausgebildet, das zumindest eine Bild von der Client-Applikation zu empfangen, die Analyse des zumindest einen Bildes zur Berechnung der empfohlenen Aktion und/oder der vorhergesagten Ausprägung des Leistungsindikators durchzuführen und die empfohlene Aktion und/oder die vorhergesagte Ausprägung an die Client-Applikation über das Netzwerk zu senden. Die Client- Applikation ist dazu ausgebildet, die empfohlene Aktion und/oder die vorhergesagte Ausprägung an den Nutzer des mobilen Computersystems auszugeben.

Nach weiteren Ausführungsformen ist die Analysesoftware als verteilte Client-Server-Softwareapplikation ausgebildet. Die Analysesoftware umfasst also eine Server-Applikation und eine Client-Applikation, die miteinander über ein Netzwerk interoperabel sind. Die Client-Applikation kann auf einem oder mehreren Client-Computern installiert und/oder instanziiert sein, wobei die Client-Computer jeweils vorzugsweise als mobile Computer, z.B. Smartphones oder Tablet-Computer ausgebildet sind. Die Server-Applikation kann über ein Netzwerk mit einer Vielzahl von Client-Applikationen verbunden sein. Hierbei ist jede der Client-Applikationen operativ mit einer Bilderfassungseinheit gekoppelt, z.B. der Kamera des Smartphones, auf dem die Client-Applikation jeweils installiert ist. Jede der Bilderfassungseinheiten kann sich zumindest zum Zeitpunkt der Bildaufnahme innerhalb eines von einer Vielzahl verschiedener Tierställen bzw. Geländen, auf welchem Tiere gehalten werden, befinden. Die Server-Applikation ist dazu ausgebildet, folgendes Verfahren durchzuführen: Empfang von mindestens einem digitalen Bild durch die Server-Applikation von jeder der Client-Applikationen über das Netzwerk. Das mindestens eine empfangene Bild zeigt Ausscheidungen von einem oder mehreren der Tiere eines Tierstalls bzw. Geländes, auf dem die Tiere gehalten werden.

Die Server-Applikation ist dazu ausgebildet, auf Basis des empfangenen zumindest einen Bildes eine Analyse dieses Bildes durchzuführen und das Ergebnis der Analyse, also eine empfohlene Aktion und/oder eine vorhergesagte Ausprägung eines Leistungsindikators, an die Client-Applikation zu senden. Das Senden kann über das Netzwerk erfolgen. Beispielsweise kann das Ergebnis der Analyse an die Client-Applikation übermittelt werden, von welchem das zumindest eine Bild empfangen wurde, und die Client-Applikation kann dazu ausgebildet sein, das von der Server-Applikation empfangene Ergebnis dem Nutzer des entsprechenden Client-Computers über ein Display anzuzeigen. Zusätzlich oder alternativ dazu kann die Ausgabe auch an ein mechanisches oder elektronisches System, das mit einem Tierstall operativ verbunden ist, erfolgen, um dieses zur Änderung eines Umwelt- oder Fütterungsparameters zu veranlassen. Bei diesem System kann es sich z.B. um eine Heizung, eine Klimaanlage, eine Tränkwasseranlage, ein Futterautomat eines Tierstalls oder dergleichen handeln. Optional kann die Client-Applikation auch dazu ausgebildet sein, Messwerte von Sensoren zu empfangen und/oder Metadaten, die ein Nutzer manuell über eine GUI der Client-Applikation eingibt, zu empfangen, und die Messdaten und/oder Metadaten an die Server-Applikation weiterzuleiten. Die weitergeleiteten Messdaten und/oder Metadaten sind dann eine zusätzliche Basis für die Analyse durch die Server-Applikation.

Dies kann vorteilhaft sein, da die serverseitige Implementierung der Analysefunktionalität auf die Bilddaten sowie optional auch Messdaten und Metadaten einschließlich real beobachteter Leistungsindikatoren einer Vielzahl von Client-Applikationen und damit typischerweise auch von einer Vielzahl unterschiedlicher Tierställe bzw. Tierpopulationen zugreifen und diese zentral speichern und auswerten kann. Dies erlaubt eine kontinuierliche Verbesserung der Analysefunktionalität durch wiederholtes Trainieren auf einem stetig wachsenden Datensatz. Es erlaubt es, falsche Vorhersagen und Empfehlungen automatisch anhand der zentral gesammelten Daten zu erkennen und den Algorithmus zu verbessern, sei es durch explizites Ändern expliziter Regeln im Falle von regelbasierten Analyseprogrammen oder sei es durch wiederholtes Trainieren eines Machine-Learning Programms auf einem ständig wachsenden Trainings-Datensatz. Außerdem ist es dadurch möglich, eine schlanke, d.h., wenig Speicher und Rechenkapazität benötigende Client-Applikation bereitzustellen. Deren Funktion beschränkt sich vorzugsweise auf das Weiterleiten der von der Smartphone-Kamera des Client-Computers erfassten Bilder an die Server-Applikation, der optionalen Bereitstellung einer GUI, die dem Nutzer die Eingabe von Metadaten wie etwa dem aktuell verfütterten Futtermittel, und dem Empfang der Analyseergebnisse von der Server-Applikation, wobei die Analyseergebnisse vorzugsweise von der Client-Applikation über eine GUI dem Nutzer des Client-Computers angezeigt werden.

Nach Ausführungsformen ist die Analysesoftware (bzw. im Falle einer Client-Server-Architektur insbesondere die Server-Applikation) ausgebildet zum Empfang von mindestens einer gemessenen oder von einem Nutzer über eine GUI eingegebenen Ausprägung eines Leistungsindikators der Tiere des Tierstalls und optional weiterer Tierställe. Beispielsweise kann die Ausprägung von den jeweiligen Nutzern von einer oder mehrerer Client-Applikationen, die jeweils für unterschiedliche Tierställe oder Tierbestände zuständig sind, über die GUI der jeweiligen Client-Applikation eingegeben und an die Server-Applikation übermittelt werden. Ergänzend oder alternativ dazu kann die Ausprägung auch über eine GUI von ein oder mehreren Feedback-Applikationen in die jeweilige Feedback-Applikation eingegeben und von dieser über das Netzwerk an die Server-Applikation übermittelt werden. Jede der Feedback-Applikationen ist dabei einem Schlachthof zugeordnet und wird beispielsweise zur Erfassung und Weiterleitung von Bildern der Schlachttiere verwendet. Bei der Ausprägung des Leistungsindikators kann es sich insbesondere um Bilder des Magen-Darmtrakts nach der Schlachtung der Tiere handeln. Vorzugsweise bezieht sich die Ausprägung des Leistungsindikators auf einen Zeitpunkt in zeitlicher Nähe zu dem Aufnahmezeitpunkt des mindestens einen digitalen Bilds. Beispielsweise wurde der Leistungsindikator am Schlachttag gemessen, z.B. in Form von Bildern des Magen-Darmtrakts der geschlachteten Tiere, und die Bilder der Ausscheidungen wurden am gleichen Tag oder Vortag der Schlachtung aufgenommen. Zeitliche Nähe bedeutet hier also vorzugsweise innerhalb von 48 Stunden, vorzugsweise innerhalb von 24 Stunden. Diese Bilder können von einem Veterinärmediziner entsprechend annotiert werden, z.B. "Dünndarm eines Masthähnchens mit akuter Kokzidiose", "gesunder Dünndarm eines Masthähnchens", "gesonder Dünndarm Pute", "Dickdarm eines Schweins mit akutem Durchfall", etc.

Das Verfahren umfasst ein Trainieren eines Machine-Learning-Algorithmus zur automatischen Bereitstellung der Analysesoftware (bzw. des als Server-Applikation ausgebildeten Teils der Analysesoftware), oder zur automatischen Bereitstellung einer verbesserten Version der Analysesoftware (bzw. einer verbesserten Version des als Server-Applikation ausgebildeten Teils der Analysesoftware), wobei das Trainieren eine Analyse einer empfangenen Kombinationen aus digitalem Bild der Ausscheidungen und gemessenen Ausprägung des Leistungsindikators umfasst.

Dies kann vorteilhaft sein, da mit zunehmender Anzahl der Bilder in der Datenbank und zunehmender Anzahl von Client-Applikationen (die oftmals unterschiedlichen Tierställen bzw. Mastbetrieben entsprechen) der Trainingsdatensatz wächst und durch das erneute Trainieren eine kontinuierliche Verbesserung der Analysesoftware möglich ist.

Nach weiteren Ausführungsformen ist die Analysesoftware ebenfalls als verteilte Client-Server-Softwareapplikation ausgebildet. Die Server-Applikation ist über ein Netzwerk mit einer Vielzahl von Client-Applikationen verbunden, wobei jede der Client-Applikationen operativ mit einer Bilderfassungseinheit verbunden ist. Jede Bilderfassungseinheit kann sich, zumindest während der Aufnahme der Bilder der Ausscheidungen, innerhalb eines von einer Vielzahl verschiedener Tierställe bzw. Geländen, in welchen Tiere gehalten werden, befinden. Die Server-Applikation ist dazu ausgebildet, für jeden der Tierställe folgendes Verfahren durchzuführen: Empfang einer Nachricht, die mindestens eine Substanz oder Substanzmischung spezifiziert, die den Tieren des Tierstalls gegenwärtig verabreicht wird; Empfang von mindestens einer gemessenen oder von einem Nutzer über eine GUI (der Client-Applikation oder einer Feedback-Applikation eines Schlachthofs) eingegebenen Ausprägung eines Leistungsindikators der Tiere des Tierstalls durch die Server-Applikation von der Client-Applikation, wobei die Ausprägung des Leistungsindikators sich auf einen Zeitpunkt in zeitlicher Nähe zum Zeitpunkt der Verabreichung der Substanz oder Substanzmischung bezieht; und Durchführung einer ersten Clusteranalyse der von jedem Tierstall empfangenen Kombinationen aus verabreichten Substanzen oder Substanzmischungen und den empfangenen Ausprägungen des Leistungsindikators zur Berechnung von Clustern von Tierställen mit gleicher oder ähnlicher verabreichter Substanz oder Substanzmischung, wobei eine durchschnittliche Ausprägung des Leistungsindikators aller Tiere jedes Clusters mit dem jeweiligen Cluster verknüpft gespeichert ist, durch die Server-Applikation. Bei der durchschnittlichen Ausprägung kann es sich beispielsweise um einen Median, das arithmetische Mittel oder einen anderweitig aus einer Vielzahl von Ausprägungen eines Leistungsindikators errechneten Wert handeln.

Zusätzlich oder alternativ dazu führt die Server-Applikation eine zweite Clusteranalyse der von jedem Tierstall empfangenen Kombinationen aus verabreichten Substanzen oder Substanzmischungen und den empfangenen Ausprägungen des Leistungsindikators durch. Die zweite Clusteranalyse dient zur Berechnung von Clustern von Tierställen, deren Tiere eine gleiche oder ähnliche Ausprägung des Leistungsindikators aufweisen, wobei die Substanz oder Substanzmischung, welche in der Mehrzahl der Tierställe eines Clusters den Tieren dieses Tierstalls verabreicht wird, mit dem jeweiligen Cluster verknüpft gespeichert ist. Es sollen also Cluster von Tierställen ähnlichen Leistungsniveaus gebildet werden. Durch Analyse des in den Tierstallclustern mehrheitlich verabreichten Futters können so Unterschiede im Hinblick auf Wirkweise und Qualität des Futters bzw. Futtermittelzusatzstoffes bzw. des veterinärmedizinischen Präparats ermittelt werden. Nach Ausführungsformen führt die Analysesoftware die zweite Clusteranalyze so durch, dass den gebildeten Clustern jeweils auch die Tierrasse und/oder der Hersteller des Futters oder Futterzusatzstoffes zugeordnet ist. Dies kann vorteilhaft sein, da sich somit unterschiedliche Ausprägungen der Leistung und der generellen Gesundheit hervorgerufen durch unterschiedliches kommerzielles Futter verschiedener Hersteller dem Ergebnis der Clusteranalyse entnehmen lassen. Auch unterschiedlich leistungsfähige Tierrassen oder besonders günstige oder ungünstige Kombinationen aus Tierrasse und jeweils verabreichten Futter bzw. Futterzusatzstoff können anhand der zweiten Clusteranalyse identifiziert werden.

Die Ergebnisse der ersten und/oder zweiten Clusteranalyse werden schließlich von der Server-Applikation an mindestens eine der Client-Applikationen zur Ausgabe der Clusteranalyseergebnisse an einen Nutzer gesendet.

Die oben dargestellten Clusteranalysen können vorteilhaft sein, da ohne erwähnenswerten zusätzlichen Aufwand damit zum ersten Mal die Effektivität bestimmter Futterzusatzstoffe und/oder veterinärmedizinischer Produkte in der Praxis auf Basis objektiver und in großer Zahl erhobener empirischer Daten in kommerziellen Tierstallungen und unter kommerziellen Haltungsbedingungen überprüft und quantifiziert werden kann. Derzeit werden entsprechende Tests oft im Zuge eines Zulassungsverfahrens oder Produktentwicklungsprojekts getestet. Die Zahl der getesteten Tiere und Ställe ist aber oftmals begrenzt und auf dem hygienischen und techischen Niveau von Universitäten und Forschungseinrichtungen und kann die große Bandbreite an unterschiedlichen in der Praxis möglicherweise relevanten sonstigen Parametern nicht abdecken. Ausführungsformen der Erfindung, insbesondere ein verteiltes Client-Server System mit mehreren Client-Applikationen die in unterschiedlichen Tierbeständen zum Einsatz kommen und welches zudem real in zumindest einem Schlachthof gemessene Leistungsindikatoren sammelt und analysiert und/oder zur Verbesserung der Analysesoftware einsetzt, können dagegen ohne sonderlichen Aufwand seitens der Tiermastbetriebe die Effektivität bestimmter Substanzen im Hinblick auf die Leistungsfähigkeit und Gesundheit der Tiere in großer Zahl und unter den realen Bedingungen eines Tiermastbetriebes erkennen und nutzbar machen.

Die Ergebnisse der Clusteranalyse können Vorschläge zur Verbesserung der Leistungsparameter beinhalten, insbesondere Empfehlungen zu Medikamenten gegen vorhergesagte Krankheiten und Krankheitssymptome, Empfehlungen zum Futter oder zur Änderung des Futters/Futterzusatzstoffe, etc. Falls die Clusteranalyse beispielsweise ergibt, dass die 15 Betriebe mit den höchsten Ausprägungen eines Leistungsindikators (z.B. Gewichtszunahme pro Zeit) ein Futter mit einem Futterzusatzstoff A verabreichen oder das Futter eines bestimmten Herstellers, während 11 Betriebe mit der geringsten Ausprägungen dieses Leistungsindikators einen anderen Futterzusatzstoff B oder eines anderen Futterherstellers verabreichen, das Futter in seiner Zusammensetzung und sonstige Parameter aber weitgehend identisch sind, könnte die Server-Applikation z.B. dazu ausgebildet zu sein, eine Ausgabe des Analyseergebnisses in Form einer Empfehlungsnachricht selektiv an die Client-Applikationen zu senden, die zu den 11 Betrieben mit den schlechten Leistungswerten gehören. Die Empfehlungsnachricht kann eine Empfehlung beinhalten, auf Futterzusatzstoff A oder den besseren Futterhersteller zu wechseln.

In einem weiteren Aspekt betrifft die Erfindung ein Speichermedium, auf welchen computerlesbare Instruktionen in Form einer Analysesoftware gespeichert sind. Die Analysesoftware ist dazu ausgebildet, ein Verfahren auszuführen umfassend: Eingabe zumindest eines Bildes in eine Analysesoftware, wobei das zumindest eine Bild ein digitales Bild ist, welches Ausscheidungen von einem oder mehreren der Tiere abbildet; Durchführung einer Analyse des zumindest einen Bildes durch die Analysesoftware; Ausgabe einer empfohlenen Aktion, welche geeignet ist, den aktuellen physiologischen Zustand der Tiere zu bewahren oder zu verbessern, durch die Analysesoftware, wobei die empfohlene Aktion von einem Ergebnis der Analyse des zumindest einen Bildes abhängt; und/oder Ausgabe einer vorhergesagten Ausprägung eines Leistungsindikators eines oder mehrerer der Tiere durch die Analysesoftware, wobei der Leistungsindikator ein physiologischer Parameter, ein Krankheitssymptom oder eine Krankheit ist, wobei die vorhergesagte Ausprägung von einem Ergebnis der Analyse des zumindest einen Bildes abhängt.

Bei dem Speichermedium kann es sich um ein flüchtiges oder ein nicht-flüchtiges Speichermedium handeln. Bei dem Speichermedium kann es sich insbesondere um ein elektronisches Speichermedium handeln, welches Informationen in oder auf Basis von elektronischen (Halbleiter-)Bauelementen speichert. Um die Information physisch zu speichern, kommen verschiedene Mechanismen zum Einsatz, z.B., im Falle flüchtiger Speicher, DRAM, dynamisches RAM (dynamic random access memory) oder SRAM (static random access memory), und im Falle nicht-flüchtige Speicher: ROM (read only memory), PROM (programmable read only memory), EPROM (erasable programmable read only memory), EEPROM (electrically erasable programmable read only memory), Flash-EEPROM (z. B. USB-Speichersticks) und andere. Um elektronische Speichermedien lesen zu können, bedarf es auch technischer Hilfsmittel. Der Endanwender erhält daher die elektronischen Speichermedien in der Regel nicht als einzelnen Speicherbaustein, sondern bereits als kombiniertes Produkt: Im Fall von DRAM für die Anwendung als Arbeitsspeicher in Computern oder Peripheriegeräte werden mehrere Speicherbausteine auf einem Speichermodul kombiniert. Die für die Speicherung von Multimedia-Daten in mobilen Anwendungen beliebten Flash-Speicher kommen in vielfältigen, meist als Speicherkarte oder USB-Speicherstick ausgeführten Gehäusen, die neben dem eigentlichen Speicherbaustein auch Controller enthalten. Gleiches gilt für Solid-State-Drives, die ebenfalls Flash-Speicher nutzen aber in einer anderen Gerätebauform mit anderen Schnittstellen geliefert werden. Unter einem Speichermedium wird hier auch ein Verbund aus mehreren Speichermedien umfasst, welche über ein Netzwerk miteinander verbunden sind.

In einem weiteren Aspekt betrifft die Erfindung ein elektronisches System zur Haltung von Tieren. Das System umfasst ein verteiltes oder nicht-verteiltes Computersystem, das an eine Tierstall-Bilderfassungseinheit gekoppelt ist. Das Computersystem beinhaltet eine Analysesoftware und eine Datenbank. Die Tierstall-Bilderfassungseinheit ist ausgebildet zum Erfassen zumindest eines Bildes, welches Ausscheidungen von einem oder mehreren der Tiere abbildet. Die Analysesoftware ist dazu ausgebildet, ein Verfahren durchzuführen umfassend: Speichern des zumindest einen erfassten Bildes in der Datenbank; Eingabe des zumindest einen erfassten Bildes in die Analysesoftware; Durchführung einer Analyse des zumindest einen Bildes; Ausgabe einer empfohlenen Aktion, welche geeignet ist, den aktuellen physiologischen Zustand der Tiere zu bewahren oder zu verbessern, durch die Analysesoftware, wobei die empfohlene Aktion von einem Ergebnis der Analyse des zumindest einen Bildes abhängt; und/oder Ausgabe einer vorhergesagten Ausprägung eines Leistungsindikators eines oder mehrerer der Tiere durch die Analysesoftware, wobei der Leistungsindikator ein physiologischer Parameter, ein Krankheitssymptom oder eine Krankheit ist, wobei die vorhergesagte Ausprägung von einem Ergebnis der Analyse des zumindest einen Bildes abhängt. Optional kann das verteilte oder nicht verteilte System auch ein oder mehrere Sensoren, die in einem Tierstall oder Gelände angebracht sind, in welchem die Tiere gehalten werden, beinhalten. Die Sensoren sind dazu ausgebildet, Messwerte zu erfassen und an die Analysesoftware zu übermitteln.

Nach Ausführungsformen ist das Computersystem ein verteiltes Computersystem bestehend aus einem Server-Computer und einem oder mehreren Client-Computern. Die Analysesoftware ist als verteilte Client-Server-Softwareapplikation ausgebildet, wobei eine Server-Applikation auf dem Server-Computersystem und eine Client-Applikation auf jedem der einen oder mehreren Client-Computer installiert und/oder instanziiert ist. Das verteilte Computersystem umfasst ferner ein Schlachthof-Computersystem, das von einem Schlachthof betrieben wird und das an eine Schlachthof-Bilderfassungseinheit gekoppelt ist. Das Schlachthof-Computersystem beinhaltet eine Feedback-Applikation. Die Schlachthof-Bilderfassungseinheit ist dazu ausgebildet, Bilder, welche den Magen-Darmtrakt von einem oder mehreren der Tiere nach deren Schlachtung abbildet, zu erfassen und der Feedback-Applikation zur Verfügung zu stellen.

Die Feedback- Applikation ist ausgebildet zum Übermitteln der erfassten Magen-Darmtrakt-Bilder an die Server-Applikation über das Netzwerk zur Speicherung der Magen-Darmtrakt-Bilder in der Datenbank der Server-Applikation. Die Server-Applikation ist dazu ausgebildet, ein Verfahren durchzuführen umfassend: Empfang von mindestens einem digitalen Bild von Ausscheidungen von einem oder mehreren der Tiere von der zumindest einen Client-Applikation, und Speicherung dieser Bilder in der Datenbank; Empfang von mindestens einer gemessenen oder von einem Nutzer über eine GUI (der Client-Applikation oder der Feedback-Applikation) eingegebenen Ausprägung eines Leistungsindikators der Tiere, deren Ausscheidungen in dem zumindest einen empfangenen Bild abgebildet sind, von der Client-Applikation oder von der Feedback-Applikation, wobei es sich bei der Ausprägung des Leistungsindikators insbesondere um Bilder des Magen-Darmtrakts nach der Schlachtung der Tiere handelt. Vorzugsweise bezieht sich die Ausprägung des Leistungsindikators auf einen Zeitpunkt in zeitlicher Nähe zu dem Aufnahmezeitpunkt des mindestens einen digitalen Bilds der Ausscheidungen; Trainieren eines Machine-Learning-Algorithmus zur automatischen Bereitstellung einer verbesserten Version der Analysesoftware oder von einer verbesserten Version der Server-Applikation, wobei das Trainieren eine Analyse der empfangenen Kombinationen aus digitalen Bildern der Ausscheidungen und der empfangenen Ausprägungen des Leistungsindikators umfasst. Ausscheidungsbilder und Ausprägungen des Leistungsindikators, die sich auf die gleichen Tiere oder zumindest auf Tiere des gleichen Tierstalls beziehen, sind hierbei kombiniert, das heißt, einander zugeordnet.

In einem weiteren Aspekt betrifft die Erfindung einen mobilen Roboter, der insbesondere zur Haltung und/oder Überwachung von Tieren ausgebildet ist. Der Roboter beinhaltet eine motorische Einheit, die ausgebildet ist zur autonomen oder semiautonomen Bewegung des Roboters innerhalb eines Tierstalles oder Geländes, in welchem die Tiere gehalten werden. Die mobile Einheit kann z.B. aus einem oder mehreren Rädern oder Laufketten bestehen.

Der Roboter beinhaltet eine Bilderfassungseinheit, die dazu ausgebildet und so ausgerichtet ist, dass sie zumindest ein Bild der Ausscheidungen eines oder mehrerer der Tiere erfasst. Beispielsweise kann der Roboter sich gemäß eines dynamisch errechneten oder vorab festgelegten und gespeicherten Bewegungspfads innerhalb des Tierstalles oder Geländes bewegen, wobei die Bilderfassungseinheit auf den Boden gerichtet ist und in regelmäßigen Abständen, z.B. alle 30 Sekunden, ein digitales Bild des Bodens des Tierstalls bzw. Geländes erfasst. Der Roboter umfasst zudem eine Netzwerkschnittstelle, z.B. eine Schnittstelle zum Datenaustausch über das Internet, und eine Bilderfassungseinheit, z.B. eine Kamera. Der Roboter beinhaltet einen oder mehrere Prozessoren und ein Speichermedium, auf welchem eine Robotersoftware gespeichert ist. Bei der Robotersoftware kann es sich insbesondere um eine Analysesoftware oder eine Client-Applikation, die Bestandteil einer Analysesoftware mit Server-Client-Architektur ist, handeln. Die Robotersoftware ist dazu ausgebildet, alleine oder in Interoperation mit einem über ein Netzwerk verbundenen Server (und einer auf diesem instanziierten Server-Applikation) ein Verfahren auszuführen umfassend: Erfassung zumindest einen Bildes durch die Bilderfassungseinheit, wobei das zumindest eine Bild ein digitales Bild ist welches Ausscheidungen eines oder mehrerer der Tiere abbildet; Eingabe des digitalen Bildes in die Robotersoftware; Durchführung einer Analyse des empfangenen Bildes durch die Robotersoftware; Ausgabe einer empfohlenen Aktion, welche geeignet ist, den aktuellen physiologischen Zustand der Tiere zu bewahren oder zu verbessern, durch die Robotersoftware, wobei die empfohlene Aktion von einem Ergebnis der Analyse des zumindest einen Bildes abhängt; und/oder Ausgabe einer vorhergesagten Ausprägung eines Leistungsindikators eines oder mehrerer der Tiere durch die Robotersoftware, wobei der Leistungsindikator ein physiologischer Parameter, ein Krankheitssymptom oder eine Krankheit ist, wobei die vorhergesagte Ausprägung von einem Ergebnis der Analyse des zumindest einen Bildes abhängt. Die Ausgabe der empfohlenen Aktion und/oder der vorhergesagten Ausprägung an einen Nutzer erfolgt über eine Anzeigevorrichtung des mobilen Roboters oder über ein mit dem Roboter über ein Netzwerk verbundenes Datenverarbeitungsgerät, z.B. über ein Display eines Smartphones eines Nutzer, der sich mit seinem Smartphone bei der Roboter-Software registriert hat.

In einem weiteren Aspekt betrifft die Erfindung eine Kombination aus einem Futtermittelzusatzstoff mit einer Indikatorsubstanz und einem verteilten oder nichtverteilten Speichermedium mit einer Analysesoftware, wie diese für Ausführungsformen der Erfindung beschrieben ist. Die Indikatorsubstanz ist eine Substanz, die in den Ausscheidungen der Tiere eine Färbung bewirkt, die von physiologischen Bedingungen im Metabolismus der Tiere abhängt. Die Analysesoftware ist dazu ausgebildet, anhand optischer Merkmale der Ausscheidungen von Tieren, welchen die Indikatorsubstanz vor der Aufnahme des zumindest einen Bildes mit dem Futter oder Trinkwasser aufgenommen haben, die Ausprägung des Leistungsindikators vorherzusagen und/oder die empfohlene Aktion zu berechnen.

Unter einer "Kamera" wird hier eine fototechnische Apparatur, die statische oder bewegte Bilder auf einem fotografischen Film oder elektronisch auf ein magnetisches Videoband oder digitales Speichermedium aufzeichnen oder über eine Schnittstelle übermitteln kann, verstanden. Ein analoger Fotoapparat kann eine Kamera sein, vorzugsweise wird aber eine Smartphone-Kamera verwendet. Die Bilderfassungseinheit bzw. Kamera kann des weiteren verbunden sein mit lichtgebenden Quellen wie diese in einem handeslüblichen Smartphone ohnehin vorhanden sind (Blitzlichteinheit und/oder Smartphonedisplay) oder speziellen Beleuchtungseinheiten, die ggf. als Zusatzgeräte im Handel erhältlich sind, wie z.B. Laser mit definierter Wellenlänge, IR-Lichtquellen, und/oder UV-Lichtquellen. Vorzugsweise beinhaltet die Analysesoftware oder ein als Client-Applikation ausgebildeter Teil derselben eine Beleuchtungsfunktion, die dazu ausgebildet ist, die Ausscheidungen auf definierte Weise sequentiell mit Licht von zwei oder mehr unterschiedlichen Wellenlängenbereichen zu beleuchten. Falls den Tieren eine fluoreszierende Indikatorsubstanz verabreicht wurde, kann die Lichtquelle insbesondere dazu ausgebildet sein, Licht in einer Wellenlänge zu emittieren, die den Fluoreszenzfarbstoff zur Fluoreszenz anregt.

Unter einer "Analysesoftware" wird hier eine Software verstanden, welche verteilt über mehrere Speicherorte oder an einem einzigen Speicherort gespeichert sein kann und welche dazu ausgebildet ist, eine Analyse von zumindest ein oder mehreren digitalen Bildern und optional weiteren Daten vorzunehmen, um ein oder mehrere Analyseergebnisse zu berechnen.

Unter einem "Computersystem" wird hier die Gesamtheit der Hard- u. Software-Komponenten eines Datenverarbeitungssystems verstanden. Die Hard- und Softwarekomponenten können dabei in Form eines monolithischen Computersystems ("Standalone" Computersystem, z.B. Desktop-Computer, Smartphone, Notebook, Server-Computer) oder in Form eines verteilten Computersystems (Cloud-Computersystem, verteiltes Computersystem mit einem Server Computersystem und einem oder mehreren Client-Computersystemen) ausgebildet sein.

Ein "Leistungsindikator" ist ein Parameter, der einem Tier oder einem Tierbestand zugeordnet ist und welcher Informationen bezüglich der Leistungsfähigkeit, z.B. der Gesundheit, dieses Tieres oder Tierbestands beinhaltet. Ein Leistungsindikator kann z.B. ein physiologischer Parameter (z.B. Gewicht, Wachstumsrate, Hämoglobingehalt im Blut), ein Krankheitssymptom (z.B. blutiger Durchfall, wässriger Durchfall) oder eine Krankheit (z.B. Kokzidiose, Clostridiose) sein.

Ein "Farbreferenzobjekt" ist ein Objekt beliebiger Form, welches ein oder mehrere vordefinierte Bereiche mit unterschiedlichen, den Bereichen zugeordneter Färbungen und/oder Texturen beinhaltet. Die Größe des Objekts ist vorzugsweise derart ausgebildet, dass das Objekt nicht wesentlich größer ist als die Ausscheidungen der Tiere, sodass problemlos ein Bild der Ausscheidungen mit einer Handykamera angefertigt werden kann, welches auch ein in räumlicher Nähe zu den Ausscheidungen positioniertes Farbreferenzobjekt abbildet. Das Farbreferenzobjekt kann z.B. im Wesentlichen zweidimensional sein und eine Länge von 0,5 bis 10 cm und eine Breite von 0,3 bis 5 cm aufweisen.

Eine "GUI" ist eine "graphische Benutzerschnittstelle".

Ein "Sensor" ist ein technisches Bauteil, das bestimmte physikalische oder chemische Eigenschaften (physikalisch z. B. Wärmemenge, Temperatur, Feuchtigkeit, Druck, Schallfeldgrößen, Helligkeit, Beschleunigung oder chemisch z. B. pH-Wert, lonenstärke, elektrochemisches Potential) und/oder die stoffliche Beschaffenheit seiner Umgebung qualitativ oder als Messgröße quantitativ erfassen kann. Diese Größen werden mittels physikalischer oder chemischer Effekte erfasst und in ein weiterverarbeitbares elektrisches Signal umgeformt.

Unter "Ausscheidungen" werden hier feste, flüssige oder zähflüssige Exkremente von Tieren verstanden, insbesondere fester, flüssiger oder zähflüssiger Kot.

Unter einer auf "vordefinierten Regeln basierender Software" wird hier eine wissensbasierte Software verstanden, welche dazu ausgebildet ist, regelbasierte Schlüsse durchzuführen. Regelbasierte Software beinhaltet eine Menge von Regeln (auch Rule-Repository genannt) und einen Regelinterpreter (auch Inferenzmaschine oder Rule-Engine genannt). Die Regeln liegen in der Form: WENN ... DANN ... SONST (IF THEN ELSE) vor.

Nach einer Ausführungsform kann eine regelbasierte Analysesoftware ein empfangenes digitales Bild, das Ausscheidungen von Tieren abbildet, beispielsweise wie folgt verarbeiten und dann Regeln auf dem verarbeiteten Bild anwenden: Zunächst wird das als rgb Bild empfangene digitale Bild in drei separate, monochromatische Bilder zerlegt, die im Folgenden R, G, und B- Bilder genannt werden, wobei das R Bild selektiv die Intensitätswerte des roten Bildkanals, das G Bild selektiv die Intensitätswerte des grünen Bildkanals und B selektiv die Intensitätswerte des blauen Bildkanals beinhaltet. In einem nächsten Schritt werden die Intensitätswerte der drei Bilder jeweils für sich normalisiert. Hierfür können beispielsweise die in den jeweiligen Bildern jeweils maximal gemessenen Intensitätswerte, die typischerweise in einem Bereich von 0 bis 255 liegen, abgebildet werden auf eine andere, normalisierte Intensitätsskala vordefinierter Größe, beispielsweise 0 bis 100. Die Normalisierung kann alternativ oder zusätzlich dazu auch anhand der Farben erfolgen, die in einem Farbreferenzobjekt enthalten sind, das auf dem empfangenen rgb Bild abgebildet ist. Beispielsweise kann das Farbreferenzobjekt einen roten Fleck beinhalten, und die farbspezifische Intensitätsnormalisierung kann so erfolgen, dass die höchste im R-Bild gemessene Pixelintensität der Pixelintensität dieses roten Flecks entspricht. Die Farbnormalisierung kann auch von Analysesoftwarevarianten vorgenommen werden, die nicht regelbasiert arbeiten, also z.B. auch von Analysesoftwarevarianten, die auf einem Machine-Learning-Ansatz beruhen. Im nächsten Schritt können dann eine oder mehrere Regeln auf die normalisierten R, G B Bilder angewendet werden: WENN die über alle Pixel eines normalisierten Bildes jeweils errechnete Durchschnittsintensität zumindest für das G Bild oder das B Bild einen Mindestwert von 50 übersteigt UND der entsprechende Durchschnittswert des R-Bildes unter 20 liegt DANN schließe "Blutiger Durchfall im Enddarm" als Kandidat für einen ausgeprägten Leistungsindikator aus. In anderen Worten beinhaltet diese Regel, dass Bilder, die insgesamt eine gewisse Mindesthelligkeit selektiv im grünen und/oder blauen Lichtspektrum, nicht aber im roten Lichtspektrum aufweisen, nicht als Indiz für blutigen Durchfall im Enddarm angesehen werden können, da ein solcher mit einer Rotfärbung des Stuhls einherginge. Die Auswertung der Helligkeitswerte des grünen und blauen Bildkanals ist wichtig, da die Abwesenheit eines Signals im R-Bild auch auf insgesamt nicht ausreichender Helligkeit des Bildes liegen könnte.

Gemäß eines alternativen Farbnormalisierungsverfahrens wird der Intensitätswert jedes Pixels in jedem der R-, G- und B Bilder dividiert durch einen Wert K, wobei K ein von dem Farbreferenzobjekt abgeleiteter Wert ist. Beispielswweise kann das Farbreferenzobjekt einen roten Farbbereich FBR, einen blauen Farbbereich FBB und einen grünen Farbbereich FBG haben und K kann die Summe der drei in den drei Farbbereichen enthaltenen maximal hohen Intensitätswerte I sein. K kann sich also berechnen aus I_{max_FBR} + I_{max_FBB} + I_{max_FBG}.

Ein Pixel P_{x-Rnorm} des normalisierten R-Bildes hätte z.B. den normalisierten Intensitätswert I_{pixel-P}/ I_{max_FBR.} Ein Pixel P_{x-Bnorm} des normalisierten B-Bildes und hätte z.B. den normalisierten Intensitätswert I_{pixel-P}/ I_{max_FBB}. Ein Pixel P_{x-Bnorm} des normalisierten G-Bildes und hätte z.B. den normalisierten Intensitätswert I_{pixel-P}/ I_{max_FBG}. Ein Pixel P_{x-Bnorm} des normalisierten rgb-Bildes hätte z.B. den normalisierten Intensitätswert I_{pixel-P}/K.

Die Regeln werden vorzugsweise kombiniert mit verschiedenen Bildanalysefunktionen, die z.B. bestimmte Objekte und Strukturen erkennen. Beispielsweise können verschiedene im Stand der Technik bekannte Bildanalyseverfahren Linien oder Kugeln (gasförmige Einschlüsse) erkennen. Entsprechende Regeln könnten dann lauten: WENN im Zuge der Bildanalyse mindestens drei kugelförmige Einschlüsse pro cm2 abgebildeter Bodenfläche erkannt wurden, DANN weise allen Kandidaten für einen ausgeprägten Leistungsindikator, die mit Blähungen einhergehen, eine erhöhte Wahrscheinlichkeit des Auftretens zu. Der WENN-Teil der Regel wird auch als Prämisse, der DANN-Teil als Konklusion bezeichnet.

Beispielsweise wurde beobachtet, dass im Falle einer Erkrankung von Tieren an z.B. Durchfall oder Kokzidiose schon zu einem sehr frühen Stadium der Erkrankung bereits geringe Mengen Blut oder Körpersalze oder Gewebeabschrüfungen in den Stuhlgang abgegeben werden. Das im Blut enthaltene, eisenhaltige Hämoglobin wird oxidiert und verändert die Farbe des Stuhlgangs zunehmend hin zu dunklem, später schwarzem Stuhl. Dieser Übergang ist schleichend und wird gemäß Ausführungsformen der Erfindung als Basis für die Erstellung einer Regel genutzt bzw. ist mit hoher Wahrscheinlichkeit ein relevantes optisches Merkmal, das ein an einem entsprechenden Trainingsdatensatz trainierter Analysealgorithmus zur Durchführung der hier beschriebenen Bildanalyse verwendet. Der "Schwarzanteil" der Ausscheidungen wird somit von der Analysesoftware als Hinweis auf das Vorliegen von Blut im Kot und auf das Vorliegen von Krankheiten, welche dieses Merkmal bedingen können, genutzt. Gemäß Ausführungsformen der Erfindung werden zur weiteren Optimierung und Strukturierung der Bilddetails weitere Schritte während der Bildaufnahme durchgeführt wie die Beleuchtung der Ausscheidungen während der Bilderfassung durch eine Lichtquelle. Die Lichtquelle kann z.B. eine einfache Blitzlichtquelle, eine weiße Lichtquelle, eine gelbe Lichtquelle, eine Infrarot-Lichtquelle, eine Lichtquelle, die fluorszierendes Licht ausstrahlt und Kot, der eine fluoreszierende Indikatorsubstanz mit einer entsprechenden spektralen Anregungsfrequenz beinhaltet, zu Abstrahlung eines Lichtsignals anregt, eine Halogendampflampe, oder ganz allgemein eine Lichtquelle für Licht in einem definierten, kurz- oder langwelligen Frequenzbereichen. Es können auch mehrere unterschiedliche Lichtquellen sequentiell verwendet werden oder es kann sequenziell eine Beleuchtung mit Licht unterschiedlicher Wellenlängen durch die selbe Lichtquelle erfolgen, wobei es das Ziel ist, möglichst viele Details der Darmfunktion, die sich auf die Optik der Exkremente auswirken, in den Bildern zu erfassen.

In einem weiteren Schritt werden die tagesaktuellen elektronischen Details, zb die RGB Werte der Bildaufnahme mit denselben elektronischen Details der vergangenen zb. 5 oder 7 Tage in einem statistischen Verfahren z. B. der Diskriminanzanalyse verglichen, um eine statistisch nachweisbare Abweichung oder Identität des aktuellen Messwertes von den Messwerten der Vergangenheit genaus dieses Stalles und dieser Tierrasse und dieser Fütterung zu genau jenem, dem heutigen Zeitpunkt usw zu belegen.

In einem weiteren Schritt werden die in der täglichen Routine anfallenden Produktiontecnischen Messerwerte ebenfalls auf Normalität oder Abnormalität verglichen um die Aussage des Bild - Messwerts zu verfeinern. So kann zb ein erhöhter Wasserkonsum zum Zeitpunkt einer Abnormalität der Bildergebnisse auf eine beginnende Durchfallerkrankung hinweisen der für sich alleine auch bei heißem Wetter ohne Bezug zu zukünftigen gesundheitlichen Risiken auftreten würde. Ein erniedrigter Futterverzehr ermittelt aus den täglichen Messwerten der maschinellen oder manuellen Fütterung verbunden mit abnormalen Bild - Messwerten des Stulhgangs wiederum verbunden mit erhöhtem Wasserverbrauch, zeigt mit hoher Wahrscheinlichkeit eine aufkommende Erkrankung mit fiebrigem Hintergrund, häufig eine bakterielle Erkrankung an zb. Atemwegserkrankung oder Colisepsis. Früh behandelt, kann man mit wenig Antibiotika und kaum Leistungsausfall rechnen, zu spät erkannt führen diese Erkrankungen zu hoher Mortalität, hohem Azneimitteleinsatz und verminderter Qualität der Schlachttiere.

Optional kann die regelbasierte Analysesoftware ein Kontrollmodul beinhalten, welches dazu ausgebildet ist, nach Erhalt weiterer Daten, insbesondere Feedbackdaten von Schlachthöfen, die Gewichtung der Regeln der Regeldatenbank so anzupassen, dass das Analyseergebnis diese Feedback-Daten ausgehend von den Aufnahmen der Ausscheidungen möglichst akkurat vorhersagt.

Unter einer Clusteranalysen wird hier ein Verfahren zur Entdeckung von Ähnlichkeitsstrukturen in Datenbeständen verstanden. Die Datenbestände können insbesondere Datensätze einander zugeordneter Daten umfassen, wobei die einander zugeordneten Daten insbesondere Bilder von Ausscheidungen von Tieren, empirisch erhobene Ausprägungen von Leistungsindikatoren dieser Tiere, Messwerten von Sensoren in Tierställen und an die Tiere verabreichte Substanzen beinhalten können. Die so gefundenen Gruppen von "ähnlichen" Datensätzen werden als Cluster bezeichnet, die Gruppenzuordnung als Clustering. Die gefundenen Ähnlichkeitsgruppen können graphentheoretisch, hierarchisch, partitionierend oder optimierend sein. Gemäß Ausführungsformen der Erfindung beinhaltet die Analysesoftware oder Teile der Analysesoftware, insbesondere die Server-Applikation, ein oder mehrere Clusteranalysealgorithemen oder eine Schnittstelle zu entsprechenden Programmen von Drittanbietern. Beispielsweise bietet die Programmiersprache R des GNU Projekts Klassenbibliotheken, welche u.A. auch Clusteralgorithmen beinhalten. Gemäß einer Ausführungsform wird k-Means als Clusteralgorithmus verwendet.

### Kurzbeschreibung der Figuren

Im Folgenden werden Ausführungsformen der Erfindung nur exemplarisch näher erläutert, wobei auf die Zeichnungen verwiesen wird, in denen sie enthalten sind. Es zeigen:
- Figur 1: ein Computersystem mit einer Analysesoftware zur Überwachung der Gesundheit von Tieren eines Tierstalls;
- Figur 2: ein Computersystem wie in Figur 1, welches als Smartphone ausgebildet ist";
- Figur 3: ein verteiltes Computersystem mit einer Analysesoftware, die in Form einer Client-Server-Architektur ausgebildet ist;
- Figur 4: ein verteiltes Computersystem wie in Figur 3, umfassend mehrere Client-Computersysteme;
- Figur 5: ein Flussdiagramm eines Verfahrens zur Haltung von Tieren;
- Figur 6: ein Blockdiagramm eines mobilen Roboters zum Gesundheitsmonitoring bei Tieren;
- Figur 7: ein verteiltes Computersystem wie in Figur 3 bzw. 4, ferner umfassend ein Computersystem eines Schlachthofs mit einer FeedbackApplikation;
- Figur 8: 3 Fotos von Kot von Puten, welche an einer akuten Clostridieninfektion leiden;
- Figur 9: 2 Fotos von Kot von Puten, welche an einer akuten Colisepsis (Sepsis durch Escherichia coli) leiden;
- Figur 10: ein Foto von Kot einer Pute, die in einer akuten Kokzidiose leidet;
- Figur 11: ein Foto von Kot eines Masthähnchens, welches an einer akuten KoInfektion von Clostridien und Kokzidien leidet; und
- Figur 12: ein Foto von Kot eines Masthähnchens, welches ein einer akuten Clostridieninfektion leidet.

### Ausführliche Beschreibung

Die nachfolgenden Beschreibungen beziehen sich auf Fotos aus einem Geflügel-Maststall, wie sie beispielhaft als Eingabebild für die Analysesoftware gemäß der hier beschriebenen Ausführungsformen der Erfindung verwendet werden. Optional können weitere Informationen, insbesondere analoge und digitale Messwerte und Metadaten aus der Stalltechnologie (Fütterung, Wasserversorgung, Lüftung, Schadgaserkennung) als automatsche und/oder manuelle Eingaben für die Analysesoftware verwendet werden. Vorzugsweise ist die Analysesoftware gemäß Ausführungsformen der Erfindung dazu ausgebildet, die Ausprägung von ein oder mehreren Leistungsindikatoren vorherzusagen. Zu diesen Leistungsindikatoren einer Analysesoftware, die zur Überwachung von Geflügelställen bzw. Haltungsanlagen verwendet werden, gehören insbesondere die wesentlichen Krankheiten wie Clostridiose, Kokzidiose, Schweinedysenterie, und Salmonellose. Je nach Tierart, zu deren Überwachung die Analysesoftware eingesetzt werden soll, kann die Auswahl der von der Analysesoftware berücksichtigten Leistungsindikatoren unterschiedlich sein und hängt, je nach implementierungsvariante, von den definierten Regeln oder dem Trainingsdatensatz ab, auf welchem die Analysesoftware beruht. Analysesoftware zur Überwachung von Schweinen, Kälbern, Ferkeln, Kühen, Mastrindern gehören z.B. Schweine/Kälber Salmonelose, Schweine Lawsonia Erkrankung, Kälber Kryptosporidiose, und andere. Gemäß mancher Ausführungsformen der Analysesoftware ist diese auch zum universalen Einsatz in Ställen und Haltungsanlagen sowohl für Geflügel als auch für Säugetiere konzipiert und deckt eine entsprechend breite Menge an Leistungsindikatoren ab. Die nachfolgenden Fotos zeigen Ausscheidungen von Masthähnchen und Puten, die Analysesoftware kann jedoch auf analoge Weise auch so ausgebildet (trainiert oder explizit programmiert) sein, dass sie entsprechende Bilder von Ausscheidungen von Kälbern, Ferkeln, und/oder Schweinen in analoger Weise verarbeitet ohne diese Ausführungsformen im folgenden explizit bildlich darzustellen und zu erläutern.

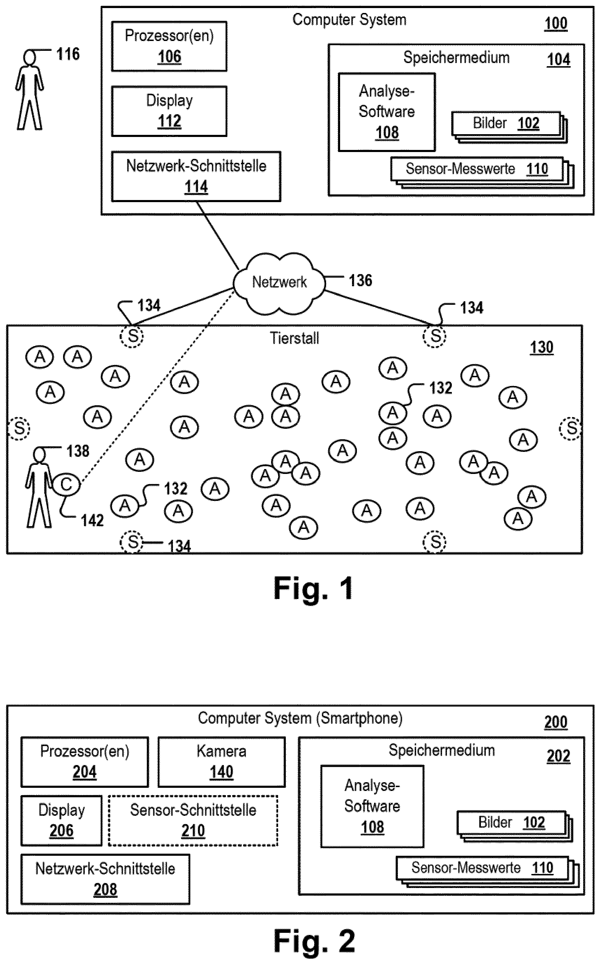

Figur 1 zeigt ein Computersystem mit einer Analysesoftware 108 zur Überwachung der Gesundheit von Tieren 132 eines Tierstalls 130. Bei dem Tierstall kann es sich zum Beispiel um einen großen Stall eines Mastbetriebes für Masthähnchen, Puten, Schweine oder Rinder handeln. Insbesondere bei großen Mastbetrieben ist die Gefahr der Ausbreitung von Infektionskrankheiten und der damit verbundene wirtschaftliche Schaden groß. In dem Tierstall befinden sich eine Vielzahl von Tieren, typischerweise der gleichen Art, die hier mit dem Symbol "A" angedeutet sind. Ein oder mehrere Angestellte 138 des Tiermastbetriebes kontrollieren regelmäßig den Tierstall, etwa um zu überprüfen, ob die Düsen der Tränkanlage noch durchlässig, die Einstreu frisch und/oder genügend Futter an den Futterstellen vorhanden ist. Vorzugsweise führt der Arbeiter 138 eine Bilderfassungseinheit mit sich, zum Beispiel in Form einer Kamera eines Smartphones 142. Das Smartphone ist vorzugsweise über eine Netzwerkverbindung, insbesondere das Mobilfunknetz und/oder über eine lokale WLAN Verbindung, mit dem Internet 136 verbunden.

Außerdem beinhaltet das in Figur 1 dargestellte verteilte Computersystem ein weiteres Computersystem 100, welches zum Beispiel als Server-Computersystem oder als normales Desktop-Computersystem eines weiteren Nutzers 116 ausgebildet sein kann. Der weitere Nutzer 116 kann beispielsweise ein geschulter Mitarbeiter sein, der die Gesundheit der Tiere von ein oder mehreren Tierställen des Mastbetrieb überwachen soll, und der nicht notwendigerweise vor Ort, also in der Nähe des Tierstalls 130, ist. Das Computersystem 100 beinhaltet ein oder mehrere Prozessoren 106, typischerweise auch ein Display 112 sowie eine Netzwerkschnittstelle 114, mit dem es mit einem Netzwerk 136 verbunden ist. Außerdem beinhaltet es ein Speichermedium 104, typischerweise eine Festplatte, die eine Vielzahl von Bildern 102 von Ausscheidungen der Tiere 132 beinhaltet. Vorzugsweise werden die Bilder 102 in einer Datenbank, insbesondere einer relationalen Datenbank, gespeichert. Diese Datenbank kann noch weitere Daten beinhalten, insbesondere Messwerte 110 von Sensoren 134, welche optional innerhalb oder in räumlicher Nähe zu dem Tierstall 130 angebracht sind. Bei den Sensoren kann es sich beispielsweise um Thermometer handeln.

Nach einer Ausführungsform handelt es sich bei den Sensoren um Sensoren, die die Menge der aktuell oder über einen gewissen Zeitraum verabreichten Menge an Futter oder Tränkwasser messen. Dies kann vorteilhaft sein, da reduzierter Appetit oder gesteigerter Durst frühe Anzeichen einer Infektions- oder Durchfallerkrankung sein können. Nach einer weiteren Ausführungsform können die Sensoren Sensoren zur Erfassung des Ammoniakgehalts der Luft umfassen. Eine Durchfallerkrankung ist häufig mit einer erhöhten Ausscheidung von Eiweiß verbunden, das in der Einstreu des Stalls dann zu Ammoniak umgesetzt wird und von der Analysesoftware als Messwert empfangen und neben den optischen Parametern des Kots während der Analyse ausgewertet wird, um durch eine Kombination der optischen Eigenschaften der Ausscheidungen und dem Ammoniakgehalt der Luft eine besonders hohe Analyses- und Vorhersagegenauigeit zu erzielen.

Außerdem beinhaltet das Speichermedium 104 eine Analysesoftware 108, die dazu ausgebildet ist, auf die Bilder 102 zuzugreifen um diese sowie optional weiter vorhandene prädiktive Daten wie zum Beispiel die Messwerte 110 oder Tier-bezogene Metadaten (wie zum Beispiel die derzeit verabreichten Substanze, also Tierfuttertyp, Futterzusatzstoffe, Medikamente, etc., deren Dosierung oder Verabreichungsart) spezifizieren.

Im einfachsten Fall beinhaltet das Smartphone des Nutzers 138 keine Client-Applikation, die mit der Analysesoftware 108 interoperabel ist. Auf dem Smartphone ist aber die heutzutage praktisch bei allen Smartphone-Modellen bereits integrierte Smartphone-Kamera samt zugehöriger Kamerasoftware installiert. Der Nutzer kann die bereits vorhandende Software zum Erstellen von Fotos mittels eines Smartphones verwenden, um im Zuge der regelmäßigen Kontrollgänge, also typischerweise einmal oder mehrmals am Tag, mehrere Bilder von Ausscheidungen der Tiere anzufertigen. Vorzugsweise werden die Bilder der Ausscheidungen an mehreren unterschiedlichen Stellen des Tierstalls aufgenommen. Im Anschluss daran kann der Nutzer 138 die aufgenommenen Bilder über das Netzwerk 136 an das Computersystem 100 übertragen. Beispielsweise kann der Nutzer hierfür eine E-Mail an eine E-Mail-Adresse des Nutzers 116 schicken, welche die Bilder der Ausscheidungen als Anlage beinhaltet. Der Nutzer 116 kann daraufhin die Bilder in die Datenbank speichern, sodass die Analysesoftware auf die Bilder zugreifen kann. Vorzugsweise sind die Bilder 108 der Ausscheidungen mit einer Zeitangabe verknüpft gespeichert, welche den Zeitpunkt der Bilderfassung zumindest näherungsweise angibt.

Der Nutzer 116 kann, nachdem die aktuellen Bilder der Ausscheidungen in der Datenbank gespeichert wurden, die Analysesoftware 108 aufrufen. Die Analysesoftware kann in jeder gängigen Programmiersprache implementiert sein, beispielsweise in Java, C++, C#, und anderen. Die Analysesoftware liest sämtliche Bilder von den Ausscheidungen der Tiere, die innerhalb eines vordefinierten Zeitraumes von zum Beispiel einer Woche aufgenommen und in der Datenbank gespeichert wurden, und verwendet diese als Eingabe in einem anschließenden Analyseschritt. Optional können außerdem Sensormesswerte 110 und Metadaten, die in der Datenbank mit den Bildern 102 verknüpft gespeichert sind, von der Analysesoftware gelesen und bei der Analyse ausgewertet werden. Die Messdaten und/oder Metadaten sind dabei in der Datenbank mit denjenigen Bildern 102 verknüpft gespeichert, die zu einem Zeitpunkt aufgenommen wurden, der sich in zeitlicher Nähe zur Erfassung der Metadaten bzw. der Messwerte befindet.

In manchen Ausführungsformen umfasst die Analyse durch die Analysesoftware 108 eine Berechnung einer empfohlenen Aktion. Eine empfohlene Aktion ist eine manuell oder automatisch durchzuführende Aktion, welche geeignet ist, den aktuellen physiologischen Zustand der Tiere zu bewahren oder diesen zu verbessern. Die Berechnung der empfohlenen Aktion erfolgt in Abhängigkeit der von der Analysesoftware gelesenen Bilder 102 sowie, sofern vorhanden, weiterer Daten, zum Beispiel der Messwerte 110 und/oder der Angaben zu aktuell verabreichten Substanzen. Zusätzlich oder alternativ dazu umfasst die Analyse durch die Analysesoftware eine Vorhersage einer Ausprägung eines Leistungsindikators eines oder mehrere der Tiere 132 in dem Tierstall 130. Beispielsweise kann die Analysesoftware so konfiguriert sein, dass die Vorhersage sich auf einen bestimmten künftigen Moment gerechnet vom aktuellen Moment der Analyse aus bezieht, beispielsweise auf einen Moment 2 oder 3 Tage in der Zukunft. Auch bezüglich der empfohlenen Aktion kann es sich um eine Aktion handeln, deren Durchführung an einem künftigen Zeitpunkt, zum Beispiel in 2 oder 3 Tagen ab Durchführung der Analyse, empfohlen wird. Es kann sich aber auch um eine Aktion handeln, deren sofortige Durchführung empfohlen wird. Der genaue Zeitpunkt der Empfehlung hängt von der Art der Aktion und von der Implementierung der Analysesoftware ab, insbesondere also von den explizit spezifizierten Regeln (bei einem regelbasierten System) oder von der Beschaffenheit und Annotierung des Trainingsdatensatzes, der zur Erstellung der Analysesoftware mittels Maschine-Learning verwendet wurde.

Vorzugsweise werden beide Arten der Berechnung bzw. Vorhersage im Zuge einer Analyse durchgeführt. Es ist möglich, dass als Ergebnis der Analyse nicht empfohlen wird, eine Aktion durchzuführen, da die aktuellen und vorhergesagten Leistungsindikatoren gut sind sodass kein Handlungsbedarf besteht. In manchen Ausführungsformen kann der Nutzer auch über eine GUI vorgeben, oder es kann in einer Konfigurationsdatei spezifiziert sein, ob die Analysesoftware nur eine empfohlene Aktion berechnen und ausgeben soll, oder alternativ eine künftige Ausprägung eines Leistungsindikators berechnen und ausgeben soll, oder beides.

Die Ausgabe kann beispielsweise über das Display 112 des Computersystems 100 an den Nutzer 116 erfolgen, sodass dieser geeignete Maßnahmen ergreifen kann, um den Gesundheitszustand der Tiere aufrechtzuerhalten oder zu verbessern. Bei dem Leistungsindikator kann es sich beispielsweise um das Vorliegen einer bestimmten Krankheit bei ein oder mehreren Tieren 132 in dem Tierstall handeln.

Beispielsweise kann die Analysesoftware dazu ausgebildet sein, anhand der Bilder 102 der Ausscheidungen der Tiere das Vorliegen und den künftigen Ausprägungsgrad verschiedener Krankheiten zu berechnen. Bei den Krankheiten handelt es sich insbesondere Kokzidiose (Befall mit Kokzidien), Clostridiose (Befall mit Clostridien), Durchfall oder Sepsis bedingt durch verschiedene Bakterien wie insbesondere Kokzidien, Clostridien, Eschericha coli, und/oder Salmonellen).

Für den Fall, dass die Analysesoftware beispielsweise einen aktuellen Befall einiger Masthähnchen mit Kokzidien entdeckt und einen populationsweiten Ausbruch der Krankheit in 2-3 Tagen vorhersagt, gibt die Analysesoftware eine Warnmeldung über den Bildschirm 112 an den Nutzer 116 aus. Die Warnmeldung beinhaltet einen Hinweis, daß mit einem populationsweiten Ausbruch der Kokzidiose in dem Tierstall 130 in den nächsten 2-3 Tagen zu rechnen ist.

Der Erreger der Kokzidiose, Eimeria tenella, verursacht blutende Entzündung des Dünndarms oder Blinddarms insbesondere von Hühnerküken im Alter von 2 bis 6 gar bis 8 Wochen. Kokzidiose geht mit blutigem Durchfall einher, der im Fall einer Blinddarmkokzidiose zu einer Mortalitätsrate von bis zu 80 Prozent durch Verbluten führen kann.

Eine Kokzidioseinfektion des Dünndarms tritt ebenfalls vorwiegend bei Jungtieren, aber auch bei geschwächten Alttieren auf. Sie äußert sich in einer Entzündung des Dünndarms, bei der es zu Blutungen und Gewebszerfall kommen kann. Verantwortlich hierfür ist das Auftreten verschiedener Kokzidienarten, wie Eimeria necatrix und Eimeria tenella, Eimeria brunetti und Eimeria gallopavonis. Die letztgenannten beiden Stämme führen zu schleimigen Durchfällen, die jedoch nur selten bluten. Die Mortalitätsrate bei Dünn- und Enddarmkokzidiosen liegt bei 30 Prozent aufgrund von Flüssigkeitsverlust.

Aufgrund des charakteristischen Stuhlbildes (aufgrund des Blutes/oxidierten Hämoglobins stark dunkel verfärbte Kot im Falle der Blinddarm-Kokzidiose bzw. der schleimig-dünnflüssigen Konsistenz des Kots bei Dünndarm-Kokzidiose) kann die Analysesoftware das aktuelle vorliegen oder einen wahrscheinlichen künftigen Ausbruch von Kokzidiose und ihrer Unterformen erkennen und vorhersagen. Die Berücksichtigung weiterer Parameter, insbesondere Messwerte wie etwa die Menge des pro Tier oder pro Stall und Tag aufgenommenen Futters, werden nach Ausführungsformen der Erfindung ebenfalls bei der Analyse berücksichtigt. Appetitlosigkeit, die mit einer verringerten Futteraufnahme einhergeht, kann als weiterer Messparameterwert berücksichtigtes werden und ist ein Indiz für eine mögliche Kokzidieninfektion bei Hühnern.

Blutiger Durchfall bei Küken ist in den meisten Fällen auf eine Infektion mit Kokzidien zurückzuführen, während Durchfälle, wie sie bei der Dünn- und Enddarmkokzidiose auftreten, auch von der Fütterung herrühren können. Deshalb kann es vorteilhaft sein, auch Metadaten in der Analyse zu berücksichtigen. Zu diesen gehören beispielsweise die Tierart, das Alter der Tiere, die Art des derzeit verabreichten Futters und andere Informationen. Beispielsweise kann die Analysesoftware 108 dazu ausgebildet sein, eine GUI über das Display 112 anzuzeigen, über welche der Nutzer 116 die besagten Metadaten eingeben kann, sodass sie zusammen mit den Bildern 102 in der Datenbank gespeichert und von der Analysesoftware 108 ebenfalls ausgewertet werden können. Alternativ oder ergänzend zur GUI kann die Analysesoftware über eine Schnittstelle verfügen, über welche die besagten Daten auch automatisiert von einem Speichermedium, von einer anderen Software (z.B. Stallmanagementsoftware) und/oder von Sensoren oder Stalleinrichtungen (z.B. Fütterungs- und Wasseranlage) empfangen werden.

Die Nachricht, welche die Analysesoftware ausgibt, kann neben der Vorhersage des Clostridienbefall vorzugsweise auch eine empfohlene Aktion beinhalten, also zum Beispiel den Hinweis, dass sofort kokzidienwirksame Medikamente dem Futter oder Tränkwasser zugesetzt werden sollen. Optional könnte die Nachricht auch mehrere empfohlene Aktionen beinhalten, z.B. den Hinweis, dass die zusätzliche Gabe von Multivitamin- und Mineralpräparaten empfohlen wird, um den Elektrolytverlust zu kompensieren und um eine möglichst rasche Genesung zu erzielen. Da Kokzidien außerordentlich umweltstabil sind und viele Jahre lang in der Umgebung überleben können, kann die Nachricht auch eine Empfehlung zur Desinfektion des betroffenen Stalls beinhalten.

Bei der "Ausprägung" des Leistungsindikators "Kokzidioseerkrankung" kann es sich also um eine nähere Charakterisierung der Krankheit (Blinddarm-Kokzidiose oder Dünndarm/Enddarm-Kokzidiose) und/oder um eine Vorhersage der Stärke der Krankheit zu einem bestimmten Zeitpunkt handeln, da die jeweilige Zusammensetzung der Erreger Einfluss sowohl auf die Stärke der Erkrankung als auch auf die Konsistenz des Kots hat.

Figur 2 zeigt ein Computersystem 200, welches ebenso wie das Computersystem 100 der Figur 1 eine Analysesoftware 108 beinhaltet. Bei dem Computersystem 200 handelt es sich jedoch um ein portables Computersystem wie zum Beispiel ein Smartphone mit integrierter Bilderfassungseinheit 140, welches der Nutzer 138 bei seinem Kontrollgang durch den Stall mit sich führt. Das portable Computersystem 200 beinhaltet ein Speichermedium 202, auf welchen die Analysesoftware 108 sowie die aktuell und in der Vergangenheit erfassten Bilder 102 der Ausscheidungen der Tiere gespeichert sind, zum Beispiel in Form mehrerer Datensätze einer relationalen Datenbank. Optional kann das Computersystem über eine Schnittstelle 210 verfügen, über welches es Sensor-Messwerte 110 von einem oder mehreren Sensoren 134 empfangen kann. Die Sensor Messwerte 110 können dann ebenfalls auf dem Speichermedium 202 bzw. in der darauf befindlichen Datenbank gespeichert werden. Das Computersystem verfügt über einen oder mehrere Prozessoren 204, eine Anzeigevorrichtung 206 sowie vorzugsweise auch eine Netzwerkschnittstelle 208. Bei der Sensorschnittstelle 210 kann es sich zum Beispiel um eine Schnittstelle zur Nahfeldkommunikation wie zum Beispiel eine Bluetooth-Schnittstelle oder eine RF (Hochfrequenz) Schnittstelle handeln. Es ist aber auch möglich, dass die Sensorschnittstelle 210 als Netzwerkschnittstelle 208 ausgebildet ist oder dass gar keine Messwerte 110 empfangen werden. Die Analysesoftware 108 ist als sogenannte "Standalone"-Softwareapplikationen ausgebildet, d. h., auch für den Fall, dass keine Netzwerkverbindung verfügbar ist, kann die Software 108 eigenständig die Bilder 102, die von der Kamera 140 von den Ausscheidungen der Tiere 132 aufgenommen werden, empfangen und im Zuge eine Analyse auswerten. Das Ergebnis der Analyse, eine empfohlene Aktion und/oder eine vorhergesagte Ausprägung eines Leistungsindikators der Tiere, werden sodann von der Analysesoftware 108 ausgegeben. Die Ausgabe kann beispielsweise über die Anzeige 206 an den Nutzer des Computersystems 200 erfolgen. Die in Figur 2 dargestellten Ausführungsform hat den Vorteil, dass auch in Tierställen bzw. Gebieten, in welchen keine Netzwerkverbindung oder Mobilfunkverbindung verfügbar ist, ein Nutzer des Computersystems 200 in die Lage versetzt wird, auf einfache und intuitive Weise und ohne spezielle Schulung Krankheiten oder andere gesundheitliche Probleme der Tiere frühzeitig zu erkennen und geeignete Gegenmaßnahmen zu treffen, in dem er einfach mit seiner Smartphonekamera 140 mehrere Bilder von Ausscheidungen der Tiere aufnimmt und diese zu Analyse in die Analysesoftware 108 eingibt. Vorzugsweise beinhaltet die Analysesoftware 108 eine Funktionalität zur Ansteuerung der Kamera 140, sodass die Kamerafunktionalität in die Analysesoftware integriert ist, was die Bedienbarkeit erleichtert.

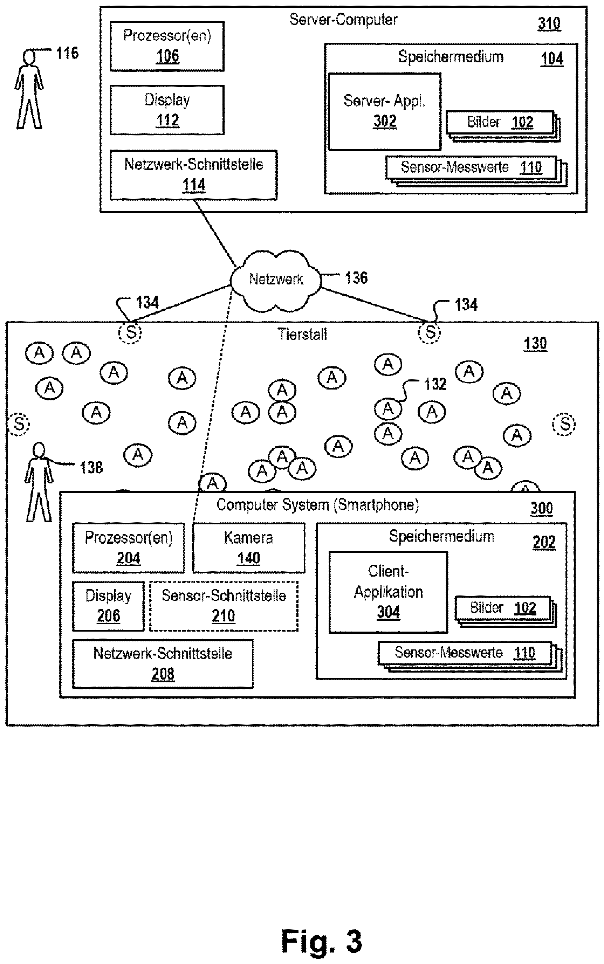

Figur 3 zeigt ein verteiltes Computersystem mit einer Analysesoftware, die in Form einer Client-Server-Architektur ausgebildet ist. Dies bedeutet, dass einige der Funktionalitäten der Analysesoftware 108 nun von einer Server-Applikation 302 übernommen werden, welche auf einem Server-Computer 310 installiert und/oder instanziiert ist, und dass einige andere Funktionalitäten der Analysesoftware 108 von einer Client-Applikation 304, die auf einem Client-Computersystem 300 installiert und/oder instanziiert ist, übernommen werden. Das Client-Computersystem ist vorzugsweise als portables Computersystem, zum Beispiel als Smartphone oder Tablett-Computer eines Nutzers 138 ausgebildet. Die Client-Applikation 304 ist mit der Server-Applikation 302 interoperabel, was bedeutet, dass beide Applikationen dazu ausgebildet sind, in koordinierter Weise über ein Netzwerk 136 Daten und Steuerbefehle auszutauschen, um in Interaktion die bereits beschriebene Analysefunktionalität der Analysesoftware 108 bereitzustellen.

Vorzugsweise ist die Server-Applikation 302 dazu ausgebildet, mit einer Vielzahl von Client-Applikationen zu interagieren, wobei der Datenaustausch sitzungsgebunden ist und eine Client-Applikation keinen Zugriff auf die Daten hat, welche andere Client-Applikationen mit der Server Applikation austauscht. Typischerweise ist eine vorherige Registrierung der Nutzer der jeweiligen Client-Applikationen an der Server-Applikation erforderlich, bevor die Analysefunktionalität ausgeführt werden kann.

Typischerweise ist die Funktionalität der Analysesoftware so auf die Client- und die Server-Applikation verteilt, dass die Client-Applikation 304 dazu ausgebildet ist, eine Bilderfassungseinheit 140, die Bestandteil des Client-Computersystems 300 ist oder mit diesem operativ verbunden ist, anzusteuern, um diese zur Erfassung von einem oder mehreren Bildern von Ausscheidungen der Tiere 132 zu veranlassen. Beispielsweise kann die Client-Applikation 304 eine graphische Benutzeroberfläche haben, welche es dem Benutzer 138 ermöglicht, ein oder mehrere Bilder von ausgewählten Stellen des Bodens des Tierstalls über die Kamera 140 zu erfassen und von der Kamera auf die Client-Applikation 304 zu übertragen. Optional können die erfassten Bilder lokal auf dem Speichermedium 202 der Client-Applikation gespeichert werden. Außerdem kann die Client-Applikation 304 in manchen Ausführungsformen dazu ausgestaltet sein, Sensormesswerte 110 von ein oder mehreren Sensoren 134 zu empfangen und lokal zu speichern. Dies kann, wie schon beschrieben, über eine Netzwerkschnittstelle und/oder eine Nahfeldschnittstelle 210 geschehen. Alternativ dazu oder zusätzlich kann die GUI der Client-Applikation 304 mehrere Eingabefelder beinhalten, welche es dem Nutzer 138 ermöglichen, Metadaten bezüglich der Tiere oder des Tierstalls in die Client-Applikation einzugeben. Zu diesen Metadaten gehören insbesondere Tierart, Alter der Tiere, aktuell verabreichte Medikamente, Futtermittel und Futterzusatzstoffe, Menge des aktuell pro Tier oder Tierstall verabreichten Futters oder Tränkwassers pro Tag.

Die Server-Applikation ist dazu ausgebildet, die Bilder 102 über das Netzwerk 136 von der Client-Applikation (oder mehreren Client-Applikationen) zu empfangen und vorzugsweise in einer Datenbank des Server-Computers zu speichern. Die Speicherung erfolgt dabei vorzugsweise so, dass ein Identifikator der Client-Applikation, welche auch als Nutzer-ID oder Tierstall-ID ausgebildet sein kann, sowie ein ungefährer Zeitpunkt der Aufnahme der Bilder 102 mit den empfangenen Bildern 102 verknüpft gespeichert werden. Die Server-Applikation führt dann in Reaktion auf einen Triggermechanismus eine Analyse der empfangenen Bilder 102 durch. Der Trigger-Mechanismus kann beispielsweise der Empfang der Bilder oder eine Nutzer-Interaktion mit der Server-Applikation oder ein Steuerbefehl eines automatischen Zeitgebers (zum Beispiel "Cron-job") sein. Vorzugsweise werden nicht nur die aktuell von der Client-Applikation 304 empfangenen Bilder, sondern sämtliche von dieser Client-Applikation innerhalb eines vordefinierten Zeitraums empfangenen Bilder der Ausscheidungen der Tiere analysiert. In manchen Ausführungsformen kann die Client-Applikation 304 und/oder die Server-Applikation 302 über eine FilterFunktion verfügen, welche Bilder herausfiltert und nicht an die Server-Applikation weiterleitet bzw. bei der Analyse nicht berücksichtigt, welche eine zu geringe Auflösung haben oder welche nur einen zu kleinen Bildanteilhaben, der tatsächlich die Ausscheidungen darstellt.

In manchen Ausführungsformen können alle Messwerte zunächst von der Client-Applikation empfangen und dann über das Netzwerk an die Server-Applikation übertragen werden. In anderen Ausführungsformen ist die Server-Applikation dazu ausgebildet, über eine Netzwerkschnittstelle 114 Sensor-Messwerte 110 von den Sensoren eines Tierstalls oder Tiergehege zu empfangen, welche der Client-Applikation 304 zugeordnet sind. Es ist auch möglich, dass die Server-Applikation einen Teil der Messwerte 110 von der Client-Applikation empfängt und einen anderen Teil direkt von den Sensoren 134 über die Netzwerkschnittstelle 114. Eine Zuordnung von Messwerten 110, gegebenenfalls ebenfalls erhaltenen Metadaten und digitalen Bildern 102 zu einer bestimmten Client-Applikation und/oder zu einem bestimmten Tierstall kann beispielsweise über eine gemeinsame Client-Applikation-ID erfolgen, welche als Bestandteil sowohl der Bilder 102 als auch der Metadaten und der Messwerte an die Server-Applikation übertragen werden.

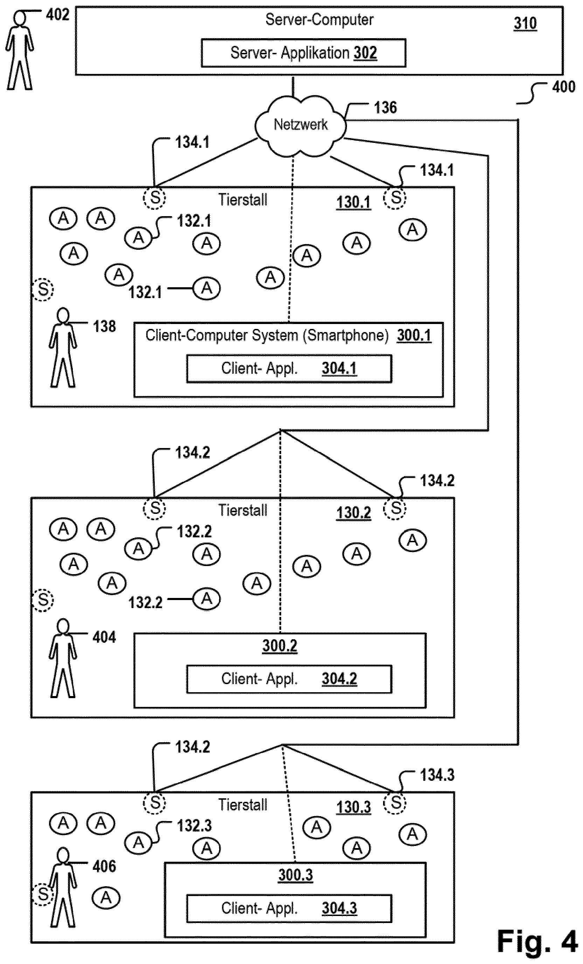

Figur 4 ist ein Blockdiagramm eines verteilten Computersystems, welches, wie das bereits in Figur 3 dargestellte verteilte Computersystem einen Client-Computer 300.1 und einen Server-Computer 310 beinhaltet. Die Analysesoftware 108 ist in Form einer Client-Server-Architektur ausgebildet. Das verteilte System umfasst weitere Client-Computersysteme 300.2, 300.3, welche jeweils anderen Client-Applikationen 304.2, 304.3, anderen Tierställen 130.2,130.3 und gegebenenfalls auch anderen Nutzern 404, 406 zugeordnet sind.

Diese Ausführungsform hat den Vorteil, dass empirische Daten, insbesondere Bilddaten von Ausscheidungen der gehaltenen Tiere, von Sensoren erfasste Messwerte, beobachtete Ausprägungen von Leistungsindikatoren wie auch Metadaten (wie zum Beispiel Tierfutter, Futterzusatzstoffe, Tierart, Tieralter und Ähnliches) zentral in einer Datenbank des Server-Computers 310 gespeichert werden können. Vorzugsweise beinhaltet die Server-Applikation erweiterte Analysefunktionen, insbesondere Clusteranalyseverfahren. Durch Anwendung verschiedener Clusteranalyseverfahren auf die vorhandenen Daten, zu welchen insbesondere Bilddaten von Ausscheidungen, Messdaten, Metadaten sowie auch Daten (insbesondere Bilddaten) von beobachteten Ausprägungen von Leistungsindikatoren gehören, ist es möglich, Gruppen (sogenannte Cluster) von Tierställen ähnlichen Leistungsniveaus der Tiere zu ermitteln. Ein Vergleich der aktuell verwendeten Futtermittel, Veterinärpräparate und Futterzusatzstoffe, die den Tieren der einzelnen Cluster verabreicht werden, ermöglicht es, festzustellen, ob eine bestimmte Substanz bzw. Futterzusammensetzung oder auch ein Futtermittlelieferant oder Zuchtunternehmen mit besonders hoher oder besonders niedriger Leistung der Tiere korreliert. Dadurch ist es möglich, anhand objektiver, empirischer Daten Futtermittel oder Futtermittelzusatzstoffe oder Lieferanten zu erkennen, die für eine bestimmte Art von Tieren oder für eine bestimmte Ausgangslage (zum Beispiel Verdacht auf Befall mit bestimmten Krankheitserregern) einen günstigen Effekt auf die Tiergesundheit haben.

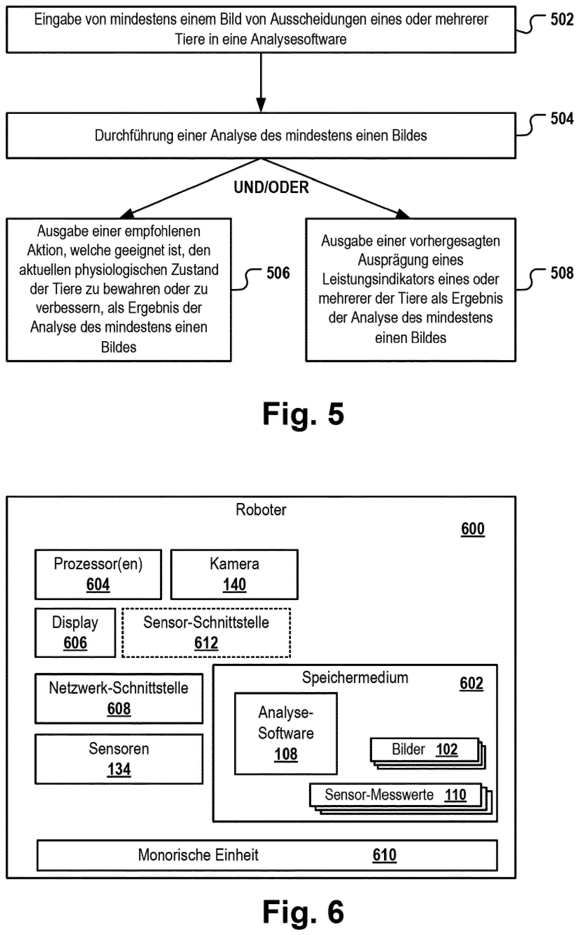

Figur 5 ein Flussdiagramm eines Verfahrens zur Haltung von Tieren. Insbesondere kann das Verfahren zur Überwachung der Gesundheit und Leistungsfähigkeit von Tieren verwendet werden. In einem ersten Schritt 502 erfolgt eine Eingabe von einem oder mehreren Bildern 102, die Ausscheidungen von Tieren 132 zeigen, in eine Analysesoftware 108. Beispielsweise kann die Analysesoftware die Bilder direkt von einer lokalen Bilderfassungseinheit beziehen, oder von einem lokalen Datenspeicher lesen, oder über ein Netzwerk von einer Client-Applikation oder einer Roboter-Applikation beziehen. Es ist auch möglich, dass die Bilder über eine E-Mail Applikation oder, in "real time", über eine APP Applikation an den Rechner übertragen werden, auf welchem die Analysesoftware instanziiert ist, und dann semiautomatisch von einer E-Mail Applikation dieses Computers an die Analysesoftware übertragen wird. In einem nächsten Schritt 504 führt die Analysesoftware eine Analyse der eingegebenen Bilder durch, um ein Analyseergebnis zu bekommen. Das Analyseergebnis kann eine oder mehrere empfohlene Aktionen vorschlagen, welche geeignet sind, den aktuellen physiologischen Zustand der Tiere zu bewahren oder zu verbessern, und/oder eine vorhergesagte Ausprägung eines Leistungsindikators der Tiere, beinhalten. Das Analyseergebnis hängt dabei von den empfangenen Bildern der Ausscheidung sowie, sofern vorhanden, von Messwerten 110 und/oder weiteren Metadaten ab. Die Metadaten können Substanzen oder Substanzmischungen, die den Tieren zum Zeitpunkt der Analyse verabreicht wurden, beinhalten. Vorzugsweise beziehet sich die Analyse auf Bilder und die optionalen Messwerte und/oder Metadaten, die innerhalb eines definierten Zeitraumes vor der Analyse empfangen wurden, z.B. innerhalb von 7 Tagen vor der Durchführung der Analyse. Schließlich wird in Schritt 506 die empfohlene Aktion und/oder in Schritt 508 die vorhergesagte Ausprägung ausgegeben. Die ausgegebenen Analyseergebnisse können also entweder die empfohlene Aktion oder die vorausgesagte Ausprägung des Leistungsindikators oder beides umfassen. Die Ausgabe kann beispielsweise über eine GUI der Analysesoftware an einen Nutzer erfolgen.

Figur 6 zeigt ein Blockdiagramm eines mobilen Roboters 600 zum Gesundheitsmonitoring bei Tieren. Beispielsweise kann der Roboter 600 in einem Tierstall 130 eingesetzt werden, wie er im Hinblick auf Figuren 1, 2 und 3 beschrieben ist. Der Roboter kann beispielsweise verwendet werden, um einige der Arbeiten von Arbeitern 138 zu übernehmen oder zu begleiten, insbesondere einige Kontrollgänge. Der Roboter beinhaltet ein oder mehrere Prozessoren 604 und optional eine Anzeigevorrichtung 606, über welche ein Nutzer mit dem Roboter interagieren kann. Ebenfalls optional beinhaltet der Roboter eine Netzwerkschnittstelle 608 um Daten mit einem Netzwerk, insbesondere dem Internet, austauschen zu können. Beispielsweise kann die Netzwerkschnittstelle 608 von der Roboter Software 108 dazu verwendet werden, Bilder 102 von Ausscheidungen der Tiere im Tierstall, die von ein oder mehreren Kameras 140 des Roboter 600 erfasst wurden, über das Netzwerk 136 an eine Server-Applikation 302 zu senden. Bei der Roboter Software 108 kann es sich um eine Analysesoftware handeln, wie diese für Ausführungsformen der Erfindung bereits beschrieben wurde. Die Analysesoftware es insbesondere dazu ausgebildet, die von der Kamera 140 erfassten Bilder 102 zu analysieren und eine empfehlende Aktion und/oder eine vorhergesagte Ausprägung eines Leistungsindikators auszugeben. Die Ausgabe kann Beispiel über eine GUI mittels des Display 606 an einen Nutzer erfolgen. Der Roboter kann ein Speichermedium 602 umfassen, auf welchem die erfassten Bilder 102 lokal gespeichert werden. Optional kann der Roboter außerdem eine Sensorschnittstelle 612 zu ein oder mehreren Sensoren 134 des Tierstalls besitzen. Bei der Sensorschnittstelle 612 kann es sich insbesondere um eine Schnittstelle zu Nahfeldkommunikation, zum Beispiel eine Bluetooth Schnittstelle oder eine RF Schnittstelle, handeln. Ergänzend oder alternativ zur Sensorschnittstelle 612 kann der Roboter auch eigene Sensoren 134 beinhalten, zum Beispiel ein Thermometer zur Messung der Bodentemperatur, Feuchtigkeitsmessgeräte, und Ähnliches.

Der Roboter verfügt über eine motorische Einheit 610, zum Beispiel motorbetriebene Räder oder Ketten, die es dem Roboter ermöglichen, weitgehend autonom den Tierstall zu durchqueren. Der Pfad der Durchquerung kann in manchen Ausführungsformen fest in der Robotersoftware vorgegeben sein. Es kann aber auch sein, dass der Bewegungspfad des Roboters nicht explizit festgelegt ist, sondern von der Roboter Software dynamisch errechnet wird anhand bestimmter Optimierungskriterien in Kombination mit dynamisch erkannten Hindernissen, die umfahren werden.

In manchen Ausführungsformen ist die Kamera 140 so ausgerichtet und in einer solchen Höhe positioniert, dass aufgenommene digitale Bilder einen Bereich des Bodens in der Nähe des Roboters abbilden. In manchen Ausführungsformen ist die Höhe und/oder Ausrichtung der Kamera veränderbar, wobei die Änderung der Höhe und/oder der Ausrichtung der Kamera manuell und/oder automatisch erfolgen kann. Vorzugsweise erfolgt die Änderung der Höhe oder der Ausrichtung automatisch und wird kontrolliert durch die Robotersoftware 108, welche eine Funktion zur Analyse der Qualität der von der Kamera 140 erfassten Bilder beinhaltet. Ist die Auflösung zu gering oder der Anteil des Bildes, der tatsächlich die Ausscheidungen von Tieren zeigt zu klein, wird die Höhe und/oder die Ausrichtung der Kamera automatisch so angepasst, dass die nächsten Bilder einen hinreichend großen Bildbereich haben, welche die Ausscheidungen in hoher Auflösung und hinreichenden Kontrast zeigen. Zusätzlich oder alternativ zu der Höhe oder Ausrichtung der Kamera kann auch der (optische oder softwarebasierte) Zoom der Kamera automatisch oder manuell so verändert werden, dass die aufgenommenen Bilder die Qualitätskriterien der Robotersoftware erfüllen.

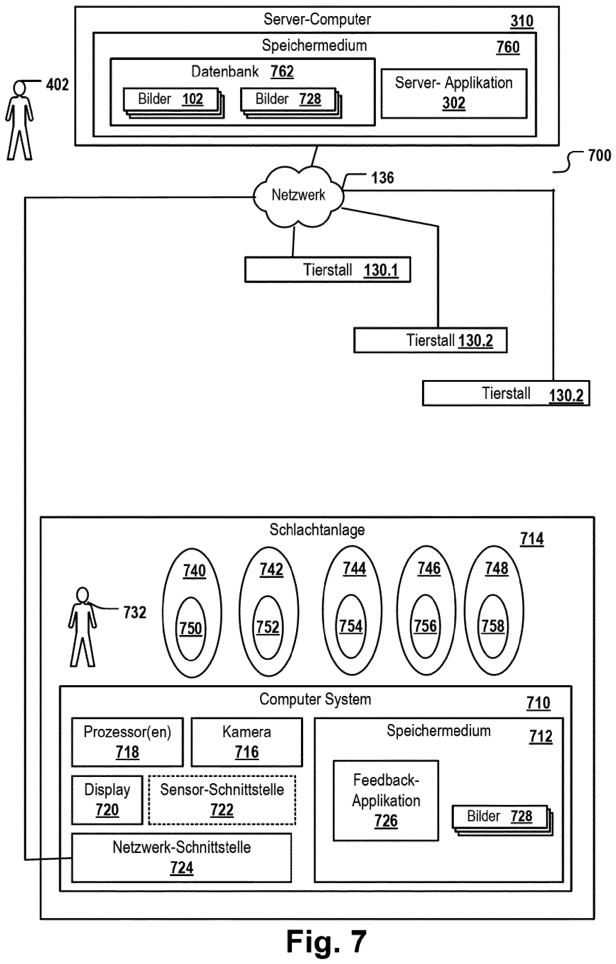

Figur 7 ist ein Blockdiagramm eines verteilten Computersystems 700 wie in Figur 3 bzw. 4 beschrieben. Das verteilte System 700 umfasst außerdem ein oder mehrere Computersysteme 710 eines Schlachthofs 714, bei welchen es sich vorzugsweise um mobile Computersysteme handelt. Es ist auch möglich, dass das System 700 weitere Computersysteme weiterer Schlachthöfe umfasst (hier nicht dargestellt). In Schlachthöfen ist es üblich, dass Mitarbeiter 732 des Schlachthofbetriebs routinemäßig oder stichprobenartig die Gesundheit der Schlachttiere dadurch prüfen, dass nach der Schlachtung eine Inspektion des Magen-Darmtrakts 750-758 der geschlachteten Tiere 740-748 durchgeführt wird.

Nach einer Ausführung der Erfindung ist einem Mitarbeiter 732 des Schlachthofs ein mobiles Computersystem 710 zugeordnet. Bei dem mobilen Computersystem 710 kann es sich insbesondere um ein Smartphone oder um einen Tablet-Computer handeln. Auf dem Computersystem 710 befinden sich ein oder mehrere Prozessoren 714, eine Anzeigevorrichtung 720 und eine Netzwerkschnittstelle 724. Außerdem umfasst das Computersystem 710 ein Speichermedium 712 mit einer Feedback-Applikation 726. Außerdem beinhaltet das Computersystem 710 eine Bilderfassungseinheit 716, zum Beispiel eine Smartphone-Kamera. Die Feedback Applikation 726 ist mit der Server-Applikation 302 interoperabel. Es kann sich beispielsweise um eine Variante der bereits oben beschriebenen Client-Applikation handeln, die über eine Zusatzfunktion verfügt, anstatt von oder ergänzend zu den Bildern der Ausscheidungen Bilder des Magen-Darmtrakt von Schlachttieren an die Server-Applikation zu senden. Der Nutzer 732 kann die Feedback-Applikation 726 starten und diese, zum Beispiel durch Interaktion mit einer GUI der Feedback Applikation, dazu veranlassen, mithilfe der Kameras 716 digitale Bilder 728 vom Magen-Darm-Trakt 750-758 frisch geschlachteter Tiere 740-748,132 anzufertigen. Diese Bilder 728 können optional lokal auf dem Speichermedium 712 gespeichert werden. In jedem Fall werden sie über das Netzwerk 136 von der Feedback-Applikation 726 an die Server-Applikation 302 gesendet. Die Bilder 728 stellen eine Feedback-Information dar, da sie Aufschluss über den Gesundheitszustand der Tiere, insbesondere was den Magen-Darm-Trakt angeht, zum Schlachttag geben. Die Bilder 728 stellen also empirisch erfasste Ausprägungen eines oder mehrerer Leistungsindikatoren zu einem bestimmten Zeitpunkt dar. Die Bilder 728 können beispielsweise mit einem Identifikator des Tierstalls oder Mastbetriebes, von welchem sie stammen, versehen sein, sodass sie in der Datenbank 762 des Server-Computers den Bildern 102 der Ausscheidungen der Tiere des gleichen Tierstalls oder Mastbetriebes einige wenige Tage vor ihrer Schlachtung über diesen Identifikator zugeordnet sind. Es ist auch möglich, eine Zuordnung der Bilder 102,728 sowie von Messdaten und Metadaten, sofern vorhanden, basierend auf einem Identifikator einzelner Tiere durchzuführen. Oft sind einzelne Tiere jedoch nicht individuell erfasst. Es hat sich herausgestellt, dass es in der Praxis auch ausreichend ist, eine Zuordnung der besagten Daten in der Datenbank 726 auf der Basis von Identifikatoren eines bestimmten Tierstalls oder Tiermastbetrieben durchzuführen, da der Gesundheitszustand der Tiere im gleichen Tierstall oft identisch oder sehr ähnlich ist, da er maßgeblich von der Abwesenheit oder Anwesenheit ansteckender Krankheiten bestimmt ist. Sind einige wenige Tiere betroffen, ist in der Regel in wenigen Tagen der gesamte Tierbestand infiziert. Deshalb ist eine exakte Zuordnung der in den Schlachthöfen gewonnenen Bilder 728 des Magen-Darmtrakt einzelner Tiere und der in den Tierställen gewonnenen Bilder 102 von den Ausscheidungen einzelner Tiere auf der Ebene von Individuen nicht erforderlich. In der Praxis ist eine Zuordnung basierend auf einem gemeinsamen Tierstall und einer zeitlichen Nähe der Erfassung der Bilder bzw. sonstigen Daten von einigen wenigen Tagen oder Stunden ausreichend.

Die Server-Applikation 302 ist beispielsweise als Machine-Learning-Applikation ausgebildet, welche in regelmäßigen Abständen auf einem Trainingsdatensatz neu trainiert wird. Der Trainingsdatensatz wird vorzugsweise kontinuierlich ergänzt und zwar sowohl mit Bildern von Ausscheidungen von Tieren ein oder mehrerer Tierställe als auch mit zugehörigen empirisch erfassten Ausprägungen von Leistungsindikatoren, insbesondere von Bildern, die in einem Schlachthof vom Magen-Darm-Trakt geschlachteter Tiere angefertigt wurden. Es ist auch möglich, dass diese Bilder vom Betreiber der Tierställe angefertigt werden. Beispielsweise kann es vorkommen, dass einzelne Tiere schon im Tierstall verenden und vom Betreiber des Tierstalls genauer untersucht werden um festzustellen, ob eine ansteckende Krankheit die Todesursache war. Bei dieser Gelegenheit können ebenfalls Bilder vom Magen-Darm-Trakt der verstorbenen Tiere angefertigt und an die Server-Applikation 302 übermittelt werden.

Bei der Machine-Learning-Software kann es sich insbesondere um eine Software, die auf einem oder mehreren neuronalen Netzen beruht, handeln. Gemäß manchen Ausführungsformen kann die Machine-Learning basierte Analysesoftware bestehende Programmbibliotheken nutzen, z.B. Caffe, eine Programmbibliothek für Deep Learning, Deeplearning4j (eine in Java programmierte Open-Source-Software, die auf einem neuronalen Netz beruht, die Java Bibliothek ELKI, GNU R und andere.

Eine Machine-Learning Software ist eine Software, welche sich anhand von Beispielen (einem Trainingsdatensatz) in einer Lernphase automatisch Wissen angeeignet hat, welches diese Software zur Lösung von Datenverarbeitungsproblemen anwenden kann. Beispielsweise kann die (trainierte) Software dazu ausgebildet und "trainiert" sein, Bildern von Ausscheidungen von Tieren und optional mit diesen verknüpften Zusatzinformationen (Metadaten, Messwerte), automatisch zu erkennen, welche Ausprägung ein Leistungsparameter der Tiere in naher Zukunft oder aktuell haben wird bzw. hat und welche Aktionen hilfreich sein können, die Gesundheit der Tiere zu fördern oder zu stabilisieren, sodass ein Leistungsabfall verhindert oder beseitigt wird.

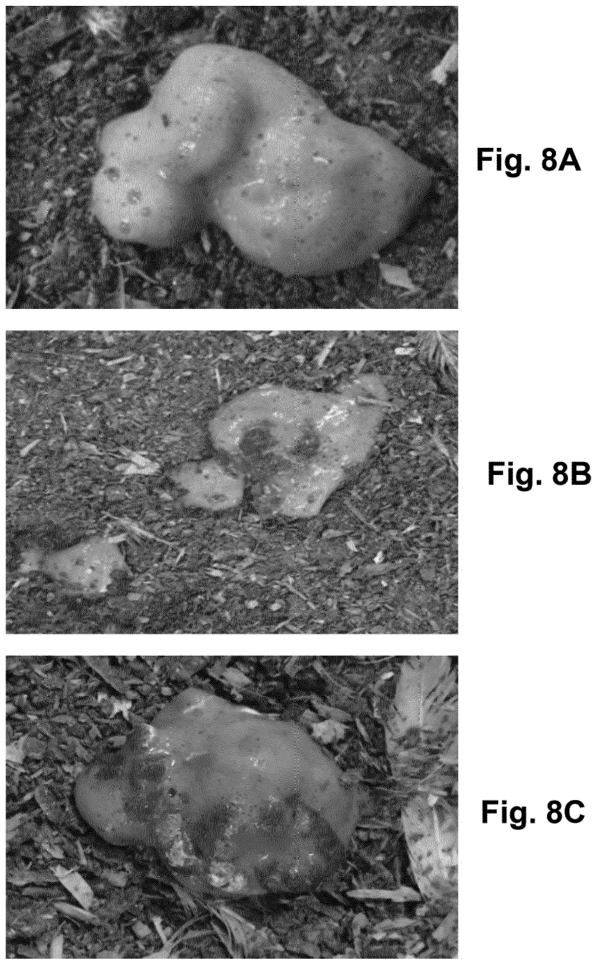

Figur 8 zeigt drei Fotos von Kot von ausgewachsenen Puten, welche an einer akuten Clostridieninfektion leiden. Auffällig ist die dünnflüssige Konsistenz mit bläschenförmigen Einschlüssen, welche auf eine Durchfallerkrankung hinweisen. Der Kot ist gelb-orange verfärbt, aber nicht schwarz. Dies ist ein Hinweis darauf, dass der Durchfall eher wässrig als blutig ist. Bläschenförmige Strukturen können von der Analysesoftware beispielsweise durch Anwendung von Algorithmen zur Erkennung von Linien, Kreisen und sonstiger geometrischer Objekte erkannt werden.

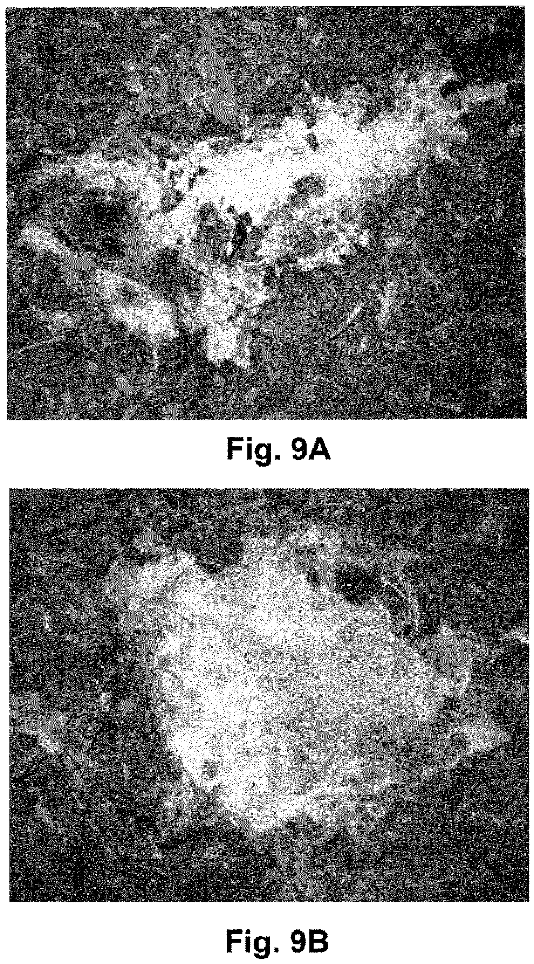

Figur 9 zeigt zwei Fotos von Kot von ausgewachsenen Puten, welche an einer akuten Colisepsis (Sepsis durch Escherichia coli) leiden. Die Konsistenz des Kots ist ebenfalls dünnflüssig-schleimig, die Farbe weiß-gelblich, teilweise mit grünlichen Farbeinschlag. Die gelbe Farbe ist ein Hinweis auf fehlende Gallenflüssigkeit oder eine Funktionsstörung der Bauchspeicheldrüse. Die grünliche Farbe ein Hinweis auf eine Infektion, hier mit Escherichia coli.

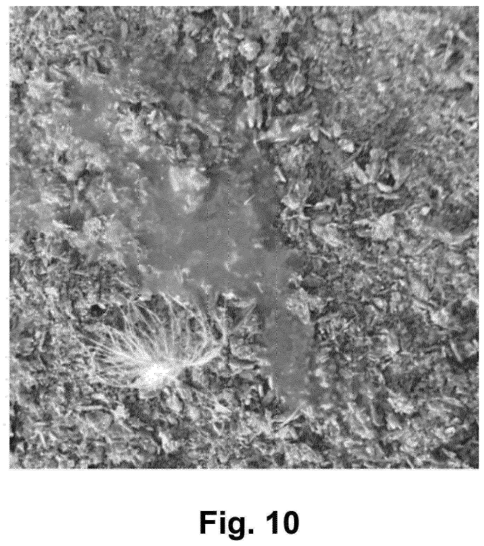

Figur 10 zeigt ein Foto von Kot einer ausgewachsenen Pute, die an einer akuten Kokzidiose leidet. Im Gegensatz zu dem in den Figuren 9A und 9B abgebildeten Kot ist der in Figur 10 abgebildete Kot gleichmäßig und deutlich grün verfärbt. Es gibt keine blasenförmigen Einschlüsse. Die grüne Farbe ist ein Hinweis auf eine sehr stark fortgeschrittene Infektion.

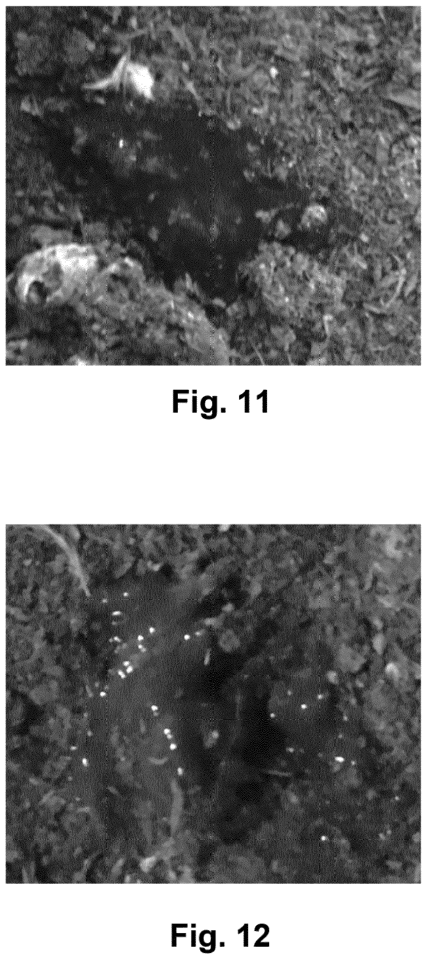

Figur 11 zeigt ein Foto von Kot eines Masthähnchens, welches an einer akuten Ko-Infektion von Clostridien und Kokzidien leidet. Die dunkle Farbe des Kots ist ein Hinweis auf einen deutlichen Blutverlust und oxidiertes Hämoglobin.

Figur 12 zeigt ein Foto von Kot eines Masthähnchens, welches an einer akuten Clostridieninfektion leidet. Ein Vergleich der Fotos in Figuren 12 und 8 zeigt, dass Farbe und Konsistenz des Kots neben der Erkrankung auch stark von der Tierart abhängen. Deshalb wird nach bevorzugten Ausführungsformen der Erfindung die Art und/oder Rasse der Tiere und vorzugsweise auch deren Alter neben den Bildern der Ausscheidungen in die Analysesoftware eingegeben um sicherzustellen, dass die Analyse diese Metadaten berücksichtigen kann.

### Bezugszeichenliste

- 100: Computersystem
- 102: Bilder von Ausscheidungen von ein oder mehreren Tieren
- 104: Speichermedium
- 106: Prozessor
- 108: Analysesoftware
- 110: Sensor-Messwerte
- 112: Display
- 114: Netzwerk-Schnittstelle
- 116: Nutzer
- 130: Tierstall
- 132: Tier
- 134: Sensor
- 136: Netzwerk
- 138: Tierstall-Kontrolleur
- 140: Bilderfassungseinheit (zum Beispiel Kamera)
- 142: Smartphone
- 200: Computersystem (Smartphone)
- 202: Speichermedium
- 204: Prozessor
- 206: Smartphone-Display
- 208: Netzwerk-Schnittstelle
- 210: Sensor-Schnittstelle
- 300: Client-Computersystem (Smartphone)
- 302: Server-Applikation
- 304: Client-Applikation
- 310: Server-Computersystem
- 400: verteiltes System mit mehreren Client-Computern
- 402: Nutzer/Operator des Server-Computers
- 404: Nutzer des Client-Computersystems 300.2
- 406: Nutzer des Client-Computersystems 300.3
- 502-508: Schritte
- 600: Roboter
- 602: Speichermedium
- 604: Prozessor
- 606: Display
- 608: Netzwerk-Schnittstelle
- 610: motorische Einheit
- 612: Sensor-Schnittstelle
- 700: verteiltes System mit Client-Computern und Schlachthof-Computer
- 710: Schlachthof-Computersystem
- 712: Speichermedium
- 714: Schlachthof
- 716: Bilderfassung Einheit des Schlachthofs (Kamera)
- 718: Prozessor
- 720: Display
- 722: Sensor-Schnittstelle
- 724: Netzwerk-Schnittstelle
- 726: Feedback-Applikation
- 728: Bilder des Magen-Darmtrakts geschlachteter Tiere
- 732: Arbeiter am Schlachthof
- 740-748: geschlachtete Tierkörper
- 750-758: Magen-Darmtrakt der jeweiligen Tierkörper

## Patentansprüche

1. Verfahren zur Haltung von Tieren (132), umfassend:
- Eingabe (502) von mindestens einem Bild (102) in eine Analysesoftware (108), wobei das mindestens eine Bild ein digitales Bild ist, welches Ausscheidungen von einem oder mehreren der Tiere (132) abbildet;
- Durchführung einer Analyse (504) des mindestens einen Bildes durch die Analysesoftware (108);
- Ausgabe (506) einer empfohlenen Aktion, welche geeignet ist, den aktuellen physiologischen Zustand der Tiere zu bewahren oder zu verbessern, durch die Analysesoftware, wobei die empfohlene Aktion von einem Ergebnis der Analyse des mindestens einen Bildes abhängt; und/oder
- Ausgabe (508) einer vorhergesagten Ausprägung eines Leistungsindikators eines oder mehrerer der Tiere durch die Analysesoftware, wobei der Leistungsindikator ein physiologischer Parameter, ein Krankheitssymptom oder eine Krankheit ist, wobei die vorhergesagte Ausprägung von einem Ergebnis der Analyse des mindestens einen Bildes abhängt.

2. Verfahren nach Anspruch 1, wobei es sich bei den Tieren deren Ausscheidungen das zumindest eine Bild abbildet, um Tiere handelt, denen vor der Aufnahme des zumindest einen Bildes ein Futtermittel oder Tränkwasser bereitgestellt oder verabreicht wurde, welches mit einer Indikatorsubstanz versetzt ist, wobei die Indikatorsubstanz eine Substanz ist, die in den Ausscheidungen der Tiere eine Färbung bewirkt, die vom physiologischen Zustand der Tiere, insbesondere dem Befall der Tiere mit Krankheitserregern, abhängt.

3. Verfahren nach einem der vorigen Ansprüche, ferner umfassend:
- Erfassung des mindestens einen Bildes (102) durch eine Bilderfassungseinheit (140), wobei die Bilderfassungseinheit vorzugsweise ausgewählt ist aus einer Gruppe umfassend:
• eine portable Kamera, insbesondere eine Smartphone-Kamera oder ein Fotoapparat; oder
• eine in einem Tierstall oder einem Gelände, auf dem die Tiere gehalten werden, fest installierte Kamera; oder
• eine auf einem mobilen Roboter (600) oder Förderband angebrachte Kamera, wobei der Roboter oder das Förderband dazu ausgebildet und positioniert sind, sich in einem Tierstall oder Gelände zu bewegen, auf welchem die Tiere gehalten werden.

4. Verfahren nach Anspruch 3, wobei die Erfassung des mindestens einen Bildes umfasst:
- Positionieren eines Farbreferenzobjekts in räumlicher Nähe zu den Ausscheidungen, deren Bild erfasst wird, wobei das Farbreferenzobjekt eine oder mehrere unterschiedliche Farben aufweist und wobei die Analysesoftware dazu ausgebildet ist, die Farben des Farbreferenzobjekts bei der Analyse des mindestens einen Bildes zur Normalisierung der Farben der in dem mindestens einen Bild abgebildeten Ausscheidungen zu verwenden;
wobei das mindestens eine Bild (102) neben den Ausscheidungen auch das Farbreferenzobjekt abbildet.

5. Verfahren nach Anspruch 3 oder 4, umfassend:
- Senden eines Kontrollkommandos an eine Beleuchtungseinheit, welches die Beleuchtungseinheit dazu veranlasst, die Ausscheidungen während der Aufnahme des zumindest einen Bildes der Ausscheidungen mit Licht eines oder mehrerer definierter Wellenlängenbereiche zu beleuchten,
wobei die Beleuchtungseinheit die Ausscheidungen vorzugsweise sequenziell mit dem Licht mehrerer definierter Wellenlängenbereiche beleucht und wobei während der Beleuchtung mit jedem der definierten Wellenlängenbereiche ein oder mehrere wellenlängenbereich-spezifische digitale Bilder der Ausscheidungen erfasst werden und wobei die Analysesoftware dazu ausgebildet ist, die Analyse in einer wellenlängenbereich-spezifischen Weise selektiv für die ein oder mehreren Bilder, die mit Licht des jeweiligen Wellenlängenbereichs aufgenommen wurden, durchzuführen.

6. Verfahren nach einem der vorherigen Ansprüche,
- wobei die Aktion an einem Aktionszeitpunkt durchzuführen ist, wobei der Aktionszeitpunkt ein aktueller Zeitpunkt oder ein zukünftiger Zeitpunkt ausgehend vom Zeitpunkt der Analyse ist; und/oder
- wobei die vorhergesagte Ausprägung des Leistungsindikators für einen Ausprägungszeitpunkt vorhergesagt wird, wobei der Ausprägungszeitpunkt ein zukünftiger Zeitpunkt ausgehend vom Zeitpunkt der Analyse ist.

7. Verfahren nach einem der vorherigen Ansprüche, wobei die empfohlene Aktion eine oder mehrere Aktionen beinhaltet, die aus einer Gruppe von Aktionen ausgewählt sind umfassend:
- Bereitstellung eines bestimmten Tierfutters oder Tränkwassers;
- Verabreichung einer oder mehrerer medizinischer oder nicht-medizinischer Substanzen in physiologisch wirksamer Form an die Tiere, insbesondere Mineralstoffe, Vitamine, Medikamente;
- Beendigung einer laufenden Verabreichung einer oder mehrerer medizinischer oder nicht-medizinischer Substanzen in physiologisch wirksamer Form an die Tiere;
- Veränderung der physikalischen Parameter eines Tierstalls oder Geländes, in welchem die Tiere gehalten werden, insbesondere Luftfeuchtigkeit, Temperatur.

8. Verfahren nach einem der vorherigen Ansprüche,
- wobei die Ausgabe der vorhergesagten Ausprägung des Leistungsindikators und/oder die Ausgabe der empfohlenen Aktion an einen Nutzer über eine Nutzer-Schnittstelle der Analysesoftware erfolgt; und/oder
- wobei die Ausgabe der empfohlenen Aktion an eine elektronisches oder mechanisches System erfolgt, welches operativ an einen Tierstall oder ein Gelände, in welchem die Tiere gehalten werden, operativ gekoppelt ist, wobei das elektronische oder mechanische System dazu ausgebildet ist, in Antwort auf den Erhalt der ausgegebenen Aktion die Aktion durchzuführen.

9. Verfahren nach einem der vorigen Ansprüche, wobei es sich bei der Krankheit um Kokzidiose, Salmonellose, Kryptosporidiose, Erkrankungen durch Magen-Darm-Parasiten wie insbesondere Magenwürmer oder Darmwürmer oder einzellige Erreger, Coli Sepsis, Lawsoniose, Schweinedysenterie oder eine Clostridieninfektion handelt.

10. Verfahren nach einem der vorherigen Ansprüche, wobei es sich bei den Tieren um Geflügel, Rinder, Schafe, oder Schweine handelt.

11. Verfahren nach einem der vorherigen Ansprüche, wobei es sich bei der Analysesoftware um eine auf vordefinierten Regeln basierende Software handelt.

12. Verfahren nach einem der vorherigen Ansprüche 1-9, wobei es sich bei der Analysesoftware um eine trainierte Machine-Learning-Software handelt.

13. Verfahren nach Anspruch 12, ferner umfassend:
- Bereitstellung eines Trainingsdatensatzes, der eine Vielzahl von TrainingsBildern von Ausscheidungen von Tieren der gleichen Tierart wie der Tiere, die gehalten werden sollen, beinhaltet, wobei die Trainings-Bilder mit Metadaten annotiert sind, wobei die Metadaten Angaben zur Ausprägung zumindest einen Leistungsindikator des oder der Tiere beinhaltet, deren Ausscheidungen in den Trainingsbildern abgebildet sind, und wobei die Metadaten außerdem die Zusammensetzung des Futters oder Tränkwassers beinhalten, welches diesen Tieren zum Zeitpunkt der Aufnahme der Trainings-bilder verabreicht wurde;
- Erzeugung der Analysesoftware durch Training einer Machine-Learning-Software auf den Trainingsbildern.

14. Verfahren nach einem der vorigen Ansprüche, wobei das mindestens eine Bild eine Vielzahl von Bildern umfasst,
- wobei die Eingabe des mindestens einen Bildes und die Analyse des eingegebenen mindestens einen Bildes regelmäßig mit einer Frequenz von mindestens einmal pro Tag erfolgt, wobei die jeweils eingegebenen Bilder digitale Bilder, sind, die jeweils aktuell aufgenommen wurden und aktuelle Ausscheidungen von einem oder mehreren der Tiere darstellen;
- wobei die Analyse jeweils selektiv auf denjenigen der empfangenen Bilder erfolgt, die innerhalb eines vordefinierten Zeitraums vor dem Zeitpunkt der Analyse aufgenommen wurden.

15. Verfahren nach einem der vorigen Ansprüche, wobei die Analysesoftware Zugriff auf eine Datenbank mit Daten über Vorräte eines Halters der Tiere von verschiedenen Substanzen oder Substanzmischungen, insbesondere Futtermittelzusammensetzungen, Futtermittelzusatzstoffe, Tränkwasserzusatzstoffe, Vitamine, Mineralstoffe und veterinärmedizinische Präparate, umfasst, ferner umfassend:
- Prüfung, durch die Analysesoftware, ob die Vorräte nach der Entnahme der gemäß der empfohlenen Aktion den Vorräten entnommenen Menge und Art der Substanz oder Substanzmischung bezüglich dieser Substanz oder Substanzmischung erschöpft sind; und
- Automatisches Senden einer Bestellnachricht, durch die Analysesoftware, an ein elektronisches Bestellsystem eines Anbieters der entnommenen Substanz oder Substanzmischung über ein Netzwerk.

16. Verfahren nach einem der vorigen Ansprüche, ferner umfassend:
- Eingabe zumindest eines Messwertes in die Analysesoftware (108), wobei der zumindest eine Messwert ausgewählt ist aus einer Gruppe von Messwerten umfassend:
• Temperatur der von den Tieren abgegebenen Milch;
• elektrische Leitfähigkeit der von den Tieren abgegebenen Milch;
• Temperatur des Stalls; insbesondere Bodentemperatur des Stalls oder Lufttemperatur nahe dem Boden des Stalls;
• Ammoniakgehalt und Kohlendioxidgehalt der Luft im Stall;
• Feuchtegehalt der Luft im Stall;
• Menge des pro Tier oder pro Tierstall pro Zeiteinheit in der letzten gemessenen Zeiteinheit abgegebenen Futters;
• Menge des pro Tier oder pro Tierstall pro Zeiteinheit in der letzten gemessenen Zeiteinheit abgegebenen Tränkwassers;
- Durchführung einer Analyse des zumindest einen Messwerts durch die Analysesoftware (108);
wobei die empfohlene Aktion und/oder die vorhergesagte Ausprägung des Leistungsindikators von dem Ergebnis der Analyse des zumindest einen Bildes und von einem Ergebnis der Analyse des zumindest einen Messwerts abhängt.

17. Verfahren nach einem der vorigen Ansprüche, wobei die Analysesoftware implementiert ist als:
- eine Softwareapplikation, die auf einem mobilen Computersystem, insbesondere einem Smartphone, instanziiert ist, wobei die Analysesoftware dazu ausgebildet ist, das zumindest eine Bild der Ausscheidungen von einer Kamera des mobilen Computersystems zu empfangen, und, optional, Metadaten und/oder Messdaten zu empfangen, die Analyse des zumindest einen Bildes und die Ausgabe der empfohlenen Aktion und/oder der vorhergesagten Ausprägung des Leistungsindikators durchzuführen; oder
- eine verteilte Client-Server-Softwareapplikation, wobei die Client-Software auf einem mobilen Computersystem, insbesondere einem Smartphone, instanziiert ist und dazu ausgebildet ist, das zumindest eine Bild der Ausscheidungen von einer Kamera des mobilen Computersystems zu empfangen und an eine Server-Applikation, die auf einem Server-Computersystem instanziiert ist, zu senden, wobei die Server-Applikation dazu ausgebildet ist, das zumindest eine Bild von der Client-Applikation zu empfangen, die Analyse des zumindest einen Bildes zur Berechnung der empfohlenen Aktion und/oder der vorhergesagten Ausprägung des Leistungsindikators durchzuführen und die empfohlene Aktion und/oder die vorhergesagte Ausprägung an die Client-Applikation über das Netzwerk zu senden, und wobei die Client- Applikation dazu ausgebildet ist, die empfohlene Aktion und/oder die vorhergesagte Ausprägung an den Nutzer des mobilen Computersystems auszugeben.

18. Verfahren nach einem der vorigen Ansprüche, wobei die Analysesoftware als verteilte Client-Server-Softwareapplikation ausgebildet ist, wobei die Server-Applikation mit einer Vielzahl von Client-Applikationen über ein Netzwerk (136) verbunden ist, wobei optional auch ein oder mehrere Feedback-Applikationen, welche auf Computern von Schlachthöfen instituiert sind, mit der Server-Applikation über das Netzwerk verbunden sind, wobei jede der Client-Applikationen operativ mit einer Bilderfassungseinheit (140) gekoppelt und dazu ausgebildet ist, zumindest ein Bild von Ausscheidungen der Tiere, das die Bilderfassungseinheit aufgenommen hat, an die Server-Applikation zu senden,
wobei die Server-Applikation dazu ausgebildet ist, folgendes Verfahren durchzuführen:
• Empfang von mindestens einem digitalen Bild (102) von jeder der Client-Applikationen durch die Server-Applikation, wobei das mindestens eine empfangene Bild Ausscheidungen von einem oder mehreren der Tiere (132) abbildet;
• Empfang von mindestens einer gemessenen oder von einem Nutzer über eine GUI eingegebenen Ausprägung eines Leistungsindikators der Tiere, wobei es sich bei der GUI um eine GUI von einer oder mehrerer der Client-Applikationen und/oder eine GUI einer oder mehrerer Feedback-Applikation handelt, wobei es sich bei der Feedback-Applikation um eine Software-Applikation eines Schlachthofs handelt, wobei es sich bei der Ausprägung eines Leistungsindikators insbesondere um Bilder des Magen-Darmtrakts nach der Schlachtung der Tiere handelt;
• Trainieren eines Machine-Learning-Algorithmus zur automatischen Bereitstellung einer verbesserten Version der Server-Applikation, wobei das Trainieren eine Analyse der empfangenen Kombinationen aus digitalem Bild der Ausscheidungen und gemessenen Ausprägung des Leistungsindikators umfasst.

19. Verfahren nach einem der vorigen Ansprüche, wobei die Analysesoftware als verteilte Client-Server-Softwareapplikation ausgebildet ist, wobei die Server-Applikation mit einer Vielzahl von Client-Applikationen über ein Netzwerk (136) verbunden ist, wobei jede der Client-Applikationen operativ mit einer Bilderfassungseinheit (140) gekoppelt ist, wobei jede der Bilderfassungseinheiten sich innerhalb eines von einer Vielzahl verschiedener Tierställe befindet,
wobei die Server-Applikation dazu ausgebildet ist, für jeden der Tierställe folgendes Verfahren durchzuführen:
• Empfang einer Nachricht, die mindestens eine Substanz oder Substanzmischung spezifiziert, die den Tieren des Tierstalls gegenwärtig verabreicht wird;
• Empfang von mindestens einer gemessenen oder von einem Nutzer über eine GUI der Client-Applikation eingegebenen Ausprägung eines Leistungsindikators der Tiere des Tierstalls durch die Server-Applikation von der Client-Applikation, wobei die Ausprägung des Leistungsindikators sich auf einen Zeitpunkt in zeitlicher Nähe zum Zeitpunkt der Verabreichung der Substanz oder Substanzmischung bezieht; und
- Durchführung einer ersten Clusteranalyse der von jedem Tierstall empfangenen Kombinationen aus verabreichten Substanzen oder Substanzmischungen und den empfangenen Ausprägung des Leistungsindikators zur Berechnung von Clustern von Tierställen mit gleicher oder ähnlicher verabreichter Substanz oder Substanzmischung, wobei eine durchschnittliche Ausprägung des Leistungsindikators der Tiere jedes Clusters mit dem jeweiligen Cluster verknüpft gespeichert ist, durch die Server-Applikation; und/oder
- Durchführung einer zweiten Clusteranalyse der von jedem Tierstall empfangenen Kombinationen aus verabreichten Substanzen oder Substanzmischungen und den empfangenen Ausprägung des Leistungsindikators zur Berechnung von Clustern von Tierställen, deren Tiere eine gleiche oder ähnliche Ausprägung des Leistungsindikators aufweisen, wobei die Substanz oder Substanzmischung, welche in der Mehrzahl der Tierställe eines Clusters verabreicht wird, mit dem jeweiligen Cluster verknüpft gespeichert ist, durch die Server-Applikation; und
- Senden des Ergebnisses der ersten und/oder zweiten Clusteranalyse an mindestens eine der Client-Applikationen zur Ausgabe der Clusteranalyseergebnisse an einen Nutzer.

20. Ein System zur Haltung von Tieren, umfassend:
- ein verteiltes oder nicht-verteiltes Computersystem (100, 200, 300, 310), das an eine Tierstall-Bilderfassungseinheit gekoppelt ist, wobei das Computersystem eine Analysesoftware (108) und eine Datenbank (762) beinhaltet, wobei die Tierstall-Bilderfassungseinheit ausgebildet ist zum Erfassen zumindest eines Bildes (102), welches Ausscheidungen von einem oder mehreren der Tiere (132) abbildet, wobei die Analysesoftware dazu ausgebildet ist, ein Verfahren durchzuführen umfassend:
• Speichern des zumindest einen erfassten Bildes (102) in der Datenbank;
• Eingabe (502) des zumindest einen erfassten Bildes (102) in die Analysesoftware (108);
• Durchführung (504) einer Analyse des zumindest einen Bildes;
• Ausgabe (506) einer empfohlenen Aktion, welche geeignet ist, den aktuellen physiologischen Zustand der Tiere zu bewahren oder zu verbessern, durch die Analysesoftware, wobei die empfohlene Aktion von einem Ergebnis der Analyse des zumindest einen Bildes abhängt; und/oder
• Ausgabe (508) einer vorhergesagten Ausprägung eines Leistungsindikators eines oder mehrerer der Tiere durch die Analysesoftware, wobei der Leistungsindikator ein physiologischer Parameter, ein Krankheitssymptom oder eine Krankheit ist, wobei die vorhergesagte Ausprägung von einem Ergebnis der Analyse des zumindest einen Bildes abhängt;
- optional ein oder mehrere Sensoren (134), die in einem Tierstall (130) oder Gelände angebracht sind, in welchem die Tiere gehalten werden, wobei die Sensoren dazu ausgebildet sind, Messwerte zu erfassen und an die Analysesoftware zu übermitteln.

21. Das System von Anspruch 20, wobei das Computersystem ein verteiltes Computersystem bestehend aus einem Server-Computer (310) und mindestens einem Client-Computer (300) ist, wobei die Analysesoftware als verteilte Client-Server-Softwareapplikation mit einer Server-Applikation (302) auf dem Server-Computersystem und einer Client-Applikation (304) auf jedem der zumindest einen Client-Computer ausgebildet ist, ferner umfassend:
- mindestens ein Schlachthof-Computersystem (710), das von einem Schlachthof betrieben wird und das an eine Schlachthof-Bilderfassungseinheit (716) gekoppelt ist, wobei das Schlachthof-Computersystem eine Feedback-Applikation (726) beinhaltet, wobei die Schlachthof-Bilderfassungseinheit ausgebildet ist zum Erfassen von Bildern (728), welche den Magen-Darmtrakt von einem oder mehreren der Tiere (132) nach deren Schlachtung abbilden,
wobei die Feedback- Applikation ausgebildet ist zum:
• Übermitteln der erfassten Magen-Darmtrakt-Bilder an die Server-Applikation über ein Netzwerk (136) zur Speicherung der Magen-Darmtrakt-Bilder in der Datenbank;
wobei die Server-Applikation dazu ausgebildet ist, ein Verfahren durchzuführen umfassend:
• Empfang von mindestens einem digitalen Bild (102) von Ausscheidungen von einem oder mehreren der Tiere von der zumindest einen Client-Applikation, und Speicherung dieses zumindest einen Bildes in der Datenbank;
• Empfang von mindestens einer gemessenen oder von einem Nutzer über eine GUI der Client-Applikation oder der Feedback-Applikation eingegebenen Ausprägung eines Leistungsindikators der Tiere, deren Ausscheidungen in dem zumindest einen empfangenen Bild abgebildet sind, von der Client-Applikation oder von der Feedback-Applikation, wobei es sich bei der Ausprägung des Leistungsindikators insbesondere um Bilder des Magen-Darmtrakts nach der Schlachtung der Tiere handelt;
• Trainieren eines Machine-Learning-Algorithmus zur automatischen Bereitstellung einer verbesserten Version der Analysesoftware, wobei das Trainieren eine Analyse der empfangenen Kombinationen aus digitalem Bild der Ausscheidungen und gemessenen Ausprägung des Leistungsindikators umfasst

22. Ein mobiler Roboter (600), umfassend:
- Eine motorische Einheit, die ausgebildet ist zur autonomen oder semiautonomen Bewegung des Roboters innerhalb eines Tierstalles oder Geländes, in welchem die Tiere gehalten werden, wobei der Roboter eine Bilderfassungseinheit (140) beinhaltet, die dazu ausgebildet und so ausgerichtet ist, dass sie zumindest ein Bild der Ausscheidungen eines oder mehrerer der Tiere erfasst;
- Eine Netzwerkschnittstelle (208);
- Eine Bilderfassungseinheit (140);
- Ein oder mehrere Prozessoren; und
- ein Speichermedium (602), auf welchen eine Robotersoftware gespeichert ist,
wobei die Robotersoftware dazu ausgebildet ist, alleine oder in Interoperation mit einem über ein Netzwerk verbundenen Server ein Verfahren auszuführen umfassend:
• Erfassung zumindest einen Bildes (102) durch die Bilderfassungseinheit, wobei das zumindest eine Bild ein digitales Bild ist welches Ausscheidungen eines oder mehrerer der Tiere abbildet;
• Eingabe (502) des digitalen Bildes (102) in die Robotersoftware (108);
• Durchführung einer Analyse (504) des empfangenen Bildes durch die Robotersoftware (108);
• Ausgabe (506) einer empfohlenen Aktion, welche geeignet ist, den aktuellen physiologischen Zustand der Tiere zu bewahren oder zu verbessern, durch die Robotersoftware, wobei die empfohlene Aktion von einem Ergebnis der Analyse des zumindest einen Bildes abhängt; und/oder
• Ausgabe (508) einer vorhergesagten Ausprägung eines Leistungsindikators eines oder mehrerer der Tiere durch die Robotersoftware, wobei der Leistungsindikator ein physiologischer Parameter, ein Krankheitssymptom oder eine Krankheit ist, wobei die vorhergesagte Ausprägung von einem Ergebnis der Analyse des zumindest einen Bildes abhängt;
wobei die Ausgabe der empfohlenen Aktion und/oder der vorhergesagten Ausprägung an einen Nutzer (116, 138) über eine Anzeigevorrichtung des mobilen Roboters oder über ein mit dem Roboter über ein Netzwerk verbundenes Datenverarbeitungsgerät erfolgt.

23. Eine Kombination aus:
- einem Futtermittelzusatzstoff mit einer Indikatorsubstanz, wobei die Indikatorsubstanz eine Substanz ist, die in den Ausscheidungen der Tiere eine Färbung bewirkt, die von physiologischen Bedingungen im Metabolismus der Tiere abhängt; und
- einem System gemäß Anspruch 20, wobei die Analysesoftware dazu ausgebildet ist, anhand optischer Merkmale der Ausscheidungen von Tieren, welchen die Indikatorsubstanz vor der Aufnahme des zumindest einen Bildes mit dem Futter oder Trinkwasser aufgenommen haben, die Ausprägung des Leistungsindikators vorherzusagen und/oder die empfohlene Aktion zu berechnen.

## Claims

1. A method for keeping animals (132) comprising:
- input (502) of at least one image (102) into analysis software (108), wherein the at least one image is a digital image which depicts excretions from one or more of the animals (132);
- carrying out an analysis (504) of the at least one image by the analysis software (108);
- output (506) by the analysis software of a recommended action, which is suited for maintaining or improving the current physiological state of the animals, wherein the recommended action depends on a result of the analysis of the at least one image; and/or
- output (508) by the analysis software of a predicted manifestation of a performance indicator of one or more of the animals, wherein the performance indicator is a physiological parameter, a disease symptom, or a disease, wherein the predicted manifestation depends on a result of the analysis of the at least one image.

2. The method according to claim 1, wherein the animals, whose excretions the at least one image depicts, are animals, to which a feed or drinking water, which is admixed with an indicator substance, was provided or administered before the capturing of the at least one image, wherein the indicator substance is a substance which causes a coloration in the excretions of the animals depending on the physiological state of the animals, in particular, the infection of the animals with pathogens.

3. The method according to one of the preceding claims, further comprising:
- capturing the at least one image (102) by an image capture unit (140), wherein the image capture unit is preferably selected from a group comprising:
• a portable camera, in particular a smartphone camera or a photographic apparatus; or
• a camera, permanently installed in an animal stable or in an area where the animals are kept; or
• a camara mounted on a mobile robot (600) or conveyor belt, wherein the robot or the conveyor belt is designed and positioned to move in an animal stable or area where the animals are kept.

4. The method according to claim 3, wherein the capturing of the at least one image comprises:
- positioning a color reference object in a spatial vicinity of the excretions, whose image is captured, wherein the color reference object has one or more different colors, and wherein the analysis software is designed to use the colors of the color reference object during the analysis of the at least one image to normalize the colors of the excretions depicted in the at least one image;
wherein the at least one image (102) also depicts the color reference object in addition to the excretions.

5. The method according to claim 3 or 4, comprising:
- transmitting a control command to a lighting unit, which causes the lighting unit to illuminate the excretions during the capturing of the at least one image of the excretions with light from one or more defined wavelength ranges,
wherein the lighting unit illuminates the excretions preferably sequentially with the light from a plurality of defined wavelength ranges, and wherein one or more wavelenth-range specific digital images of the excretions are captured during the illumination with each of the defined wavelength ranges, and wherein the analysis software is designed to carry out the analysis selectively, in a wavelength-range specific way, for the one or more images which were captured with the light from the respective wavelength range.

6. The method according to one of the preceding claims,
- wherein the action is to be carried out at an action point in time, wherein the action point in time is a current point in time or a future point in time based on the point in time of the analysis; and/or
- wherein the predicted manifestation of the performance indicator is predicted for a manifestation point in time, wherein the manifestation point in time is a future point in time based on the point in time of the analysis.

7. The method according to one of the preceding claims, wherein the recommended action includes one or more actions which are selected from a group of actions comprising:
- providing a specific animal feed or drinking water;
- administration of one or more medical or non-medical substances to the animals in a physiologically effective form, in particular minerals, vitamins, medications;
- ending an ongoing administration of one or more medical or non-medical substances to the animals in a physiologically effective form;
- changing the physical parameters or a stable or area in which the animals are kept, in particular air humidity, temperature.

8. The method according to one of the preceding claims,
- wherein the output of the predicted manifestation of the performance indicator to a user and/or the output of the recommended action to a user is carried out via a user interface of the analysis software; and/or
- wherein the output of the recommended action is carried out to an electronic or mechanical system, which is operative[sic] operatively coupled to an animal stable or an area in which the animals are kept, wherein the electronic or mechanical system is designed to carry out the action upon receiving the recommended action.

9. The method according to one of the preceding claims, wherein the disease is coccidiosis, salmonellosis, cryptosporidiosis, diseases caused by gastrointestinal parasites, such as in particular, gastric worms or intestinal worms or unicellular pathogens, coli sepsis, lawsoniosis, swine dysentery, or a clostridial infection.

10. The method according to one of the preceding claims, wherein the animals are poultry, cattle, sheep, or pigs.

11. The method according to one of the preceding claims, wherein the analysis software is software based on predefined rules.

12. The method according to one of the preceding claims 1-9, wherein the analysis software is trained machine learning software.

13. The method according to claim 12, further comprising:
- providing a training data set, which contains a plurality of training images of excretions from animals of the same animal species as the animals that are to be kept, wherein the training images are annotated with metadata, wherein the metadata contain information about the manifestation of at least one performance indicator of the animal(s) whose excretions are depicted in the training images, and wherein the metadata additionally contain the composition of the feed or drinking water which was administered to these animals at the point in time of the capturing of the training images;
- generation of the analysis software by training a machine learning software using the training images.

14. The method according to one of the preceding claims, wherein the at least one image comprises a plurality of images,
- wherein the input of the at least one image and the analysis of the at least one input image is carried out regularly at a frequency of at least once per day, wherein the respectively input images are digital images which were respectively currently captured and depict current excretions from one or more animals;
- wherein the analysis is carried out selectively on those received images which were captured within a predefined time interval prior to the point in time of the analysis.

15. The method according to one of the preceding claims, wherein the analysis software includes access to a database with data about inventories, belonging to a keeper of the animals, of different substances or substance mixtures, in particular feed compositions, feed additives, drinking water additives, vitamins, minerals, and veterinary medical preparations, further comprising:
- checking by the analysis software, whether the inventories are exhausted, with respect to this substance or substance mixture, after the removal of the quantity and type of the substance or substance mixture that is removed according to the recommended action; and
- automatic transmission via a network of an order message by the analysis software to an electronic ordering system of a vendor of the removed substance or substance mixture.

16. The method according to one of the preceding claims, further comprising:
- input of at least one measured value into the analysis software (108), wherein the at least one measured value is selected from a group of measured values comprising:
• temperature of the milk secreted by the animals;
• electrical conductivity of the milk secreted by the animals;
• temperature of the stable; in particular ground temperature of the stable or air temperature close to the floor of the stable;
• ammonia content and carbon dioxide content of the air in the stable;
• moisture content of the air in the stable;
• quantity of the feed supplied per animal or per stable per time unit in the last measured time unit;
• quantity of the drinking water supplied per animal or per stable per time unit in the last measured time unit;
- carrying out an analysis of the at least one measured value by the analysis software (108); wherein the recommended action and/or the predicted manifestation of the performance indicator depends on the result of the analysis of the at least one image and on a result of the analysis of the at least one measured value.

17. The method according to one of the preceding claims, wherein the analysis software is implemented as:
- a software application, which is instantiated on a mobile computer system, in particular a smartphone, wherein the analysis software is designed to receive the at least one image of the excretions from a camera of the mobile computer system, and, optionally, to receive metadata and/or measurement data, to carry out the analysis of the at least one image, and the output of the recommended action and/or the predicted manifestation of the performance indicator; or
- a distributed client-server software application, wherein the client-software is instantiated on a mobile computer system, in particular a smartphone, and designed to receive the at least one image of the excretions from a camera of the mobile computer system, and to transmit the at least one image of the excretions to a server application, which is instantiated on a server computer system, wherein the server application is designed to receive the at least one image from the client application, to carry out the analysis of the at least one image for calculating the recommended action and/or the predicted manifestation of the performance indicator, and to transmit the recommended action and/or the predicted manifestation to the client application via the network, and wherein the client application is designed to output the recommended action and/or the predicted manifestation to the user of the mobile computer system.

18. The method according to one of the preceding claims, wherein the analysis software is designed as a distributed client-server software application, wherein the server application is connected via a network (136) to a plurality of client applications, wherein, optionally, one or more feedback applications, which are instituted on computers at slaughterhouses, are also connected via the network to the server application, wherein each of the client applications is operatively coupled to an image capture unit (140) and is designed to transmit at least one image of excretions from animals, which the image capture unit has captured, to the server application,
wherein the server application is designed to carry out the following method:
• receipt by the server application of at least one digital image (102) from each of the client applications, wherein the at least one received image depicts excretions from one or more of the animals (132);
• receipt of at least one manifestation of a performance indicator of the animals, measured or entered by a user via a GUI, wherein the GUI is a GUI of one or more of the client applications and/or a GUI of one or more of the feedback applications, wherein the feedback application is a software application at a slaughterhouse, wherein the manifestation of a performance indicator is, in particular, images of the gastrointestinal tract after the slaughter of the animals;
• training a machine learning algorithm to automatically provide an improved version of the server application, wherein the training comprises an analysis of the received combinations made up of a digital image of the excretions and measured manifestations of the performance indicator.

19. The method according to one of the preceding claims, wherein the analysis software is designed as a distributed client-server software application, wherein the server application is connected via a network (136) to a plurality of client applications, wherein each of the client applications is operatively coupled to an image capture unit (140), wherein each of the image capture units is located within one of a plurality of different animal stables,
wherein the server application is designed to carry out the following method for each of the animal stables
• receipt of a message, which specifies at least one substance or substance mixture, which is presently administered to the animals of the animal stable;
• receipt by the server application from the client application of at least one manifestation of a performance indicator of the animals of the animal stable, measured or entered by a user via a GUI, wherein the manifestation of the performance indicator relates to a point in time in chronological proximity to the point in time of the administration of the substance or substance mixture; and
- carrying out a first cluster analysis of the combinations made up of the administered substance or substance mixtures and the manifestation of the performance indicator, received from each animal stable, to calculate clusters from animal stables where the substance or substance mixture administered is identical or similar, wherein an average manifestation of the performance indicator of the animals of each cluster is stored by the server application and linked to the respective cluster; and/or
- carrying out a second cluster analysis of the combinations made up of the administered substance or substance mixtures and the manifestation of the performance indicator, received from each animal stable, to calculate clusters from animal stables, whose animals have an identical or similar manifestation of the performance indicator, wherein the substance or substance mixture, which is administered in the majority of the animal stables of a cluster, is stored by the server application and linked to the respective cluster; and
- transmitting the result of the first and/or second cluster analysis to at least one of the client applications to output the cluster analysis results to a user.

20. A system for keeping animals, comprising:
- a distributed or non-distributed computer system (100, 200, 300, 310) which is coupled to an animal stable image capture unit, wherein the computer system contains analysis software (108) and a database (762), wherein the animal stable image capture unit is designed to capture at least one image (102), which depicts excretions from one or more of the animals (132), wherein the analysis software is designed to carry out a method comprising:
• storing the at least one captured image (102) in the database;
• input (502) of the at least one captured image (102) into the analysis software (108);
• carrying out (504) an analysis of the at least one image;
• output (506) by the analysis software of a recommended action, which is suited for maintaining or improving the current physiological state of the animals, wherein the recommended action depends on a result of the analysis of the at least one image; and/or
• output (508) by the analysis software of a predicted manifestation of a performance indicator of one or more of the animals, wherein the performance indicator is a physiological parameter, a disease symptom, or a disease, wherein the predicted manifestation depends on a result of the analysis of the at least one image;
- optionally, one or more sensors (134), which are mounted in an animal stable (130) or area in which the animals are kept, wherein the sensors are designed to record measured values and transmit them to the analysis software.

21. The system from claim 20, wherein the computer system is a distributed computer system consisting of a server computer (310) and at least one client computer (300), wherein the analysis software is designed as a distributed client-server software application with a server application (302) on the server computer system and a client application (304) on each of the at least one client computers, further comprising:
- at least one slaughterhouse computer system (710) which is operated by a slaughterhouse and is coupled to a slaughterhouse image capture unit (716), wherein the slaughterhouse computer system includes a feedback application (726), wherein the slaughterhouse image capture unit is designed to capture images (728) which depict the gastrointestinal tract of one or more of the animals (132) after slaughter, wherein the feedback application is designed to:
• transmit the captured gastrointestinal tract images to the server application via a network (136) for storing the gastrointestinal tract images in the database;
wherein the server application is designed to carry out a method comprising:
• receipt of at least one digital image (102) of excretions from one or more of the animals from the at least one client application, and to store this at least one image in the database;
• receipt from the client application or from the feedback application of at least one manifestation of a performance indicator, measured or entered by a user via a GUI of the client application or the feedback application, of the animals whose excretions are depicted in the at least one received image, wherein the manifestation of the performance indicator is, in particular, images of the gastrointestinal tract after the slaughter of the animals;
• training a machine learning algorithm to automatically provide an improved version of the analysis software, wherein the training comprises an analysis of the received combination made up of a digital image of the excretions and a measured manifestation of the performance indicator.

22. A mobile robot (600) comprising:
- a motor unit, which is designed for autonomous or semi-autonomous movement of the robot within an animal stable or area in which the animals are kept, wherein the robot contains an image capture unit (140) which is designed and equipped so that it captures at least one image of the excretions of one or more of the animals;
- a network interface (208);
- an image capture unit (140);
- one or more processors; and
- a storage medium (602) on which a robot software is stored,
wherein the robot software is designed to carry out, alone or in interoperation with a server connected via a network, a method comprising:
• capture of at least one image (102) by the image capture unit, wherein the at least one image is a digital image which depicts excretions of one or more of the animals;
• input (502) of the digital image (102) into the robot software (108);
• carrying out an analysis (504) of the received image by the robot software (108);
• output (506) by the robot software of a recommended action, which is suited for maintaining or improving the current physiological state of the animals, wherein the recommended action depends on a result of the analysis of the at least one image; and/or
• output (508) by the robot software of a predicted manifestation of a performance indicator of one or more of the animals, wherein the performance indicator is a physiological parameter, a disease symptom, or a disease, wherein the predicted manifestation depends on a result of the analysis of the at least one image; wherein the output to a user (116, 138) of the recommended action and/or the predicted manifestation is carried out via a display device of the mobile robot or via a data processing device connected to the robot via a network.

23. A combination made up of:
- a feed additive with an indicator substance, wherein the indicator substance is a substance which causes a coloration in the excretions of the animals depending on physiological conditions in the metabolism of the animal; and
- a system according to claim 20, wherein the analysis software is designed to predict the manifestation of the performance indicator and/or to calculate the recommended action on the basis of optical features of the excretions of animals, which received the indicator substance with the food or drinking water before the capture of the at least one image.

## Revendications

1. Procédé d'élevage d'animaux (132), comprenant :
- la saisie (502) d'au moins une image (102) dans un logiciel d'analyse (108), où l'au moins une image est une image numérique, laquelle représente des déjections d'un ou de plusieurs animaux (132) ;
- l'exécution d'une analyse (504) de l'au moins une image par le logiciel d'analyse (108) ;
- la production (506) d'une action conseillée, laquelle est appropriée pour conserver ou améliorer l'état physiologique actuel des animaux, par le logiciel d'analyse, où l'action conseillée dépend d'un résultat de l'analyse de l'au moins une image ; et/ou
- la production (508) d'une manifestation présagée d'un indicateur de performance d'un ou de plusieurs parmi les animaux par le logiciel d'analyse, où l'indicateur de performance est un paramètre physiologique, un symptôme de maladie ou une maladie, où la manifestation présagée dépend d'un résultat de l'analyse de l'au moins une image.

2. Procédé selon la revendication 1, dans lequel, dans le cas des animaux dont les déjections sont représentées dans l'au moins une image, il s'agit d'animaux auxquels on a fourni ou administré avant la saisie de l'au moins une image une alimentation animale ou de l'eau de boisson, laquelle a été décomposée en une substance indicatrice, où la substance indicatrice est une substance qui provoque une coloration dans les déjections des animaux qui dépend de l'état physiologique des animaux, notamment de l'infestation des animaux avec des agents pathogènes.

3. Procédé selon l'une des revendications précédentes, comprenant en outre :
- la saisie de l'au moins une image (102) par une unité de prise d'image (140), où l'unité de prise d'image est choisie de préférence dans un groupe comprenant :
• une caméra portable, notamment une caméra de Smartphone ou un appareil photographique ; ou
• une caméra installée de manière fixe dans une étable ou un terrain dans lequel les animaux sont élevés ; ou
• une caméra fixée sur un robot (600) mobile ou une bande transporteuse, où le robot ou la bande transporteuse sont conçus et positionnés pour se déplacer dans l'étable ou dans le terrain sur lequel les animaux sont élevés.

4. Procédé selon la revendication 3, dans lequel la saisie de l'au moins une image comprend :
- le positionnement d'un objet de référence coloré à proximité spatiale des déjections, dont l'image est capturée, où l'objet de référence coloré présente une ou plusieurs couleurs différentes et où le logiciel d'analyse est conçu pour utiliser les couleurs de l'objet de référence coloré lors de l'analyse de l'au moins une image pour la normalisation des couleurs des déjections représentées dans l'au moins une image ;
dans lequel l'au moins une image (102) représente également l'objet de référence coloré à côté des déjections.

5. Procédé selon la revendication 3 ou la revendication 4, comprenant :
- l'envoi d'un ordre de contrôle à une unité d'éclairage, laquelle fait en sorte que l'unité d'éclairage éclaire les déjections pendant la prise de l'au moins une image des déjections avec de la lumière d'une ou de plusieurs plages définies de longueurs d'ondes,
dans lequel l'unité d'éclairage éclaire les déjections de préférence de manière séquentielle avec la lumière à plusieurs plages de longueurs d'onde définies et dans lequel, pendant l'éclairage avec chacune des plages de longueurs d'ondes définies, une ou plusieurs images numériques spécifiques au domaine de longueur d'onde des déjections sont saisies et dans lequel le logiciel d'analyse est conçu pour effectuer l'analyse d'une manière spécifique à une plage de longueurs d'onde de manière sélective pour l'image ou les images qui ont été prises avec la lumière de la plage de longueurs d'ondes respective.

6. Procédé selon l'une des revendications précédentes,
- dans lequel l'action est à exécuter à un instant d'action, où l'instant d'action est un instant actuel ou un instant dans le futur à partir de l'instant de l'analyse ; et/ou
- dans lequel la manifestation présagée de l'indicateur de performance est prédite pour un instant de manifestation, où l'instant de manifestation est un instant dans le futur à partir de l'instant de l'analyse.

7. Procédé selon l'une des revendications précédentes, dans lequel l'action conseillée contient une ou plusieurs actions qui sont choisies dans un groupe d'actions comprenant :
- la fourniture d'une alimentation animale ou d'eau de boisson déterminée ;
- l'administration d'une ou de plusieurs substances médicinales ou non médicinales sous forme active physiologiquement aux animaux, notamment, des produits minéraux, des vitamines, des médicaments ;
- l'arrêt d'une administration en cours d'une ou de plusieurs substances médicinales ou non médicinales sous forme active de manière physiologique aux animaux ;
- la modification des paramètres physiologiques d'une étable ou d'un terrain, dans lequel les animaux sont élevés, notamment de l'humidité de l'air, de la température.

8. Procédé selon l'une des revendications précédentes,
- dans lequel la production de la manifestation présagée de l'indicateur de performance et/ou la production de l'action conseillée à un utilisateur a lieu par le biais d'une interface d'utilisateur du logiciel d'analyse ; et/ou
- dans lequel la production de l'action conseillée a lieu au niveau d'un système électronique ou mécanique, lequel est couplé opérationnellement à une étable ou à un terrain dans lequel les animaux sont élevés, où le système électronique ou mécanique est conçu pour exécuter l'action en réponse à la réception de l'action produite.

9. Procédé selon l'une des revendications précédentes, dans lequel, dans le cas de la maladie, il s'agit d'une coccidiose, d'une salmonellose, d'une cryptosporidiose, de maladies dues à des parasites stomacaux et viscéraux comme les vers stomacaux ou les vers intestinaux ou un agent pathogène monocellulaire, le coli sepsis, la lawsioniose, la dysenterie porcine ou une infection de clostridium.

10. Procédé selon l'une des revendications précédentes, dans lequel, dans le cas des animaux, il s'agit de volailles, de bovins, d'ovins ou de porcs.

11. Procédé selon l'une des revendications précédentes, dans lequel, dans le cas du logiciel d'analyse, il s'agit d'un logiciel se basant sur des règles prédéfinies.

12. Procédé selon l'une des revendications précédentes 1 à 9, dans lequel, dans le logiciel d'analyse, il s'agit d'un logiciel d'apprentissage automatique entrainé.

13. Procédé selon la revendication 12, comprenant en outre :
- la fourniture d'un ensemble de données d'entraînement qui contient un grand nombre d'images d'entraînement de déjections d'animaux de la même espèce que les animaux qui doivent être élevés, où les images d'entraînement sont annotées avec des métadonnées, où les métadonnées contiennent des indications pour la manifestation d'au moins un indicateur de performance de l'animal ou des animaux dont les déjections sont représentées dans les images d'entraînement, et où les métadonnées contiennent en outre la composition de l'alimentation animale ou de l'eau de boisson, lesquelles ont été administrées à ces animaux au moment de la prise des images d'entraînement ;
- la création du logiciel d'analyse par l'entraînement d'un logiciel d'apprentissage automatique sur les images d'entraînement.

14. Procédé selon l'une des revendications précédentes, dans lequel l'au moins une image comprend une multiplicité d'images,
- dans lequel la saisie de l'au moins une image et l'analyse de l'au moins une image saisie a lieu de manière régulière avec une fréquence d'au moins une fois par jour, où les images respectivement saisies sont des images numériques qui ont été prises respectivement actuellement et représentent des déjections actuelles d'un ou de plusieurs parmi les animaux ;
- dans lequel l'analyse a lieu respectivement de manière sélective sur les images en question parmi les images reçues qui ont été prises en l'espace d'une durée prédéfinie avant l'instant de l'analyse.

15. Procédé selon l'une des revendications précédentes, dans lequel le logiciel d'analyse comprend un accès à une banque de données avec des données concernant des réserves d'un éleveur d'animaux en diverses substances ou mélanges de substances, notamment de compositions d'alimentation animale, d'additifs pour l'alimentation animale, d'additifs pour l'eau de boisson, de vitamines, de produits minéraux et de préparations vétérinaires, comprenant en outre :
- la vérification, par le logiciel d'analyse, si les réserves concernant les substances ou mélanges de substances des réserves et le type de substance ou de mélanges de substances sont épuisées après le prélèvement de la quantité prélevée selon l'action conseillée ; et
- l'envoi automatique d'un message de commande, par le logiciel d'analyse, à un système de commande électronique d'un fournisseur de la substance ou du mélange de substances par le biais d'un réseau.

16. Procédé selon l'une des revendications précédentes, comprenant en outre :
- la saisie d'au moins une valeur de mesure dans le logiciel d'analyse (108), où l'au moins une valeur de mesure est choisie dans un groupe de valeurs de mesures comprenant :
• la température du lait délivré par les animaux ;
• la résistivité électrique du lait délivré par les animaux ;
• la température de l'étable ; notamment la température du sol de l'étable ou la température de l'air près du sol de l'étable ;
• la teneur en ammoniac et la teneur en dioxyde de carbone dans l'air dans l'étable ;
• le taux d'humidité de l'air dans l'étable ;
• la quantité d'alimentation animale délivrée par animal ou par étable par unité de temps dans la dernière unité de temps mesurée ;
• la quantité d'eau de boisson délivrée par animal ou par étable par unité de temps dans la dernière unité de temps mesurée ;
- l'exécution d'une analyse de l'au moins une valeur de mesure par le logiciel d'analyse (108) ;
où l'action conseillée et/ou la manifestation présagée de l'indicateur de performance dépendent du résultat de l'analyse de l'au moins une image et d'un résultat de l'analyse de l'au moins une valeur de mesure.

17. Procédé selon l'une des revendications précédentes, dans lequel le logiciel d'analyse est mis en oeuvre en tant :
- qu'application de logiciel qui est instanciée sur un système informatique mobile, notamment un Smartphone, où le logiciel d'analyse est conçu pour réceptionner l'au moins une image des déjections par une caméra du système informatique mobile, et, éventuellement, pour réceptionner des métadonnées et/ou des données de mesure, pour exécuter l'analyse de l'au moins une image et exécuter la production de l'action conseillée et/ou de la manifestation présagée de l'indicateur de performance ; ou
- en tant qu'application de logiciel partagé client-serveur, où le logiciel client est instancié sur un système informatique mobile, notamment un Smartphone, et est conçu pour réceptionner l'au moins une image des déjections à partir d'une caméra du système informatique mobile, et pour l'envoyer à une application serveur qui est conçue pour la réception de l'au moins une image à partir de l'application client, pour exécuter l'analyse de l'au moins une image pour le calcul de l'action conseillée et/ou pour exécuter la manifestation présagée de l'indicateur de performance et envoyer l'action conseillée, et/ou la manifestation présagée à l'application client par le biais du réseau, et où l'application client est conçue pour produire l'action conseillée et/ou la manifestation présagée à l'utilisateur du système informatique mobile.

18. Procédé selon l'une des revendications précédentes, dans lequel le logiciel d'analyse est conçu en tant qu'application de logiciel client-serveur partagée, où l'application serveur est reliée avec une multiplicité d'applications clients par le biais d'un réseau (136), où, éventuellement, également une ou plusieurs applications feedback, lesquelles sont instanciées sur des ordinateurs d'abattoirs, sont reliées avec l'application serveur par le biais du réseau, où chacune des applications clients est couplée opérationnellement avec une unité de saisie d'images (140) et est conçue pour envoyer au moins une image de déjections des animaux qui a été prise par l'unité de saisie d'images, à l'application serveur,
où l'application serveur est conçue pour exécuter le procédé suivant :
• la réception d'au moins une image (102) numérique de chacune des applications clients par l'application serveur, où l'au moins une image réceptionnée représente des déjections d'un ou de plusieurs parmi les animaux (132) ;
• la réception d'au moins une manifestation d'un indicateur de performance des animaux mesurée ou indiquée par un utilisateur par le biais d'une interface GUI, où, dans le cas de la GUI, il s'agit d'une GUI d'une ou de plusieurs des applications clients, et/ou d'une GUI d'une ou de plusieurs applications feedback, où, dans le cas de l'application feedback, il s'agit d'une application de logiciel d'un abattoir, où, dans le cas de la manifestation d'un indicateur de performance, il s'agit en particulier d'images d'un tractus gastro-intestinal après l'abattage des animaux ;
• l'entraînement d'un algorithme d'apprentissage automatique pour la mise en oeuvre d'une version améliorée de l'application serveur, où l'entraînement comprend une analyse des combinaisons reçues de l'image numérique des déjections et de la manifestation mesurée de l'indicateur de performance.

19. Procédé selon l'une des revendications précédentes, dans lequel le logiciel d'analyse est conçu en tant qu'application de logiciel client-serveur partagée, où l'application serveur est reliée avec une multiplicité d'applications clients par le biais d'un réseau (136), où chacune des applications clients est couplée opérationnellement avec une unité de saisie d'images (140), où chacune des unités de saisie d'images se trouve à l'intérieur d'une étable parmi une multiplicité d'étables différentes,
où l'application serveur est conçue pour exécuter le procédé suivant pour chacune des étables :
• la réception d'un message qui précise au moins une substance, ou un mélange de substances, qui est administré(e) actuellement aux animaux de l'étable ;
• la réception d'au moins une manifestation d'un indicateur de performance des animaux de l'étable mesurée ou indiquée par un utilisateur par le biais d'une interface GUI, par l'application serveur à partir de l'application client, où la manifestation de l'indicateur de performance se rapporte à un instant proche dans le temps de l'instant de l'administration de la substance ou du mélange de substances ; et
- l'exécution d'une première analyse de regroupements des combinaisons reçues de chaque étable à base des substances ou des mélanges de substances administrés et de la manifestation de l'indicateur de performance reçue pour le calcul des regroupements d'étables avec les substances ou mélanges de substances administrés identiques ou semblables, où une manifestation moyenne de l'indicateur de performance des animaux de chaque regroupement est stockée en coordination avec le regroupement respectif, par l'application serveur ; et/ou
- l'exécution d'une deuxième analyse de regroupements des combinaisons reçues de chaque étable à base des substances ou des mélanges de substances administrés et de la manifestation de l'indicateur de performance reçue pour le calcul des regroupements d'étables dont les animaux présentent une manifestation de l'indicateur de performance identique ou semblable, où la substance ou le mélange de substances, laquelle ou lequel est administré(e) dans la multiplicité des étables d'un regroupement est stocké(e) en coordination avec le regroupement respectif, par l'application serveur ; et
- l'envoi du résultat de la première et/ou de la deuxième analyse de regroupement à au moins une des applications clients pour la production des résultats d'analyse de regroupement à un utilisateur.

20. Système pour l'élevage d'animaux, comprenant :
- un système informatique (100, 200, 300, 310) partagé ou non partagé qui est couplé à une unité de saisie d'images d'une étable, où le système informatique contient un logiciel d'analyse (108) et une banque de données (762), où l'unité de saisie d'images de l'étable est conçue pour la prise d'au moins une image (102), laquelle représente des déjections d'un ou de plusieurs parmi les animaux (132), où le logiciel d'analyse est conçu pour exécuter un procédé comprenant :
• le stockage de l'au moins une image (102) détectée dans la banque de données ;
• la saisie (502) de l'au moins une image (102) prise dans le logiciel d'analyse (108) ;
• l'exécution (504) d'une analyse de l'au moins une image ;
• la production (506) d'une action conseillée, laquelle est appropriée pour conserver ou améliorer l'état physiologique actuel des animaux, par le logiciel d'analyse, où l'action conseillée dépend d'un résultat de l'analyse de l'au moins une image ; et/ou
• la production (508) d'une manifestation présagée d'un indicateur de performance d'un ou de plusieurs parmi les animaux par le logiciel d'analyse, où l'indicateur de performance est un paramètre physiologique, un symptôme de maladie ou une maladie, où la manifestation présagée dépend d'un résultat de l'analyse de l'au moins une image ;
- éventuellement, un ou plusieurs capteurs (134), qui sont disposés dans une étable (130) ou sur un terrain, dans laquelle ou dans lequel les animaux sont élevés, où les capteurs sont conçus pour détecter des valeurs de mesure et les transmettre au logiciel d'analyse.

21. Système selon la revendication 20, dans lequel le système informatique est un système informatique partagé constitué d'un ordinateur serveur (310) et d'au moins un ordinateur client (300), où le logiciel d'analyse est conçu sous forme d'application de logiciel serveur-client partagée avec une application serveur (302) sur l'ordinateur serveur et une application client (304) sur chacun des au moins un ordinateur client, comprenant en outre :
- au moins un système informatique d'abattoir (710) qui est mis en fonction par un abattoir et qui est couplé à une unité de saisie d'images d'abattoir (716), où le système informatique d'abattoir contient une application feedback (726), où l'unité de saisie d'images d'abattoir est conçue pour la prise d'images (728), lesquelles représentent le tractus gastro-intestinal d'un ou de plusieurs parmi les animaux (132) après leur abattage,
où l'application feedback est conçue pour :
• la transmission des images de tractus gastro-intestinal saisies à l'application serveur par le biais d'un réseau (136) pour l'enregistrement des images de tractus gastro-intestinal dans la banque de données ;
où l'application serveur est conçue pour exécuter un procédé comprenant :
• la réception d'au moins une image (102) numérique de déjections d'un ou de plusieurs parmi les animaux à partir de l'au moins une application client, et l'enregistrement de cette au moins une image dans la banque de données ;
• la réception d'au moins une manifestation d'un indicateur de performance des animaux mesurée ou indiquée par un utilisateur par le biais d'une interface GUI de l'application client ou de l'application feedback, animaux dont les déjections sont représentées dans l'au moins une image réceptionnée, à partir de l'application client ou de l'application feedback, où il s'agit, dans le cas de la manifestation de l'indicateur de performance notamment d'images du tractus gastro-intestinal après l'abattage des animaux ;
• l'entraînement d'un algorithme d'apprentissage automatique pour la mise en œuvre automatique d'une version améliorée du logiciel d'analyse, où l'entraînement comprend une analyse des combinaisons reçues de l'image numérique des déjections et de la manifestation mesurée de l'indicateur de performance.

22. Robot (600) mobile comprenant :
- une unité motorisée qui est conçue pour le déplacement autonome ou semi autonome du robot dans une étable ou sur un terrain, dans laquelle ou dans lequel les animaux sont élevés, où le robot contient une unité de saisie d'images (140) qui est conçue et mise en place de manière à ce qu'elle détecte au moins une image des déjections d'un ou de plusieurs parmi les animaux ;
- une interface de réseau (208) ;
- une unité de saisie d'images (140) ;
- un ou plusieurs processeurs ; et
- un support de stockage (602) sur lequel est stocké un logiciel de robot,
où le logiciel de robot est conçu pour exécuter, seul ou de manière inter opérationnelle avec un serveur relié par le biais d'un réseau, un procédé comprenant :
• la saisie d'au moins une image (102) par l'unité de saisie d'images, où l'au moins une image est une image numérique, laquelle représente des déjections d'un ou de plusieurs parmi les animaux ;
• l'entrée (502) de l'image (102) numérique dans le logiciel de robot (108) ;
• l'exécution d'une analyse (504) de l'image réceptionnée par le logiciel de robot (108) ;
• la production (506) d'une action conseillée, laquelle est appropriée pour conserver ou améliorer l'état physiologique actuel des animaux, par le logiciel de robot, où l'action conseillée dépend d'un résultat de l'analyse de l'au moins une image ; et/ou
• la production (508) d'une manifestation présagée d'un indicateur de performance d'un ou de plusieurs parmi les animaux par le logiciel de robot, où l'indicateur est un paramètre physiologique, un symptôme de maladie ou une maladie, où la manifestation présagée dépend d'un résultat de l'analyse de l'au moins une image ;
où la production de l'action conseillée et/ou de la manifestation présagée à un utilisateur (116, 138) a lieu par le biais d'un dispositif d'affichage du robot mobile ou par le biais d'un appareil de traitement de données relié au robot par l'intermédiaire d'un réseau.

23. Combinaison à base :
- d'un additif d'alimentation animale avec une substance indicatrice, où la substance indicatrice est une substance qui provoque une coloration dans les déjections des animaux, qui dépend de conditions physiologiques dans le métabolisme des animaux ; et
- d'un système selon la revendication 20, où le logiciel d'analyse est conçu, à l'aide de caractéristiques optiques des déjections d'animaux, lesquels se sont vus administrer la substance indicatrice avec l'alimentation animale ou l'eau de boisson avant la prise de l'au moins une image, pour prédire la manifestation de l'indicateur de performance et/ou pour calculer l'action conseillée.
